(19) Europäisches Patentamt
European Patent Office
Office européen des brevets

(11) **EP 1 488 646 B1**

(12) **EUROPEAN PATENT SPECIFICATION**

(45) Date of publication and mention
of the grant of the patent:
**03.05.2017 Bulletin 2017/18**

(21) Application number: **03719430.5**

(22) Date of filing: **19.03.2003**

(51) Int Cl.:
*G06F 17/30* (2006.01)     *H04W 4/02* (2009.01)
*H04L 29/08* (2006.01)     *H04W 8/26* (2009.01)
*H04W 40/00* (2009.01)     *H04L 29/06* (2006.01)
*H04W 64/00* (2009.01)

(86) International application number:
**PCT/US2003/008628**

(87) International publication number:
**WO 2003/081391 (02.10.2003 Gazette 2003/40)**

(54) **LOCATION BASED SERVICE PROVIDER**

DIENSTANBIETER AUF STANDORTBASIS

FOURNISSEUR DE SERVICES EN FONCTION DE LA POSITION

(84) Designated Contracting States:
**AT BE BG CH CY CZ DE DK EE ES FI FR GB GR HU IE IT LI LU MC NL PT RO SE SI SK TR**

(30) Priority: **19.03.2002 US 365820 P**
**07.05.2002 US 378805 P**
**17.09.2002 US 411435 P**

(43) Date of publication of application:
**22.12.2004 Bulletin 2004/52**

(73) Proprietor: **Mapinfo Corporation**
**Troy, NY 12180 (US)**

(72) Inventors:
• **MOON, George, C.**
**Aurora, ON L4G 6M4 (CA)**
• **MATTHEW, Tweedie**
**Glenmont, NY 12077 (US)**
• **DOVE, John**
**Ballston Lake, NY 12019 (US)**
• **DEWALD, Edward**
**Charlotte, NC 28177 (US)**
• **LI, Xiang**
**North York, ON M2M 4M1 (CA)**
• **PETRONIS, Scott**
**Glenville, NY 12302 (US)**
• **BERRILL, Arthur, R.**
**Goodwood, ON L0C 1A0 (CA)**
• **LEA, Tony**
**East York, ON M4G 1J2 (CA)**

(74) Representative: **Ehrner & Delmar Patentbyrå AB**
**Drottninggatan 33, plan 4**
**111 51 Stockholm (SE)**

(56) References cited:
**EP-A1- 1 320 270          WO-A1-00/04730**
**WO-A2-02/17567          WO-A2-02/17654**
**CA-A1- 2 416 253          US-A1- 2002 160 766**
**US-A1- 2003 036 379**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATIONS**

This application claims the benefit of United States Provisional Patent Application Nos. 60/365,820, 60/378,805, and 60/411,435 filed on March 19, 2002, May 7, 2002, and September 16, 2002, respectively.

**FIELD OF THE INVENTION**

The present invention pertains generally to the field of location-based information systems.

**BACKGROUND**

Advances in telecommunications technology have enabled faster and more accurate location of users carrying mobile devices. Examples of such technology are described in United States Patent Nos. 6,477,362 and 6,477,379, both issued on November 5, 2002. These patents respectively describe systems for directing emergency services to a user based on her or his location and for locating a mobile device with the aid of two base stations.

Global Positioning Systems (GPS) receivers are described in several publications and references, such as the United States Patent No. 5,528,248, issued on June 18, 1996. This patent discloses a personal Digital Location Assistant based on a GPS Smart Antenna and a computing device.

GPS utilizes signals transmitted by a number of in-view satellites to determine the location of a GPS antenna which is connected to a receiver. Each GPS satellite transmits two coded L-band carrier signals which enable some compensation for propagation delays through the ionosphere. Each GPS receiver contains an almanac of data describing the satellite orbits and uses ephemeris corrections transmitted by the satellites themselves. Satellite to antenna distances may be deduced from time code or carrier phase differences determined by comparing the received signals with locally generated receiver signals. These distances are then used to determine antenna position. Only those satellites which are sufficiently above the horizon can contribute to a position measurement, the accuracy of which depends on various factors including the geometrical arrangement of the satellites at the time when the distances are determined.

Distances measured from an antenna to four or more satellites enable the antenna position to be calculated with reference to the global ellipsoid WGS-84. Local northing, easting and elevation coordinates can then be determined by applying appropriate datum transformation and map projection. By using carrier phase differences in any one of several known techniques, the antenna location can be determined to an accuracy on the order of .+-.1 cm.

Locations may be specified by various means, both actual and representational, including geocodes, centroids, and street vectors/segments. These and other terms are used by various technologies to provide systems and methods for delivering spatially-dependent services.

A geocode is a specification of a position using a suitable coordinate system and at a granularity that is sufficient for a particular application. For example, a geocode specifying a latitude and a longitude specifies a position on the surface of the earth. A geocode may also specify a height above the surface of the earth. A geocode encompasses providing spatial information in a form other than specifying the longitude and the latitude. Other examples of geocodes include postal centroids that are associated with areas sharing a common zip code. A centroid is a geographic center of an entire area, region, boundary, etc. for which the specific geographic area covers. A familiar example is the association between a centroid and a postal code, such as the ZIP codes defined and used by the United States Postal Service.

Street vectors are address ranges assigned to segments of individual streets. Street vectors assist in displaying digitized computer-based street maps. Often, street vectors appear as left and right side address ranges, and may be also used for geocoding a particular address to a particular street segment.

Geocoding is described in United States Patent No. 6,101,496 issued on August 8, 2000, and assigned to the assignee of the present application. In the context of spatially meaningful databases, geocoding is the act, method or process of assigning x and y coordinates (usually but not limited to latitude and longitude) to records, lists and files containing location information (full addresses, partial addresses, zip codes, census FIPS codes, etc.) for cartographic or any other form of spatial analysis or reference. Geocoding encompasses assigning spatial parameters to data to visualize information and exploring relationships based on spatial distribution. Some examples include census data or survey data that identify the residences of individuals with a particular income bracket, ethnicity, political affiliations, employment, and the like.

Geocoding is often performed by running ungeocoded (referred to hereafter as "raw data") information such as a list of customers through software and/or data which performs table lookup, fuzzy logic and address matching against an entire "library" of all known or available addresses (referred to hereafter as "georeferenced library") with associated x,y location coordinates.

A georeferenced library may be compiled from a number of varied sources including US Census address information and US postal address information, along with Zip Code boundaries and other various sources of data containing geographic information and/or location geometry. If a raw data address cannot be matched exactly to a specific library street address (known as a "street level hit"), then an attempt may be made to match the raw data address to geographic hierarchy of point, line or region geography of ever decreasing precision until a predetermined tolerance for an acceptable match is met. The geographic hierarchy to which a raw data record is finally assigned is also known as the "geocoding precision." Geocoding precision tells how closely the location assigned by the geocoding software matches the true location of the raw data. Geocoding technology generally provides for two main types of precision: street level and postal ZIP centroid. Street level precision is the placement of geocoded records at the street address. Street level precision attempts to geocode all records to the actual street address. In all likelihood, some matches may end up at a less precise location such as a ZIP centroid (ZIP+4, ZIP+2, or ZIP code) or shape path (the shape of a street as defined by points that make up each segment of the street.

One form of spatial indexing for storing and accessing location sensitive information in databases is disclosed by United States Patent No. 6,363,392 issued on March 26, 2002. This patent uses quad keys to provide a flexible, web-sharable database with proximity searching capability. The process for generating quad keys begins with geocoding where a description of a geographic location is converted into a longitude and latitude, which may be represented as integers at some resolution. Then, a quad key is generated in binary form, with the bits interleaved (most significant bit (MSB) from x, followed by MSB from y, followed by next-MSB from x, next-MSB from y, etc.).

Various technologies for providing location information include triangulation using radio signals, global positioning systems ("GPS"), and other technologies described in United States Patent Nos. 5,528,248 and 6,477,379. United States Patent Application No. 10/159,195 filed on May 31,2002 discloses a method and system for obtaining geocodes corresponding to addresses and addresses corresponding to geocodes. This application claims the benefit of the disclosure and filing date of United States Provisional Patent Application No. 60/256,103 filed on May 31, 2001. These and other means for determining position, including those developed subsequent to this invention, may be used to provide location information.

WO00/04730, WO02/17654, WO02/17567, and CA2416253 disclose prior art methods for providing location based services for different kinds of communication networks.

In another aspect, it should be noted that the term "interface" is commonly used in describing software and devices. For clarity, as used herein the term "interface" differs from a "user interface" in that a user interface is a presentation made to a user offering various choices, information, and operable elements such as buttons, knobs, and the like. A user interface may include physical components as well as transient displayed information. An interface, in contrast, in the context of object oriented ("OO") languages represents methods that are supported either by the interface itself in some OO languages, or provided in the interface as abstract methods which are provided by classes implementing the interface. A familiar example of the latter kind of OO paradigms is JAVA, which allows platform independent coding of software.

## SUMMARY OF THE INVENTION

The invention is defined in independent claim 1.

A method and system are disclosed for providing extensible or stand-alone location enabled services. The disclosed method and system provide services that may also utilize the internet using an eXtensible Markup Language Application Interface (XML-API). These services enable a collection of applications to manage information specific to mobile locations, provide services, including real-time services, with complete or partial integration via a common service manager. Preferably, the XML-API forms a platform that ties together the key services commonly used in the development of these mobile location applications.

In the context of cellular networks and their integration into web-based communication, mobile location is integrated with other location sensitive data, such as maps or demographics of a particular region or the location of businesses and consumers to enable a richer service offering for customers of wireless carriers and service providers.

Examples of such services may include obtaining one or more routes between a starting point and a destination; providing a geocode corresponding to an address; providing an address corresponding to a geocode; providing maps as image files encompassing specified geocodes, locations, or addresses; obtaining a position for a mobile device; obtaining the identity of a location; obtaining one or more geographic features near a location; managing person profile data; providing a map corresponding to a location; providing a coordinate geometry service for carrying out geometric calculations and measurements; performing coordinate transformations; providing traffic related information; generating enterprise specific maps; and providing an enterprise profile.

Additional services may be added to the disclosed system and method. Moreover, although the illustrative embodiments disclose integration of the various services, they may be offered at various levels of granularity down to offering stand-alone services or any combination of services.

## DETAILED DESCRIPTION OF THE FIGURES

**FIGURE 1** is an illustration of an exemplary context for providing an integrated location-based service platform.

**FIGURE 2** is a schematic representation of an integrated location-based service platform.

**FIGURE 3** is an illustration of various interactions at a service manager in the course of providing services via an integrated location-based service platform.

**FIGURE 4** is an illustration of an integrated location-based service platform along with the various service provider modules, spatial servers accessed by the service provider modules, third party servers and data repositories used to respond to service requests.

**FIGURE 5** is an illustration of an integrated location-based service platform for providing location based services that integrate the London subway with vehicular traffic routes and pedestrian traffic routes.

**FIGURE 6** is an illustrative embodiment of the present invention that includes a communication system comprising a central server and a peer-to-peer location-based information system.

**FIGURE 7** is an illustration of the interactions between a mobile user and a peer-to-peer system for providing location based services.

**FIGURE 8** further illustrates interactions between a client and an integrated location-based service platform performing multiple functions

**FIGURE 9** illustrates storage of sale and authorization information in a location based system that allows secure access and public access with more limited privileges.

**FIGURE 10** is a flow chart indicating the actions available to a store administrator.

**FIGURE 11** is a flow chart indicating the actions available to a user who has been provided with a list of local-content servers.

**FIGURE 12** shows the Java panels corresponding to the various steps described in **FIGURE 11.**

**FIGURE 13** shows a user interface viewed by a user upon starting a mall and store browsing application on his mobile device.

**FIGURE 14** shows a user interface displaying a list of local-content servers serving the user's location.

**FIGURE 15** shows a user interface that allows the user to indicate whether the user wishes to enter a store name, or to select a store by specifying a product.

**FIGURE 16** shows a user interface that allows the user to indicate whether the user wishes to enter a product name, or to select a product by category.

**FIGURE 17** shows a user interface displaying categories of items for which a mall-server contains sale information.

**FIGURE 18** shows a user interface displaying a list of stores having sale items in a mall-server database in the category selected by the user.

**FIGURE 19** shows a user interface displaying sale items in a local-content server database for the specific store.

**FIGURE 20** shows a user interface displaying information about a sale item selected by the user.

**FIGURE 21** shows a user interface displaying a map showing the location of a store relative to the user.

FIGURE 22 shows a user interface displaying a map zoomed-in to show the store location in more detail.

FIGURE 23 illustrates an exemplary architecture for an embodiment of the location sensitive event service.

FIGURE 24 provides another illustration of an architecture providing a location sensitive event service.

FIGURE 25 summarizes an illustrative process for generating ordered lists of events corresponding to user profiles.

## DETAILED DESCRIPTION OF THE INVENTION

A method and system for providing one or more location-based services with the aid of a markup language based interface with one or more service managers and access to one or more databases is disclosed. The method and system are typically, but not as a requirement for practicing the invention, implemented via at least one server, possibly in the form of a servlet, and a database that in combination with specified location information, enables delivery of customized services, options, and offers to customers. The method and system extend the advances made in determination of location of mobile users to offer customized location-based services. In addition, these services also integrate, when desirable, demographic data to generate services suited to various demographic segments and markets. Such demographic data includes user preferences, geographical distribution of users, mobility patterns and the like. These and other applications, including stand alone and integrated implementations, are described by way of the following examples and exemplary embodiments, starting with a description of an integrated implementation that allows one or more location-based services to be offered to users.

## AN INTEGRATED LOCATION-BASED SERVICE PLATFORM

The method and system of the present invention leverage wired and/or wireless connectivity, including that over the Internet, to provide services of interest to consumers. A preferred embodiment of the present invention includes providing an integrated location-based service platform, an example of which is the miAware™ set of services provided by the MapInfo® Corporation of Troy, NY as part of its Mobile Location Services (MLS). miAware™ includes an XML based API that enables both implementation and efficient communication of various requests and responses as described at, milocate.mapinfo.com/miAware/, a copy of which, dated March 19,2003, is attached as **APPENDIX** to this application.
An integrated location-based service platform is also described in the United States Provisional Patent Application No. 60/365,820 filed on March 19, 2002.
Such an integrated location-based service platform, for instance, the miAware™, provided by the MapInfo® Corporation of Troy, NY, provides numerous services and facilities including providing a route to a target, finding a nearest specified type of target, geocoding, geodecoding, and determining a mobile position service for a person with a mobile device such as a GPS or cell phone and the like. These services are accessed via user interfaces and underlying XML APIs.

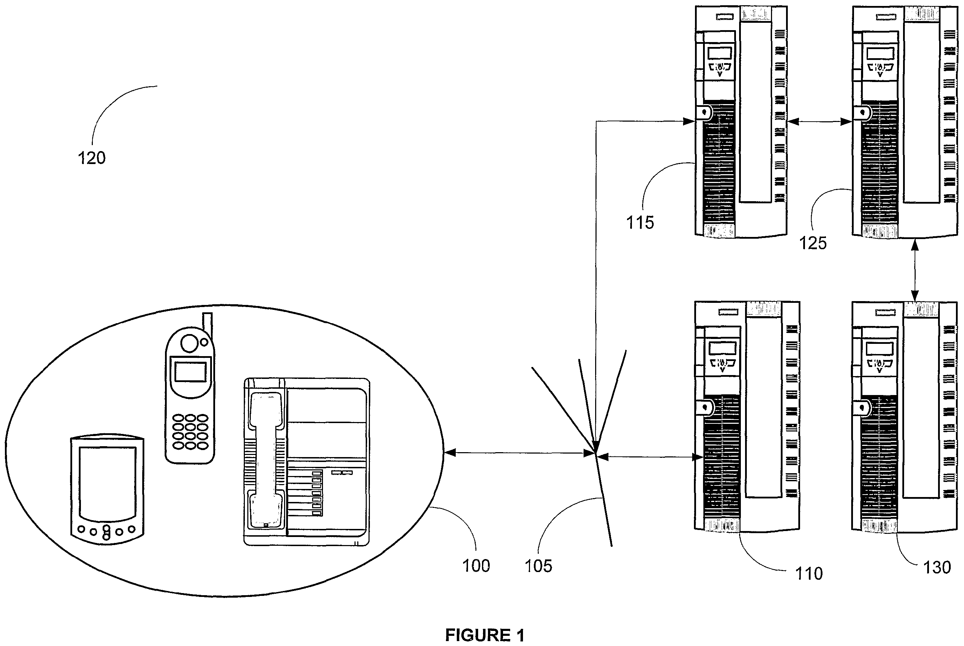

**FIGURE 1** illustrates a typical context for providing an integrated location-based service platform. Users **100,** including mobile users, access via antenna **105** gateway **110** and location server **115.** Location server **115** may further connect to the Internet **120** or to portal platform **125** to provide an integrated location-based service platform.

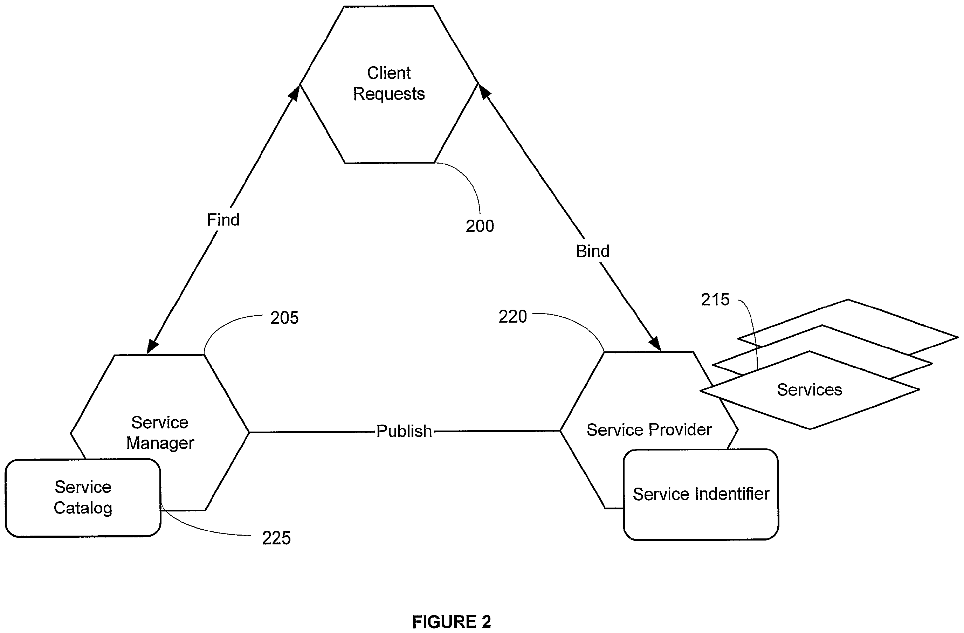

**FIGURE 2** illustrates a schematic representation of an integrated location-based service platform. Client requests **200** are directed to service manager **205**, which is in contact with a service catalogue **210** containing a description of various services available via service manager **205.** The service catalogue is preferably in the form of document-type definitions ("DTD") or a schema (e.g., specified under the OpenLS standard), or any other suitable format specifying the form of requests and responses for obtaining a particular service. This enables a client request to be formatted for proper parsing and processing. Typically requests are sent encoded in a markup language such as XML. Such use of a markup language allows a large number of interfaces to be provided to a variety of services at a common portal, service manager **205.** Preferably, communications by various services **215,** as part of service provider level **220**, with service manager **205** are also encoded in a markup language in accordance with a DTD specification that requires support for resource management and methods for starting and terminating a particular module with support for multi-threading. This enables a service to register itself with service manager **205** and publish itself to service catalogue **225**, where it may be discovered, along with the syntax for service requests directed to the service, by client requests directed to the service catalogue **225.** This architecture makes the integrated location-based service platform flexible since various different services may be added or removed from the integrated location-based service platform to provide customized services. With the ease of adding new services or terminating existing services, the integrated location-based service platform provides a common platform for accessing a variety of location-based services. It should be noted that many of the services accessed through service manger **205** may also be provided as stand alone services, possibly concurrently with providing access via service manager **205.**

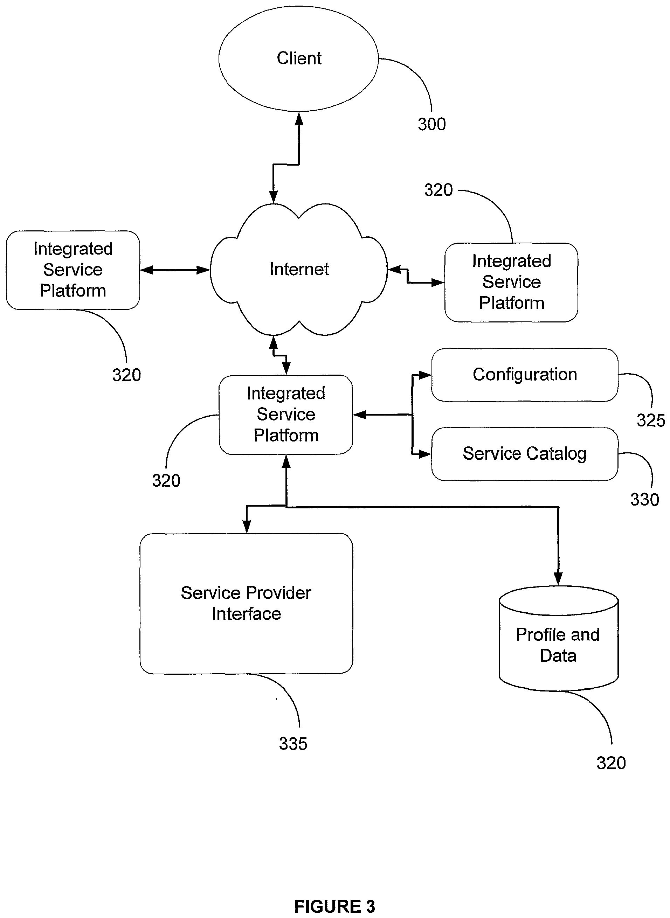

**FIGURE 3** provides an illustration of various interactions at a service manager in the course of providing services via an integrated location-based service platform. Service request **305** elicits service response **310** to client **300**. Advantageously, service request **305** and response **310** may be transmitted via a network, such as Internet **315**, to service manager **320**. Service manager **320** has integrated location-based service platform configuration information **325**, as well as information about the various available services in service catalogue **330**. In response to receiving service request **305**, service manager **320** generates service object **335**, which is directed to service provider interface **340** specified in service request **305**. Service response object **345** generated by the service provider via service provider interface **340** is sent to service manager **320**, which in turn, generates service response **310** directed to client **300**.

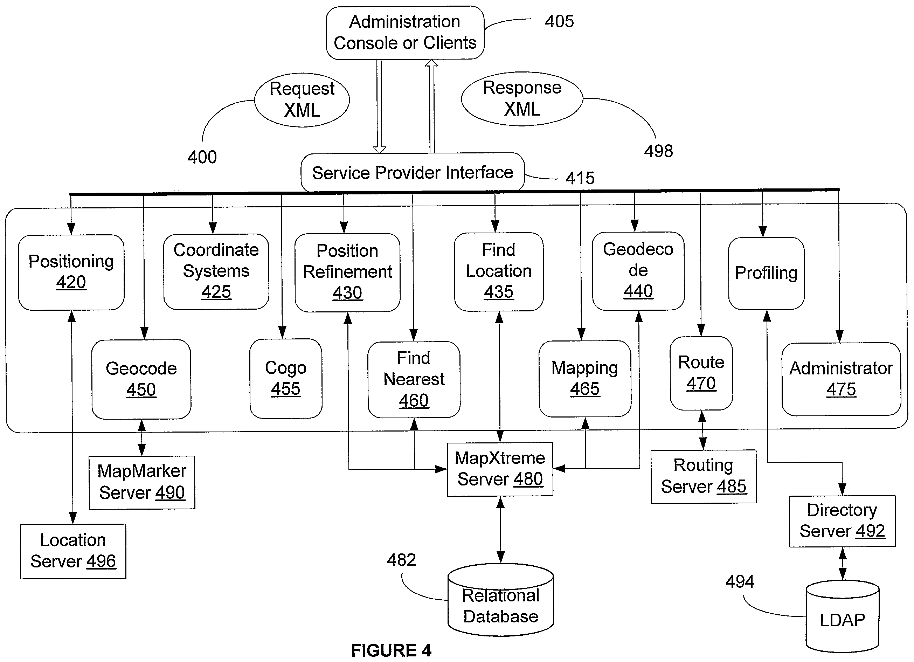

**FIGURE 4** illustrates an integrated location-based service platform along with various service provider modules, spatial servers accessed by the service provider modules, third party servers and data repositories used to respond to service requests. Request **400** from client **405** is received at integrated location-based service platform server **410** via service provider interface **415**. Service provider interface **415** directs request **400** to one of service modules providing services for positioning **420**, coordinate system transformation **425**, position refinement **430**, finding location **435**, geodecoding **440**, profiling **445**, geocoding **450**, Cogo **455** (coordinate geometry service), finding nearest geographical of interest **460**, mapping **465**, routing **470**, and administration **475**. As illustrated, although not as a requirement for practicing the invention, service modules position refinement **430**, finding location **435**, geodecoding **440**, finding nearest geographical of interest **460**, and mapping **465** communicate with spatial server **480**, which may be a MapXtreme® Server provided by MapInfo® Corporation, accessing in turn relational database **482**. Similarly, routing **470** accesses routing server **485** while geocoding **450** accesses spatial server **490**, which may be a MapMarker® Server provided by MapInfo® Corporation. In addition, modules for profiling **445** access third party directory server **492**, which, in turn, accesses LDAP **494**, while positioning **420** accesses third party location server **496**. The result sent by one or more of the various service modules is used to generate response **498** to request **400**. Thus, response **498** may integrate information from more than one service module.

In one aspect the present invention encompasses a system including: a routing module that receives and routes requests to an appropriate response module; a plurality of response modules registered with the routing module for responding to different types of requests; a plurality of spatial servers from which the response modules retrieve spatial information to be used in responding to the requests; and an interface for adding response modules to the system. The interface further includes methods for publication of information regarding the response module to the service manager, also referred to as the routing module, including information required for starting or terminating a particular response module, and methods to allocate or deallocate resources.

The system of the present invention further encompasses: a servlet within a platform independent implementation (JAVA). The servlet is in communication with a service catalog to determine or update available services/response modules and a user profile and geographic database. The servlet also provides support for one or more of HTTP/POST, XML, and SOAP, while being adapted to forward requests to a registered response module, which module, in turn, receives spatial information from a spatial server, and sends results to the routing manager for generation of the response to the request.

The system of the present invention also encompasses the functionality of a response sent to a different address than the address from which the request was received.

The system of the present invention further encompasses a plurality of spatial servers that may include one or more of: a routing server (Routing J Server™) for obtaining one or more routes between a starting point and a destination; a geocoding server (e.g., MapMarker J Server™) for providing geocodes corresponding to an address; a geodecoding server (e.g., MapMarker J Server™) for providing an address corresponding to a geocode; and a mapping server (MapXtreme server™) for providing maps as image files encompassing specified geocodes, locations, or addresses.

The system of the present invention also encompasses at least one service module comprising: an interface for receiving a request; an interface for generating a response to the request; and an interface for initializing and shutting down the service module.

Embodiments of the system of the present invention may also encompass services such as obtaining one or more records containing a geocode corresponding to an address; obtaining an address corresponding to a geocode; obtaining a route to a destination; obtaining a position for a mobile device; obtaining the identity of a location; obtaining one or more geographic features near a location; and a person profile data; providing a map corresponding to a location; a coordinate geometry service for carrying out geometric calculations and measurements; performing coordinate transformations; providing traffic related information; generating enterprise specific maps; and providing an enterprise profile.

Embodiments of the system of the present invention may also encompass Pass-Thru Service, which refers to a service provider creating a service request specification that contains a request of another service or server (typically encoded in XML as well). The Pass-Thru Service facility extracts a request content (or payload) from the request document in the original request envelope, passes this payload to another server (third-party server) that accepts the XML request, processes the payload, and wraps the response payload back into an envelope for returning the response document. Thus, the integrated location-based service platform, or its modules, may not only receive requests, it may also make requests and process the response thereto.

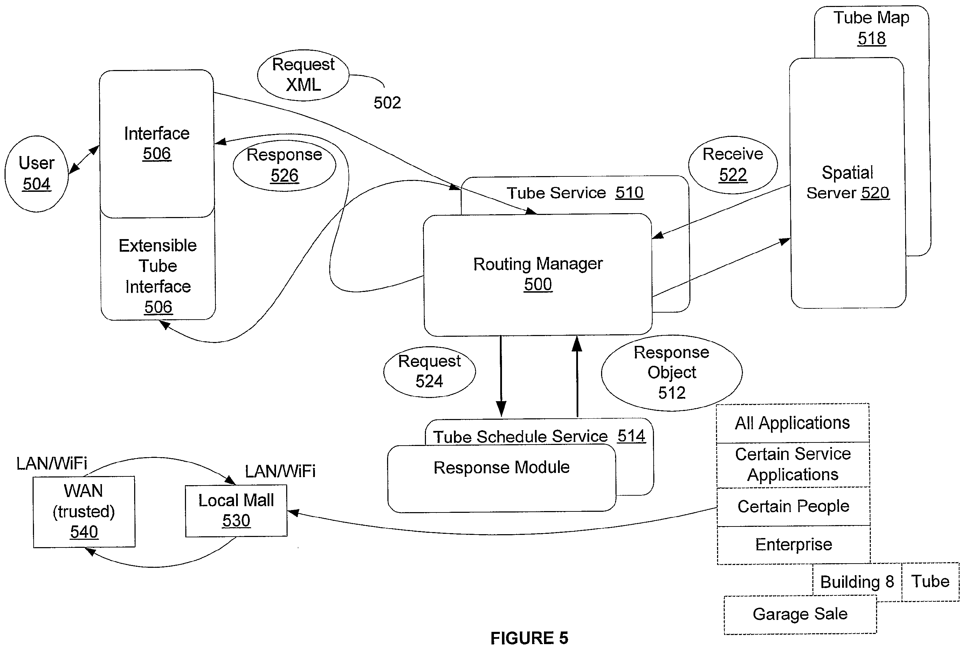

**FIGURE 5** illustrates an example of an integrated location-based service platform for providing routing information in London, U.K. The integrated location-based service platform preferably comprises service manager **500**, which receives requests **502** from user **504**. User **504** may request a route that could include walking, driving and subway legs for providing the lowest cost, shortest distance, and/or shortest time or other specifications. Alternatively, a default specification may be provided to the user. User **504** sends request **502** via interface **506**, which allows additional requests to be sent as well. Interface **506** is extensible and includes tube (i.e., subway) interface **508** for communicating with tube service **510** underlying service manager **500**. Extensibility denotes providing interfaces to allow anyone including third parties to extend the functionality of the system. Thus if a subway routing module for a city was available, it may be added without the need for express integration for incorporating the functionality directly into the routing modules. It is preferred that such modules are registered only following an authentication or a limited gate-keeping step to ensure that the module provider is trusted, as well as retain a measure of control over potential providers of service modules. To the user, the added functionality appears seamlessly integrated.

Service manager **500** sends a request object **512** to tube schedule service **514**, which is part of service providers **516**. Tube schedule service **514** requests information from tube map server **518**, which is one of the spatial servers **520**, and receives information **522** in response thereto. This information enables service provider modules **516**, such as tube schedule service **514** to generate response object **524** for service manager **500** in response to processing request **502**. Service manager **500**, in turn, generates response document **526** for sending to user **504** via interface **506**.

Notably, **FIGURE 5** also illustrates that service providers **516** (response modules) may provide various services that may have security components as well. For instance, a service provider providing security or personal profile information may provide permissions that enable all users to (1) access one or more of all applications; (2) access some services by way of some applications only; (3) allow specified user to access specified services; or (4) characterize the profile of an enterprise.

In addition, the wireless carrier may provide additional services through intuitive and automated interfaces that allow a user to advertise event such as a garage sale. This service is enhanced in value by the smooth integration of the functionality for providing directions from existing modules integrated via the with directions to the garage sale generated in a customized fashion for individual users, such as user **504**, based on use of the tube, walking and/or driving. User **504** may be provided information, for instance that regarding the garage sale, in response to detecting user **504** via LAN/WiFi **530**. Such detection triggers, preferably with the consent of the user, the obtaining of profile and preference information for user **504** over a secure Wide Area Network (WAN) **540**. In addition, user **504** may be presented with a choice of or information about malls and supplier stores **550** in the vicinity, along with directions to a supplier store from a location of user **504**. All of these activities are preferably carried out automatically, thus integrating user **504** with the surroundings.

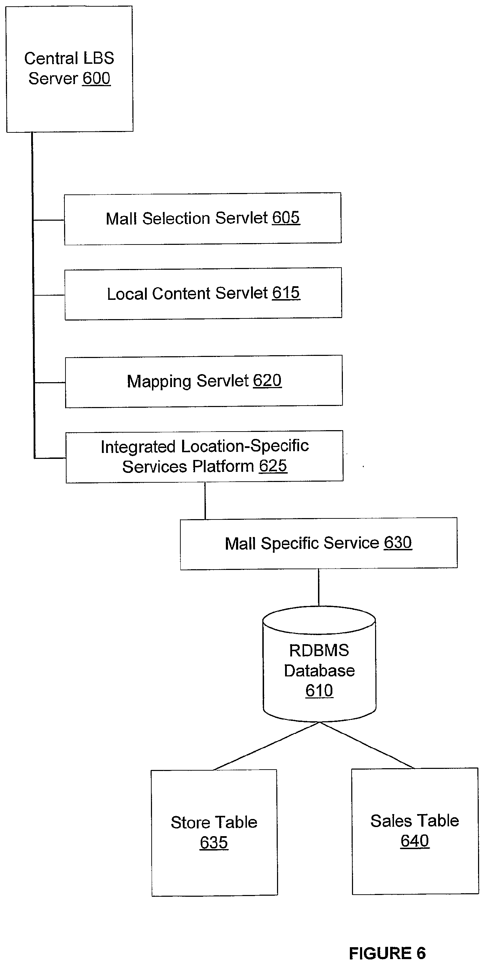

Thus, the choice of mall stores, as is also further illustrated in **FIGURE 6**, may be provided by a wireless carrier along with information about a garage sale in the vicinity. Notably, WiFi is not necessary for accessing information about a garage sale or a store in a shopping mall. Such information could be provided by way of local data going back through the carrier to the device being carried by the end user. The connection is still preferably point-to-point in the sense that a handoff request is given to the system(s) to hold the mall information even if the mall returns it back to the carrier for delivery rather than delivering it directly. Garage sale advertising functionality may interact with a carrier in a similar way.

The wireless provider (or some other agent) brokers an arrangement with a person wishing to hold a garage sale and the person wishing to have the garage sale (or any other similar activity) provides the details for the garage sale by interacting through an interface managed by the carrier or other agent without any need for direct intervention by the carrier or other agent. In some embodiments there may not even be a charge for such a service, but likely there will be a charge if that matters. The party advertising the garage sale provides an address for where the garage sale is being held, the carrier or other agent knows the location of the sale and can therefore provide the end user wishing to know about any sales in the vicinity of the end user. The actual details about the selected sales are then delivered preferably in response to a user request.

WiFi functionality is likely to be used if a user were looking for a sale rather than push sales related information to a user. Preferably, mobile users, for instance, moving in a vehicle or walking through a neighbourhood, are sensed via carrier detection and interaction. Thus, the provider of the 'sale' or any event in general may provide advertisement and notice of the event along with directions and other sophisticated functions without the need of any programmer by merely using a friendly user-interface to guide them through the setting up of such a service to make their local event detectable through the carrier or other agent.

In another aspect, the present invention comprises stand-alone services that may be provided by stand-alone service providers or by service providers that may be accessed both through an integrated location-based service platform and directly. An example is provided by a peer-to-peer location-based information system (LBS) in which locally relevant information may be maintained by local entities, such as local businesses. In another aspect, the present invention comprises a combination of location-based service and personalization, in which locally- and personally-relevant information is automatically provided to users based on their location and previously-stored personalization information. In a preferred embodiment, the peer-to-peer aspect and the personalized localization aspects are combined into a single system. In one such preferred embodiment, a central server maintains personalization information in the form of a customer profile, and maintains a list of servers providing locally relevant information, and automatically refers the user to a server providing information relevant to the user's location. The profile is used to refer the user only to information that matches the user's profile, and/or to provide the server providing locally relevant information with the ability to personalize the information for the user.

In a preferred embodiment, the present system and method comprise a site adapted to host one or more location-based services. A Service Provider Java API is preferably provided, which is a set of Java interfaces and classes for development of new services. New services can be deployed to the existing set of services hosted by a the site. Once deployed, services may be accessed from the outside world.

In order to deploy a new service, a service provider preferably implements three main interfaces: ServiceProvider, ServiceRequest, and ServiceResponse. ServiceProvider is the main interface to a provider. At initialisation, a ServiceProperties object is passed into the provider so configuration information specified in the Service Catalog can be utilized. Since initialisation is only a one time operation, global information necessary for performing service requests in a multi-threaded environment should be cached. At shutdown, the provider preferably de-allocates resources so to avoid memory leakage and/or holding up unnecessary resources (e.g. database connections). These tasks are performed by methods such as init(), shutdown(), getServiceRequest(), and perform(). The ServiceRequest contains parsed information of a request document. The provider creates the ServiceRequest object based on the input request document. This object parses the content of the document and provides information for rendering a request. The ServiceRequest is passed into the provider at a later stage for carrying out the service request. Implementation of this interface also provides capability to create request document conformaning to a suitable DTD, such as the miAwareServiceRequest DTD, which includes specifications for methods (e.g. setDistanceUnit() of the RouteRequest object) that are available for filling the content of this document including setters & getters toXMLdocument().

A ServiceResponse object contains results of a service request and is returned after a service is rendered. This object also provides methods for publishing its content to a XML document conforming to the miAwareServiceResponse DTD. In addition, this object is also able to parse its own response XML document and provides "get" methods (e.g. getTotalTime() of the RouteResponse() object) for retrieving the content.

If other third-party JAR files are required, they are also bundled together with the implementation class(es) of the ServiceProvider interface. The request and response DTDs, their sample XML documents, and Javadoc for the ServiceRequest and ServiceResponse implementation classes are also made available.

In another aspect, a client Java API is provided, which comprises a set of helper classes grouped by services, which assist Java application developers to publish service requests and retrieve information from a response document. Helper classes which assist development of client applications include constructing service requests as XML (e.g., String req = routeReq.toXMLDocument();), submitting requests to miAware™ Service Manager (e.g., InputStream is = miAwareConn.submit(req);), and parsing results from service response XML (e.g., RouteResponse res=New RouteResponse(is);). The client is super thin due to no dependency on core software. Typically, the client needs W3C compliant SAX/DOM parsers (which are provided by many entities such as Sun®, Oracle®, IBM®, etc).

Turning to the form of response and request specifications, some useful features are readily apparent. These messages are encoded in a markup language, and include a location of interest and a plurality of nested tags, preferably conforming to the XML specification, such that the message comprising an outer tag indicates a first service. The inner tag is associated with a plurality of attributes for processing the request so that at a user interface (supported in a thin client) one or more fields corresponding to the plurality of attributes are presented to receive data for providing the first service or the result of a service request. The location of interest may be provided by many different means, such as user input, a base station location signal, an address, a geocode, two or more base station signals detected by a mobile phone, and two or more GPS signals. As noted previously, a part of the request is forwarded to a service provider module by using the nested tag structure.

In another aspect, the tags correspond to requests for services such as routes to a specified destination, a list of local servers for obtaining local information, an ordered list of events, a list of products or services, a location, a map, a list of nearest geographical features, transformed coordinates, an event matching service, a traffic monitoring service, a peer-to-peer communication shopping service, a user profile service, and a location aware service. The attributes provide data for an address, authenticating information, personal preference information, event description, a route, geographically accessible locations, product description, traffic conditions, weather conditions, a map, and coordinates transformation.

In a preferred embodiment of the invention, a central LBS server in the peer-to-peer system maintains a database of local-content servers (peers) providing locally relevant information that is spatially indexed so as to permit the network addresses of the local-content servers to be resolved based on a provided indication of the location of a user. Such a database may include records indicating categories of content available from at least a portion of the servers.

When a user of a mobile device accesses the system of the present invention by running a client program for interacting with the LBS server, the LBS server is provided with an indication of the user's geographic location. The client system may comprise a cellular telephone comprising a location determination system such as GPS or any mobile positioning technology, and Java. Using the indication of the user's geographic location, the LBS server queries the database for local-content servers providing information or services relevant to the area of the user's geographic location. If the results include only one local-content server, the user is preferably re-directed to the local-content server. If the results include more than one local-content server, the user is preferably provided with a list of links to local-content servers.

The LBS server may not include information about the content or services provided by the local-content servers, thus avoiding the need for updates when the content or services provided by local-content servers are updated. In an alternative embodiment, the LBS server database includes records indicating the categories of content or services provided by at least a portion of the local-content servers.

The information and/or services provided by local-content servers are preferably maintained by entities, such as businesses, that also provide goods and/or services through facilities physically located near the geographic locations for which the local-content servers provide information and/or services. There is no requirement for the local-content servers to be physically located in or near geographic areas for which the local-content servers provide information and/or services. However, in one preferred embodiment, local-content servers are maintained locally by area organizations, such as shopping malls, and may be accessed by local-content providers, such as stores within the shopping mall. Preferably, wireless access is provided for maintenance by local-content providers.

Personalization services may be provided by the LBS server, or by the local-content servers, or both. In a preferred embodiment, personalization services are provided by local-content servers, which act upon information provided from a customer profile maintained by the LBS server operator. In this way, only personally relevant local content is provided to the user. Personalization services are preferably provided by MapInfo® Corporation's miAware™ profile module. Servers running MapInfo®'s miAware™ also preferably provide LBS services and local-content services.

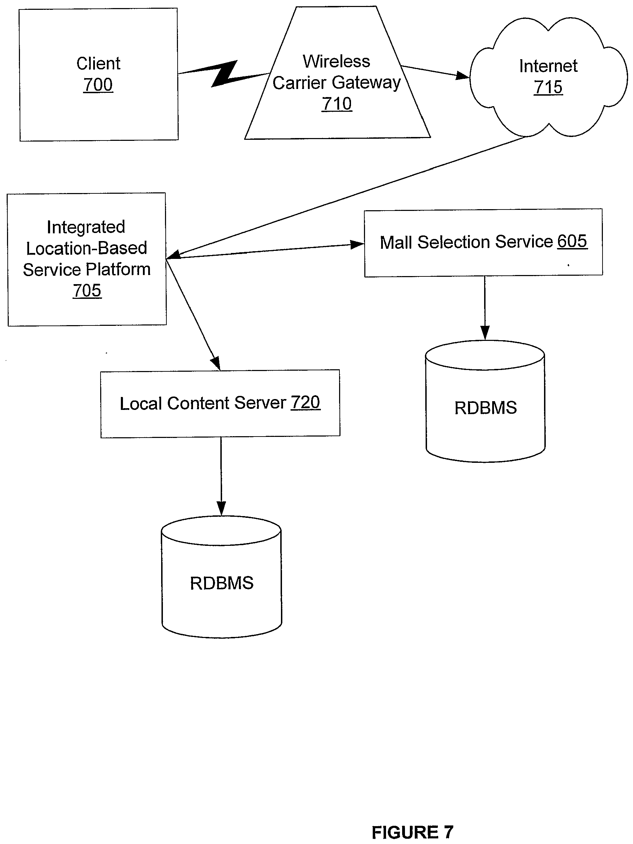

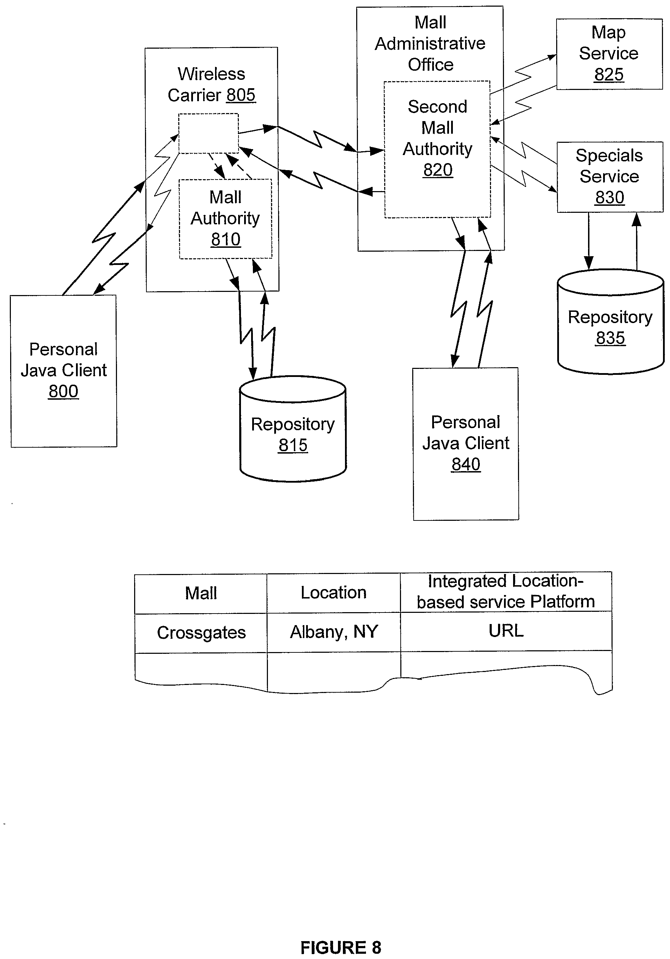

An illustrative embodiment of the present invention includes a communication system comprising a central LBS server, a plurality of local-content servers called, a central database (repository) attached to the central LBS server containing one or more URL of each local-content server, a plurality of local-content databases (repositories) attached to each local-content server, and a map server. Each local-content database preferably comprises product and sales information of stores in a shopping mall. Each central LBS server and local-content server may, for instance, be implemented as an Apache Tomcat web server with Java Servlets with the databases or repository being an Oracle database accessed by Servlets via JDBC. An example map server preferably comprises MapInfo® Corporation®'s MapXtreme-Java™ 3.1 servlet for retrieving maps for specific local malls, as shown in **FIGURE 6.** Collaborations of these system components are shown in **FIGURE 7** and **FIGURE 8.**

In phase one, illustrated in **FIGURE 7**, a mobile user **700** sends a request to the central LBS server, hosted by integrated location-based service platform **705** via a wireless carrier gateway **710** and Internet **715.** Notably, the central LBS server may be hosted independent of integrated location-based service platform **705** as well. The request seeks the address of local-content servers, possibly including local-content server **720** serving the user's geographical location. The request preferably further comprises an indication of the geographical location of the mobile user, such as the user's approximate latitude and longitude, although such an indication is not required for practicing the invention since it may be obtained automatically via a location determination service by triangulation or other means.

Upon receiving the request, central LBS server **600**, illustrated in **FIGURE 6**, preferably implemented as a collection of servlets, forwards the message to mall selection servlet **605** residing in server **600.** Mall selection servlet **605** includes a listing of various malls and may be connected to an integrated location based service platform. Mall selection servlet **605** then parses the message to obtain the user's geographical location and queries database **610**, with the aid of mall specific service **630**, for the name and URL of local-content servers, such as local-content server **720** of **FIGURE 7**, serving the user's location. Central LBS server **600** then responds to the request with a list of names and URLs of the local-content servers serving the user's location. As shown in **FIGURE** 6, central LBS server **600** may be a standalone server including store information and administrative operations capability via mall specific servlet **615**, mapping and directions from mapping servlet **620** and local service integration by integrated location-specific platform **625.** Alternatively, mall specific servlet **615** may serve as the front-end to an integrated location specific services platform. **FIGURE 6** also shows store table **635** and sales table **640** for providing various services, and which tables are preferably stored in RDBMS **610.**

In phase two, the mobile user establishes contact with specific local-content server **720**, by sending a request with privileges of either a mall administrator or a simple end-user. If only one local-content server was found by central LBS server **600**, the mobile user client may be redirected to local-content server **720** without the user's intervention. Otherwise the user is presented with a display comprising a list of local-content servers servicing the user's location. The list may be filtered based on personalization information stored on the user's client **700** or provided by central LBS server **600.**

**FIGURE 8** further illustrates interactions between clients **800** and **840** and an integrated location-based service platform performing multiple functions. Client **800** sends a request to a central operations center, e.g., using a wireless link, and is connected to central LBS server **810** (which could also be an integrated location-based service provider). The request may comprise a mall map, store location, sales/specials, updating of sale data and the like. Integrated location-based service provider **810** connects to repository **815** to retrieve necessary information, and may further request second local central LBS server **820**, if required, for a map, a specific location, or specials. Second central LBS server **820**, in turn communicates with a map service **825** or specials service **830,** in communication with repository **835** for determining available specials. In addition, client **840**, being in the vicinity, directly communicates with second central LBS server **820** for services.

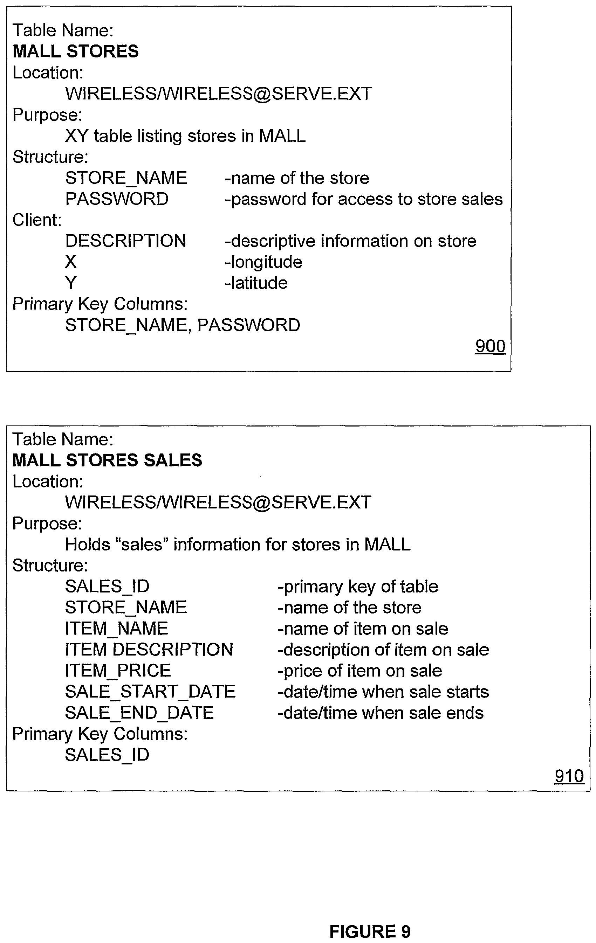

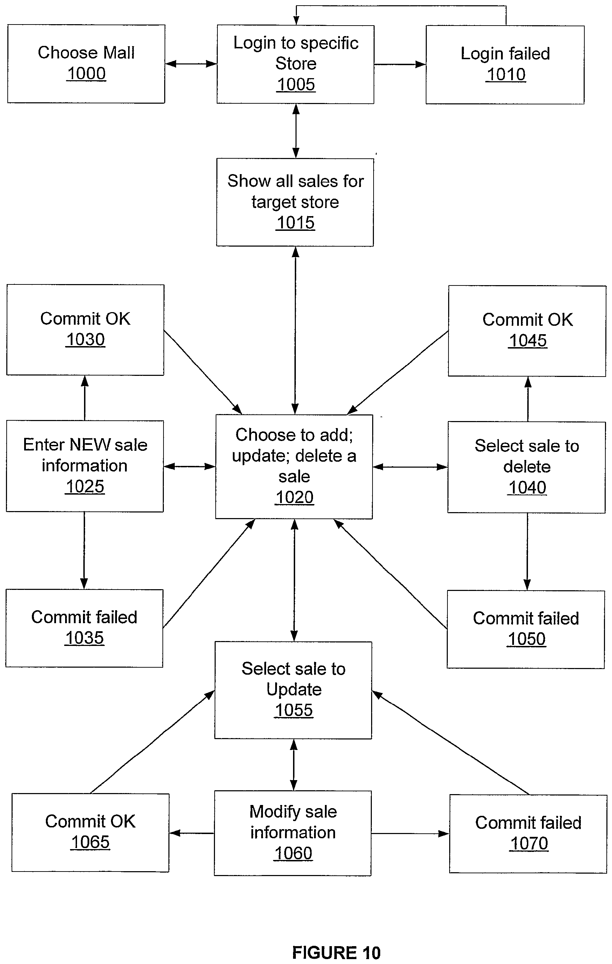

In this example, users can retrieve sale information for stores in the malls in their area. Sale information for each store is maintained by a store administrator for each store. A store administrator can get, add, delete and update sale information for the administrator's store, while an end-user can, preferably, only retrieve sale information. Sale and authorization information is stored, for instance, in two tables in the local-content server database, stores table **900** and sales table **910**, as shown in **FIGURE 9**. The stores table **900** comprises authentication (password) information for stores in the mall. When a user attempts to administer sale information for a store, the user is prompted for a password. If the password matches the password for the store in the stores table **910**, the user is allowed to administer the store sale information stored in the sales table for that store. **FIGURE 10** is a flow chart indicating the actions available to a store administrator, which allow remote monitoring of stores with the possibility of conducting inspections and the like if required.

During step **1000** in **FIGURE 10**, a user with store administrator privileges chooses a mall to access. Next, during step **1005**, the store administrator is presented with a secure login screen. Control passes to step **1010** in the event the login fails, and preferably at least a limited number of retries are allowed by transferring control to step **1005.** Limiting retries is preferred, but not required, since it counters denial of service attacks and other security breaches.

From step **1005** control flows to step **1015**, during which sales for a target store may be retrieved. In response, or otherwise, the administrator may elect to, during step **1020**, add, update, or delete a sale. For these illustrative operations, control flows to step **1025** for entering a new sale, which may be approved in step **1030** or fail during step **1035**; step **1040** for deleting a sale, which may be approved in step **1045** or fail during step **1050**; and step **1055** for selecting a sale for updating during step **1060**, which may be approved in step **1065** or fail during step **1070** respectively.

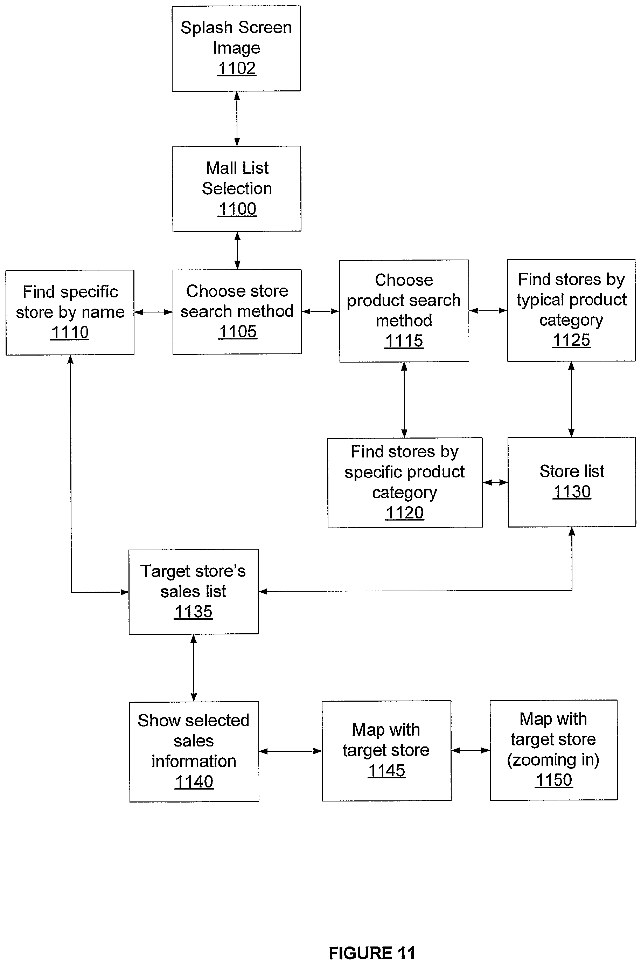

**FIGURE 11** is a flow chart indicating the actions available to a user who has been provided with a list of local-content servers by the central LBS server or may have received a splash screen image during step **1102**, possibly of a promotion, advertisement, or a message indicating start of an application. During step **1100**, selection or a response results in a user receiving a mall list selection followed by, during step **1105**, selection of a store search method. The user may, during step **1110** find a store by name; or during step **1115** find stores based on products. Control flows to step **1120** from step **1115**, so that a user may find all stores by a specific product category or to step **1125** for finding stores by their typical product categories with selection of a store by product during step **1130**. Control following store selection flows from steps **1110** and **1130** to step **1135**, during which the display of a target store's sales list information is selected. Control then flows to step **1140**, during which sale information is displayed. Directions to or maps for the target store may then be obtained during steps **1145** and **1150** with various degrees of specificity, denoted by selection of a zoom parameter value.

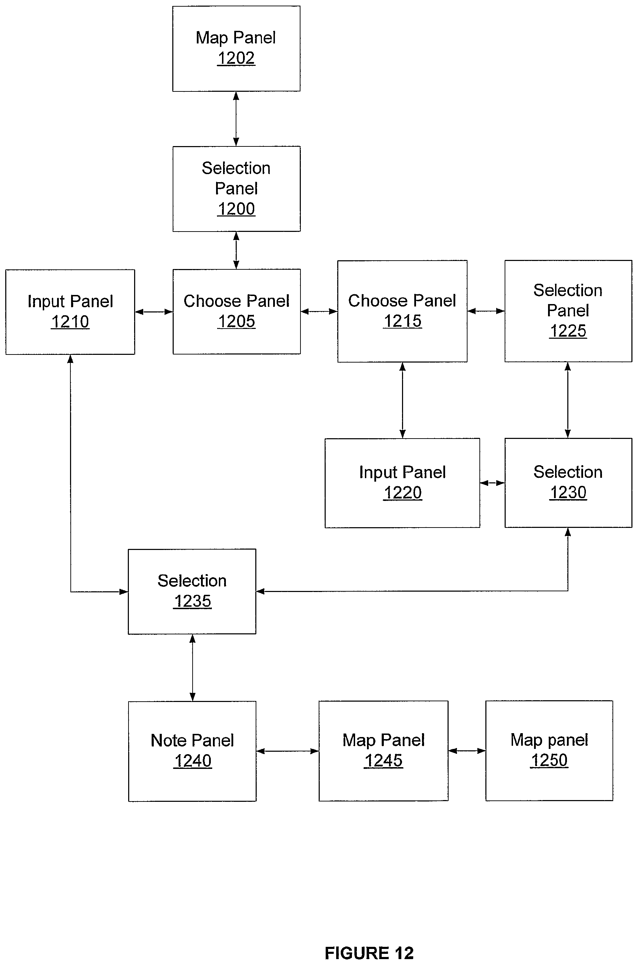

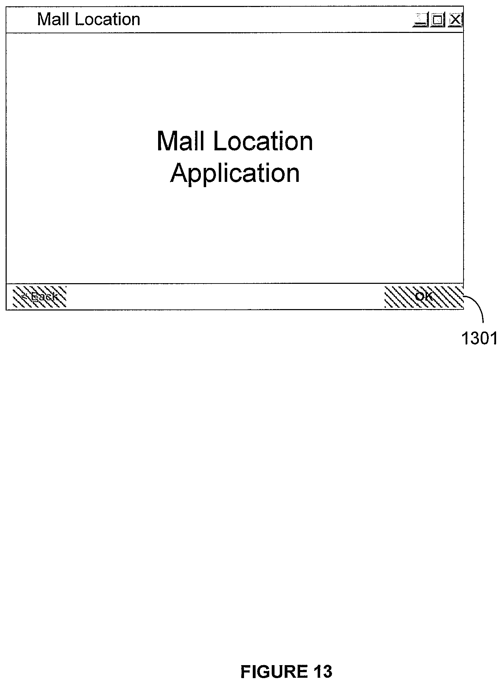

**FIGURE 12** indicates the corresponding Java panels used by the example application illustrated in **FIGURE 11**. Thus, step **1102** corresponds to map panel **1202**, which is shown in **FIGURE 13**, step **1100** to selection panel **1200**, and so on. Corresponding panels in **FIGURE 12** are labeled in a manner similar to the labeling in **FIGURE 11**. The individual user interface is depicted in **FIGURES 13 - 22**, which are described in greater detail next.

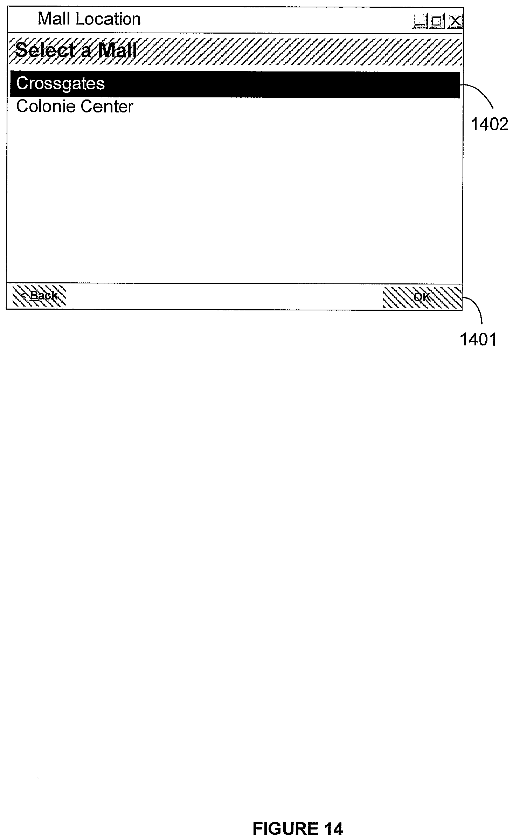

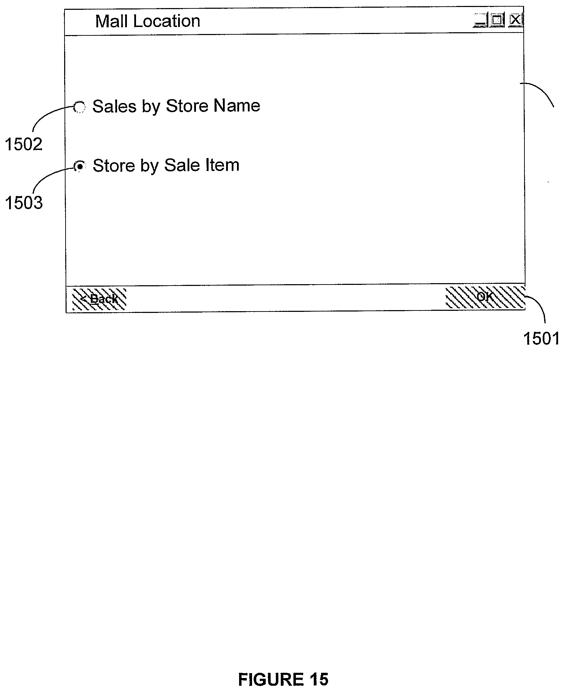

In **FIGURE 13**, corresponding to **1202** and **1102**, the user has started a client application on his mobile device, preferably a java-enabled cell phone using a mobile positioning system. When the user selects "OK" **1301**, a request including an indication of the user's location is sent to the central LBS server. The central LBS server responds with a list of local-content servers serving the user's location, which is displayed on the user's client system as illustrated in **FIGURE 14**, corresponding to step **1100** and panel **1200**. In this example, two malls are near the user, the Crossgates mall and the Colonie Center mall. If the user selects the Crossgates mall **1402** and selects "OK" **1401**, the user is presented the display illustrated in **FIGURE 15**, which corresponds to step **1105** and panel **1205.**

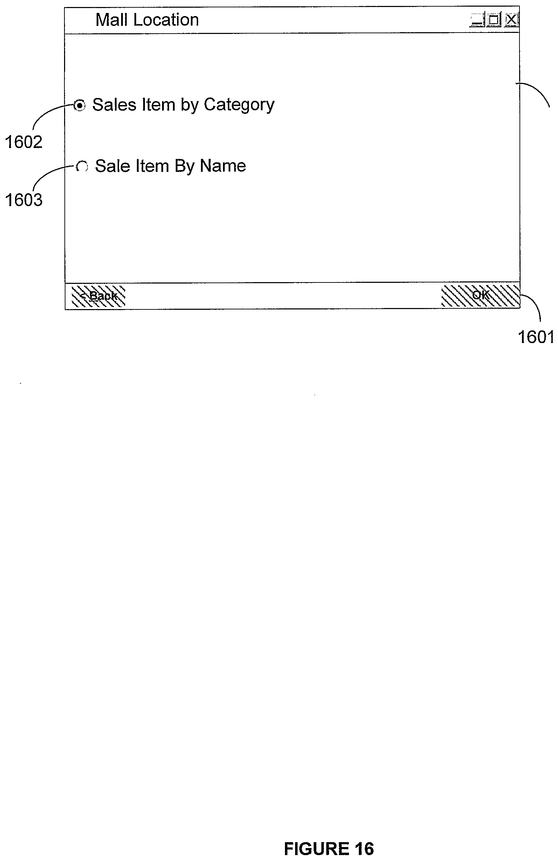

**FIGURE 15** illustrates a user interface that allows the user to indicate whether the user wishes to enter a store name, or to select a store by the item offered on sale. If the user selects "Sales by store name" **1502**, and then selects "OK" **1501**, the user is presented a text-box display for entering a store name. If the user selects "stores by sale item," and then selects "OK" **1501**, the user is presented with the display illustrated in **FIGURE 16**, which corresponds to step **1115** and panel **1215.**

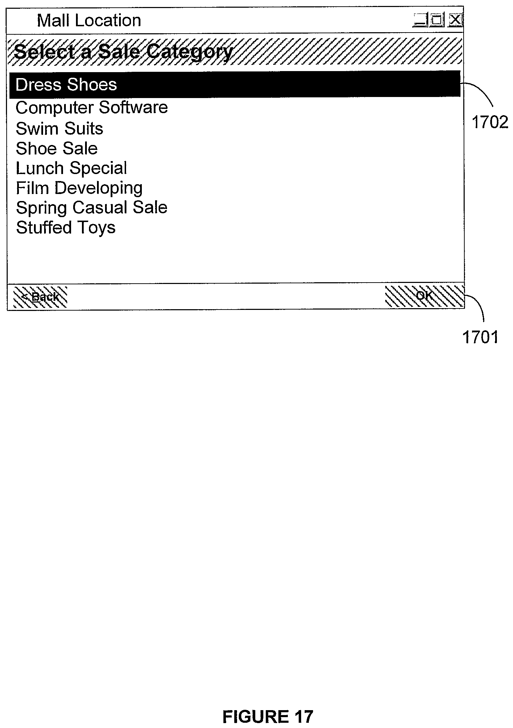

**FIGURE 16** illustrates a user interface that allows the user to indicate whether the user wishes to enter an item name, or to select an item by category. If the user selects "sale item by name" **1603** and then selects "OK" **1601**, the user is presented a text-box display for entering an item name. If the user selects "sale item by category" **1602** and then selects "OK" **1601**, the user is presented with the display illustrated in **FIGURE 17**, which corresponds to step **1120** and panel **1220.**

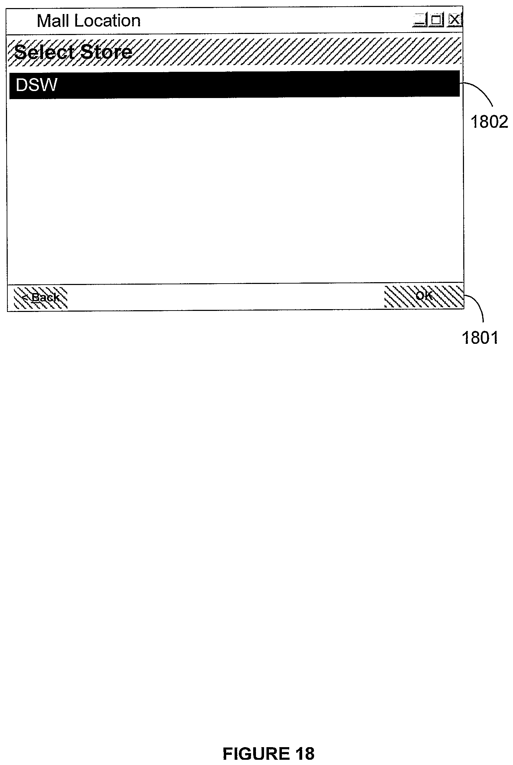

**FIGURE 17** illustrates a user interface displaying categories of items for which the mall-server contains sale information, which user interface also allows the user to select a sale category. If the user selects "Dress Shoes" **1702** and then selects "OK" **1701**, the user is presented with the display illustrated in **FIGURE 18**, which corresponds to step **1130** and panel **1230.**

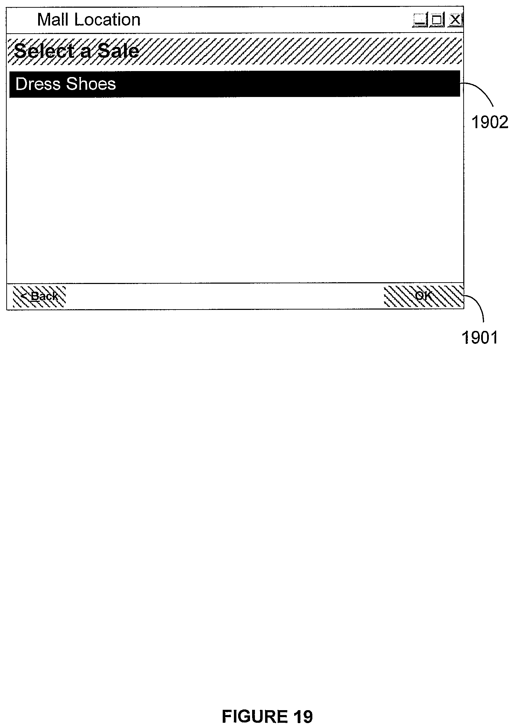

**FIGURE 18** illustrates a user interface displaying a list of stores having sale items in the mall-server database in the category selected by the user, and allows the user to select a store. If the user selects the store "DSW" **1802** and then selects "OK" **1801**, the user is presented with the display illustrated in **FIGURE 19**, which corresponds to step **1135** and panel **1235.**

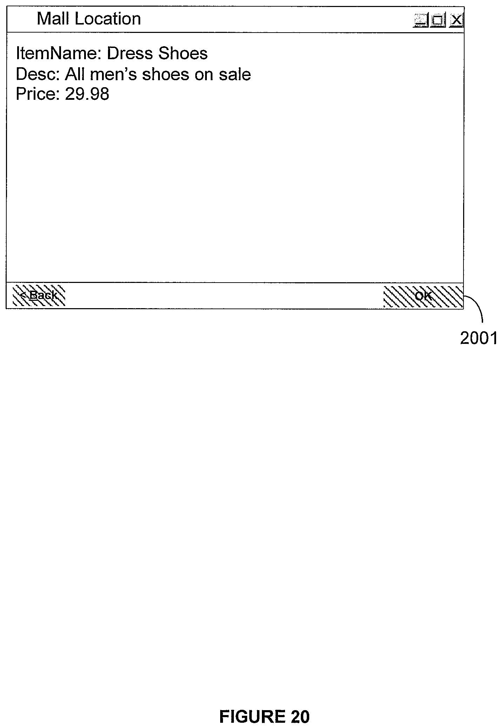

**FIGURE 19** illustrates a user interface displaying sale items in the local-content server database for the DSW store selected by the user. If the user selects the item "Dress Shoes" **1902** and then selects "OK" **1901**, the user is presented with the display illustrated in **FIGURE 20**, which corresponds to step **1140** and panel **1240.**

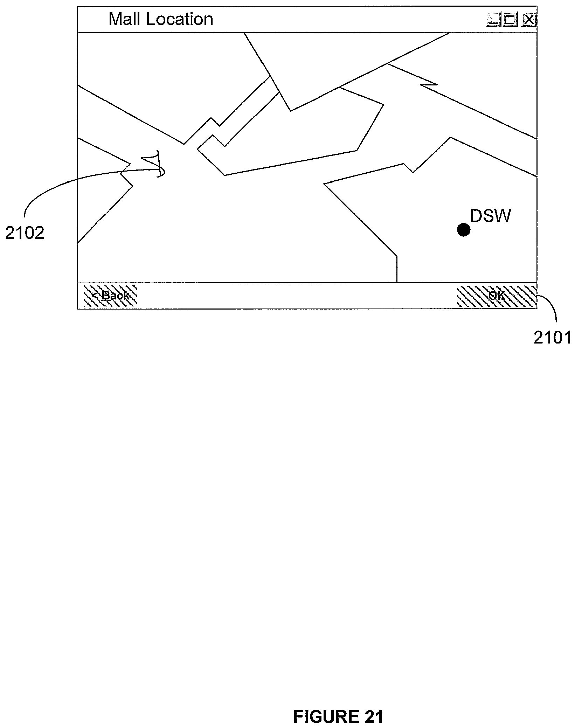

**FIGURE 20** illustrates an interface displaying information about the sale item selected by the user, which user interface also allows the user to request a map showing the location of the store relative to the user. If the user selects "OK" **2001**, the user is presented with the display illustrated in **FIGURE 21**, which corresponds to step **1145** and panel **1245.**

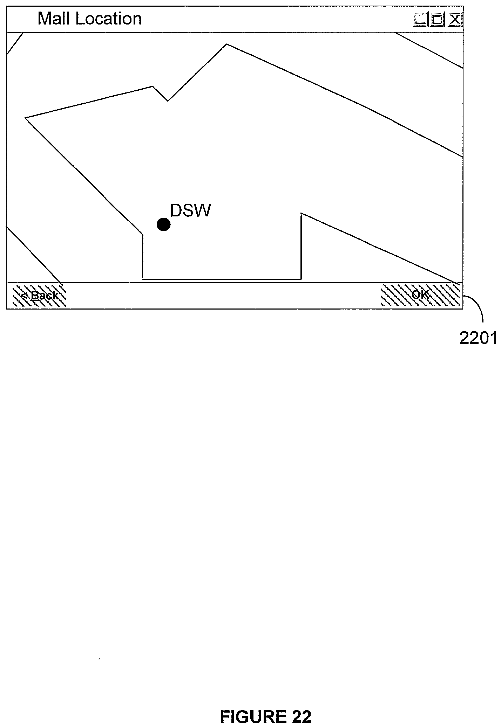

**FIGURE 21** illustrates a user interface displaying a map showing the location of the store relative to the user and allowing the user to request a zoomed-in map showing the store location in more detail. The user's location is shown as a pair-of-shoes icon **2102**, and the store's location is shown as a dot icon with the name (or abbreviation) of the store **2103.** The map is automatically scaled to show both the user and the store locations. If the user selects "OK" **2101**, the user is presented with the display illustrated in **FIGURE 22**, which corresponds to step **1150** and panel **1250. FIGURE 22** illustrates a map zoomed-in to show the store location in more detail.

Local-content server servlet **720** (or **615**) preferably provides JAVA calls for both administrators and end users. These calls include: getSalesByStoreName(<store name>);getSalesByStoreLogin(<password>);deleteSale(existing sale record);addNewSale(sale to create record); updateSale(existing sale record in DB); getStoresByProduct(<product name>); and getStoreInfo(<store name>). In alternative embodiments additional or alternative calls may be provided for allowing both administration and browsing by users based on their respective privilege levels.

Thus, location based services can be offered in accordance with the present invention in an integrated location based service platform or as stand-alone services. The services range from sales promotions, discovering nearby stores, locations to matching events and generating maps using various modes of transportation.

Thus, an integrated location based service platform may further include a plurality of third party servers such as those accessible at a network address corresponding to a response to a request for at least one geographic feature. In addition, the geographic feature is preferably an address of a location-based-information-system server associated with a user location, which preferably provides: personalization data as part of the person profile service; and links to one or more local servers associated with the user location and corresponding to input profile data or a user profile. Furthermore, the location-based-information-system server preferably redirects a user to a first local server, or provides a choice of local servers.

A local server may provide additional user profile information, and information about one or more of sales, promotions, availability of a product or service, alternative sellers of a specified product close to the user location, or alternative providers of a specified service close to the user location.

In another aspect, a user interface responsive to one or more taps or strokes on a pad, one or more clicks of an input device, or a voice command is provided to a client. Such a user interface is also useful for making subsequent requests (such as using a nearest geographic feature to get to content of local stores on local servers and directions to a store using the routing service).

## LOCATION SENSITIVE EVENT SERVICE

Yet another example of location based services is a location sensitive event service, such as the CoolEvent® service offered by the MapInfo® Corporation, which service finds a list of events that are of interest to a service subscriber or other user, based on the user's location and preferences stored in a profile. This service, like the peer-to-peer location based service may be offered in association with an integrated method and system, such as the miAware™system offered by the MapInfo® Corporation, described previously, or be provided as a stand-alone service. The returned events are sorted by distance between the user's current location and an event place. A demographic analysis is performed to returned selected events.

The design underlying the location sensitive event service is not limited to use in locating events, but, without limitation, may also be used for a variety of other applications, such as wireless advertising, or in generating matches for dating services. In another aspect, the design underlying the location sensitive event service is also intelligent such that increased use of the service results in refining the user profile without additional end user input. Moreover, the present system and method may also be used, for example, in a dating service to determine whether to introduce individuals based on their profiles.

In another aspect, the location sensitive event service may also provide content filtering capabilities in the user profiles - i.e., options to allow users to preselect content which they would like to find, either on demand or as a result of polling.

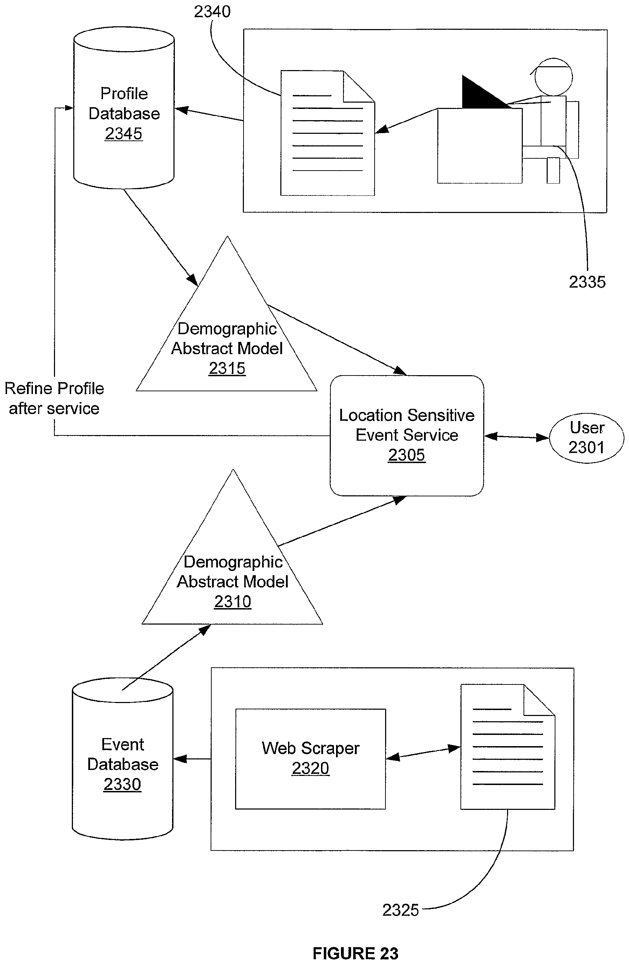

FIGURE 23 illustrates an exemplary architecture for an embodiment of the location sensitive event service. User 2301 subscribes to the location sensitive event service provided via servlet 2305. Web scraper 2320 culls possible events from event sources 2325 to generate events in event database 2330. Event database 2330 is processed in accordance with demographic event model 2310 to generate a list of suitable events for the servlet 2305. At the user end, subscribers 2335 provide information 2340, which is used to augment user profile database 2345 and generate and refine demographic user model 2315.

Servlet 2305 matches the user profile with the event profile to generate an ordered list of events that may be provided to user 2301.

Information 2340 preferably includes personal preferences such as music, art and food and any other preferences or parameters of interest. This information is used by the CRM engine to sort events matching a user's interests. An example set of personal preferences is as follows:

Gender, Age, MusicPref, ArtPref, SportsPref, FoodPref, AlcohoPref, SexualOrient, and Religion.

Additional personal information that may be relevant includes:

Personal ID (linked with personal profile)

Residence Type: single family/town house/condo/ etc

Resident Type: owner/renter etc

Employment Status: employed/unemployed etc

Type of occupation: student/blue collar/ service/white collar/executive

Marital Status: married/single etc

Kids in household (and their respective ages)

Partner Status: none/steady/not steady

Car Access

Interest in a specified service, etc.

Example behavioral characteristics(with optional groups) may include:

What kind of music do you like?

What kind of sports do you like to watch?

What do like to do on a Saturday night?

Are you interested in meeting folks to date?

If, yes ...what type of folks? And any additional questions.

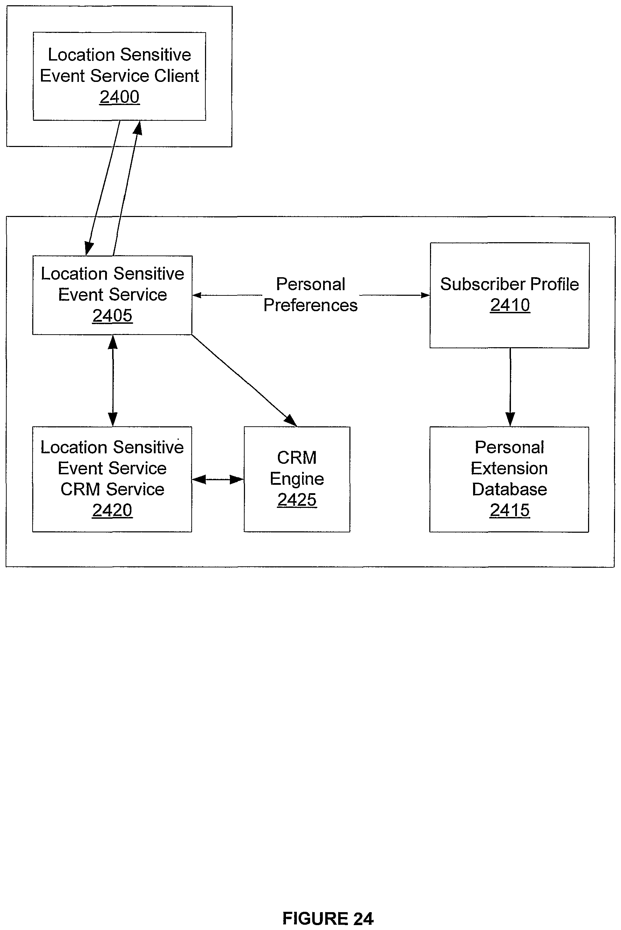

Another view of an architecture providing a location sensitive event service, operating as a customer relation management tool, is illustrated in FIGURE 24. Client 2400 communicates, for instance over the web using web protocols such as HTTP and with markup languages like XML to specify various interfaces, with location sensitive event service servlet 2405. Client 2400, for instance the CoolEvents™ client supported by MapInfo® Corporation, may be a J2ME MIDlet and, furthermore, it may be based on existing MLS services. This allows most of the basic functions of MLS such as mapping, routing and geocoding to be also used.

Location sensitive event service servlet **2405**, in turn, communicates with profile database **2410** of mobile location service subscribers to obtain personal preferences for a particular user. Such personal preferences may be generated with the additional aid of personal extension database **2415**. Location sensitive event service servlet **2405** may be implemented as a allows stand-alone implementation, although, integrated location-based service provider **2420** may be used for relation management service as well. Alternatively, optional customer relation management engine **2425**, designed specifically for this application or a functional equivalent, can directly interact with location sensitive event service servlet **2405** instead of integrated location-based service provider **2420.**

An example of a CRM service is found in the MapXtend™ service provided by the MapInfo® Corporation. This service accesses a customer relation management (CRM) service, e.g., aCRM service of an integrated location based service platform, for instance miAware™ system provided by MapInfo® Corporation. Optionally, a CRM engine specifically designed for this purpose can be made available, including as an alternative or to supplement the miAware™ system.

The illustrative miAware™ service for CRM mentioned previously in the context of **FIGURE 24** accepts an XML request which includes login ID and current location of the client. The service retrieves personal information through miAware™ profiler using the login ID, then gets personal preference data. An XML element is then created and sent to the CRM engine. The returned list of events is sent back to the client. The MapXtend™ service typically includes the following functions.

Retrieving personal preferences information from a location service, such as MLS, profiler database, and possibly additional databases. If a database keeps only limited personal information, then, advantageously, an additional database may manage personal preference data. This database may be linked to the profiler database by, for instance, the user's login name.

Converting the personal preference data into XML, or another markup language suitable for sending information, and sending it to, for instance, miAware™ aCRM service. If this is not available, the location sensitive event service may send the data directly to a CRM engine.

Returning an event list, to the client, if desired, this event service event list can be returned as MXTD DAR (representing the MapXtend specifications).

Some specific MXTD commands are listed below to illustrate an implementation for a location sensitive event service:

**Start:** a command to start a session. If the user has already logged in, e.g., with miConnect, the user's profile may be automatically retrieved, otherwise a login by the user provides a login name and password. Alternative authentication methods may also be employed, if desired, to start the session. Start command preferably triggers a search by the CRM engine to return an original recommendation of events for the user, in accordance with a current location (preferably the user's) and profile data.

**Route_map:** this command requests a map centered at a chosen event place, with, preferably, a routing line highlighted on the map.

**directions**: this command requests a textual, or an alternative such as Braille or audio, description of routing directions for the client to get to the event place.

Personal Preferences may be conveniently represented in a table, as shown below:

| ID | Sex | Residence | Resident | Employment | Marital Status | Partner | Car Access | Interest |
|---|---|---|---|---|---|---|---|---|
| Integer | Char | String | String | String | String | String | String | String |

Personal Preferences are advantageously stored in a preferences database that lists user preferences. A look-up table for coded preferences assists in accessing the database. Exemplary table entries may look like:

Personal ID
Preference code: codes are grouped (music, sports, activities...)
Preference rank, which are entered as

| ID | Preference Code | Preference Rank |
|---|---|---|
| Integer | Integer | Integer |
| Link to personal profile | Link to code look-up table | |

In personal preferences, a rank value is used to indicate the priority that the user gives to a certain type of an event category (e.g., basketball in Sports), this is an input value from the user. In the event match model, a score is calculated for the user on each event. This score is used to rank the events.

An example preferences Code Look-upTable is shown below:

| Preference Group | Description | Code |
|---|---|---|
| Music/Sports/... | Pop/Rock ... | |

Following subscriber registration, preferably including a password, user registration for the present session may be accomplished using one or more web-pages and an appropriate wizard. In an exemplary embodiment the first page may be a modified version of the current miProfiler™ provided by MapInfo® Corporation. A second page may collect additional personal information, advantageously (but not necessarily) in a way similar to the first page. A third page collects personal preferences. The user selects an option and ranks it. Even though expandable DHTML elements may cover many preference classes (for instance, music, sports, sports viewer, activities, alcoholic beverages and movies), some classes may result in a long list. A scrollable list box may hold the selections, with buttons for the user to select the items into another list box in which the items are sorted according to which button is clicked.

If desired, changes may be made to the above address panel to include residence/resident types.

An event database is also preferably built and updated for providing a location sensitive event service as illustrated in **FIGURE 23.** A real world event database should be dynamic and typically changes daily. Subscribing to an external database such as Toronto.com is a possible maintenance mechanism with the aid of an exemplary client program to access such an external service. A web scraper designed to scrape a particular website, e.g., Toronto.com, may be created to access event data from the website.

Some example profiles are: 1) a 26 year old, male University of Toronto student on a Friday evening; 2) a 46 year old Bay street business man on a Friday night with/without the wife; 3) a typical Mississauga housewife with 3 children.

As shown in **FIGURE 24**, an interface to an optional CRM Engine is also preferably provided. To this end, language-specific APIs (Java/C# etc) may be considered as well. An exemplary XML API may comprise the following input and output:

Inputs: three elements: personal data, preferences and address. Personal data preferably includes items required by miProfiler™ plus additional attributes. Preferences is preferably a sequence of preference codes and ranks.

In an output, a sequence of event elements is generated with each event element preferably including an event name, and a detailed description comprising a place, date and time.

In an exemplary embodiment, an event finder engine helps find, from the event database, the event or the top N events that best match a user's preferences. Numerical measurements that represent a comparison of events to a user's preferences may be determined. To compare an event with a person's preferences, both the event and the preferences should have a set of common attributes. This set of common attributes may be used to calculate the differences between an event and a personal profile. Before comparing, events and personal profiles are abstracted to form a vector of selected attributes. The process of defining the attribute set is a dynamic one that improves as more data accumulates in the user database.

To illustrate the computations underlying matching events to users, an exemplary calculation is presented next. It should be noted that the matching formulae may be varied as will be understood by those of ordinary skill in the art. In a preferred embodiment, qualitative attributes may be given numerical values for comparison purpose. For instance, 1 or 0 may be used for two-state attributes. For multi-state attributes, more consideration is preferable, since, for instance, if an event is good for single persons, then the event is more likely suitable for a divorced person than for a person with an unsteady partner.

In another aspect, attribute abstraction is possible in a location sensitive event service. Illustratively, with a personal preference set including a person's preferences on music, sports, sports to watch, movies, activities and beverage tastes, the preferences are divided into six(6) groups each of which may be given an equal weight of 1/6 points.

For each preference group, personal selections may be ranked. For instance, a person's musical preferences may be ranked as:

1, JAZZ (1.0)
2, POP/ROCK (0.8)
3, OLDIES (0.6)

Depending on the data accumulated, illustrative percentages may be assigned to these three music types as: (100%, 80%, 60%).

With a database of N events, each event being assigned attributes of six (6) types, e.g., music, sports, sports to watch, movies, activities, and alcohol/beverage tastes, since an event belongs to certain types, and may be more one type than another, weights may be assigned to each type. For instance, a concert could be assigned weights like:

Music = 0.8
Sports = 0.0
SportsWatch = 0.0
Movies = 0.0
Activities = 0.2
Alcohol = 0.0

Then, for each group of attributes related to each type, a list of true/false values (or 0, 1) are assigned to specify each subtype. Thus:

Oldies = 1 (yes, it is kind of oldies)
Jazz = 1
Country = 0 (no, it is not country music)

Now scores for the events may be calculated as:

Preferences:

Music (weight = 0.16667): Jazz = 1.0, Pop/Rock = 0.8, Oldies = 0.6

Activities(Weight=0.166667): go to the cottage = 1.0, watch a video at home = 0.8, go to a restaurant with friends = 0.6

Event one:

Music (weight = 0.8): Jazz = 1, Pop/Rock = 1
Sports (Weight = 0.0)
Activities (Weight = 0.2): go to a music concert = 1, go to the (live) theatre = 1

Event two:

Music (weight = 0.8): Oldies = 1, Pop/Rock = 1
Sports (Weight = 0.0)
Activities (Weight = 0.2): go to a music concert = 1, go to a restaurant with friends = 1 (the event occurs in a restaurant)

And,
Scores:
For event one:

Music score = 1.0 (Jazz met) * 0.16667 (pref weight) * 0.8 (event weight)

Activities score = 0.0 (none matches)

Final score1 = 0.133336
For event two:

Music score = 0.8 (Pop/Rock met) * 0.16667 (pref weight) * 0.8 (event weight)

Activities score = 0.6 (go to a restaurant with friends met) * 0.16667 * 0.2 (event weight)

Final score2 = 0.1066688 + 0.0200004 = 0.1266692

To demonstrate the principle, but not as a limitation on the scope of the invention, the following attributes are used:

**Age:** age may be divided into age groups of <18(0), 18-25(1), 26 - 35(2), 36 - 45(3), 46 - 55(4), 56 - 65(5), and > 65(6). If the person's age falls into the event's age range, match = 1, otherwise each age group jump decreases 1/6 points. For example, if the persons age is > 65 (6) and the event is for person between 18-25 (1), then the age point will be: 1 - (6-1) / 6 = 1/6.
**Sex:** match = 1, not match = 0

Similarly, an event is also assigned the following attributes:

**Bundled Demographic data** including marketed bundles such as **Psyte™:** two psyte codes may be compared directly to show the closeness between them.
**Marital status:** single(0), widowed(1), divorced(2), separated(3), non-steady partner(4), steady partner(5), common law(6), married(7).
**Employment status:** full time employed (10.1), part time employed(10.2), full time student (20.1), part time student(20.2), unemployed(30). In calculating the score, if the difference between the event and the user is greater than 1.0, 1.0 may be used.
**Car access**: yes = 1, no = 0.
**Top three music**: A model that compares the choices may be employed to take into account music type as well as sequence of choices.
**Top six favorite sports to participate**: same as music.
**Top three sports to watch**: same as music.
**Top three things to do on weekend night**: same as music
**Alcohol taste**: drinking is potentially significant and may be ranked, for instance as very important(0), common(1), not very important(3), don't like(4).
**Top three movie taste**: same as music.

**WEIGHTED ATTRIBUTES:**

The abovementioned attributes are common to most events. For some events, some attributes are more important than others, or less important, or don't count at all. This may be adjusted by giving each attribute a weight.

**INPUTS:**

First of all, a vector of attributes for each user is generated, with a vector of same attributes for each event, resulting in two matrices:

• vectors representing users, let it be matrix S(M, T), where M is number of users and T is number of attributes.
• vectors representing events, let it be matrix E(N, T), where N is number of events and T is the same as above.

**ALGORITHMS:**

• standardize the two matrices: S->ZS, E->ZE. Standardization may use all records in the database.
• for a specific vector in matrix S, calculate its scores on all attributes by comparing each vector in matrix E, as follows:

$$Score(I, j) = \sum (ZS(I,k) - ZE(j,k))^2$$

Where:

I - index of matrix ZS, 0 <= I < M
J - index of matrix ZE, 0 <= j < N
K - index of attribute k, 0 <= k < T

**STANDARDIZATION OF PERSONAL PREFERENCES:**

A standardized vector is a vector that is scaled to the means of all possible values. Since the comparison is carried out between two attribute vectors for an event: event attributes and preference attributes, and attribute values are taken from a big range, they must be standardized to range in a common scale (e.g., 0.0 to 1.0, or 0 to 100) to make the comparison possible. To standardize a preferences vector, means and standard deviations of all attributes may be calculated using all records in the database. Then attribute k may be standardized as:

$$ZS(i,k) = \frac{[X(i,k) - mX(k)]}{X_{StdDev}(k)} \sum (ZS(I,k) - ZE(j,k))^2$$

Where:

i - ith user in the database
k - kth attribute
ZS(i, k) - standardized attribute k of user I
mX(k) - mean attribute k value of all users in the entire database.
$X_{StdDev}(k)$ - standard deviation of attribute k

Standardization of Events may be undertaken after all the events are assigned attributes. They may be standardized by the same procedure as for personal preferences. However, this may not always be necessary since while assigning the attribute values, standardized values may be chosen.

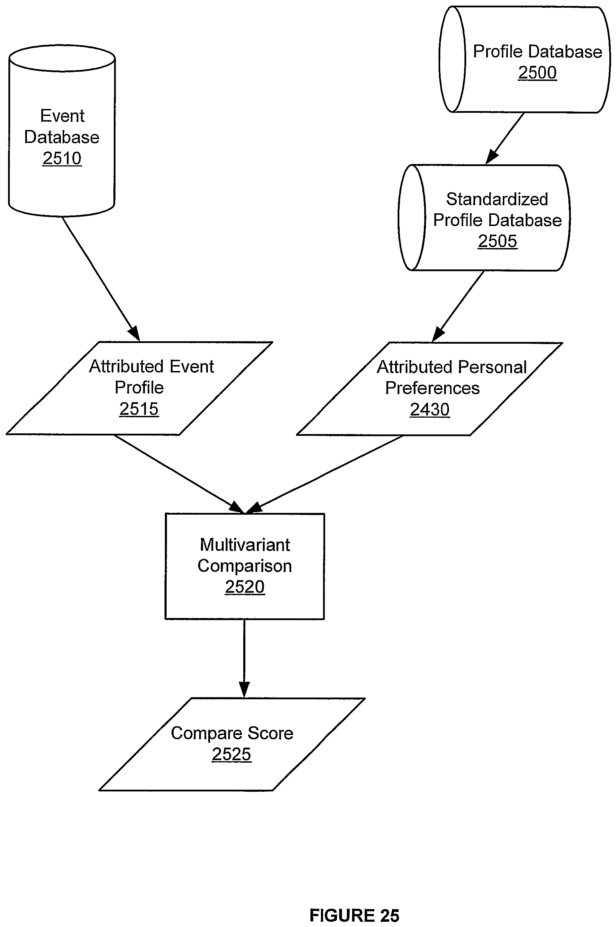

**FIGURE 25** summarizes a process for generating ordered lists of events corresponding to user profiles. Profiles database **2500** is used to generate standardized profile database **2505** reflecting the distribution of various attributes that are part of the various profiles. The standardized profile database allows generation of attributed personal preferences **2530** that can be compared in the manner illustrated above.

Similarly, event database **2510** leads to attributed event profile **2515.** The event and personal profile attributes are then subjected to multivarient comparison **2520** to effect matching by generating scores for each match. The scores for different matches are then compared **2525** to generate the ordered lists actually used to plan events, or to provide users with available event related details.

As is readily seen, event planning, generation of directions based on multiple modes of transportation, or managing/browsing stores in the vicinity are illustrative examples of location based services. Any combination of these services may be integrated using the integrated location based services platform in a dynamic manner since new services can be added, or existing services updated with the aid of the XML encoded specifications. Adding a service is as simple as choosing a unique name followed by publishing the service to the service manager in the specified manner. The limited rules for adding and publishing services, being themselves encoded in XML, are both easy to follow and readily available.

In another aspect, responses to requests for particular services may elicit information about sales, promotions, products, services, or events associated with a user profile or preference, preferably arranged in a sorted list for selection of one or more entries. Each event is, preferably, associated with a plurality of weighted event attributes types and values of event attribute subtypes. Similarly, each user profile comprises a plurality of weighted profile attributes (such as those organized into vectors and matrices). These allow for generation of a similarity score based on shared attributes and their respective weights in arriving at a list of events matched to the user profile or vice versa. Advantageously, the profile attributes may be standardized using the available data in the various databases, such as the event and the profile databases, to improve the comparison between profiles and event attributes.

In another aspect, the present invention includes a stand-alone service for assisting a user to locate stores, directions to such stores and browse various products and services. The service is configured to receive a request from a client device (e.g., a thin client on a cell phone), and retrieve a record comprising an identifier of a second server system that is better suited to provide content from the specified location (e.g., a sale at a specified store in a mall). Moreover, the service may be further configured for one or more of adding, deleting, and updating of store sale records, retrieving a map from a map server, or a record based on request location criterion and a user profile. The user profile may include personalization information, which may be useful in providing personalized information about services available in a geographic area of interest.

In another aspect, the present invention also encompasses a communication system comprising a server system, for instance, the miAware™ system of MapInfo® Corporation, that is configured to provide a location and an ordered list of events matched to a user profile to a client device (e.g., a cell phone). Each event in the list of events is associated with weighted event attributes types and values of event attribute subtypes, and the user profile is associated with weighted profile attributes, which are used to compute a similarity score.

The profile attributes may be standardized using statistics (such as a mean and a standard deviation) of the profile attributes in a database having a plurality of user profiles, and, similarly, the event attributes may be standardized using statistics based on the event attributes in an event database. Then, the similarity scores between events in a database and a specified user profile may be calculated by summing, over the events in the database, the square of the differences between standardized event attributes and corresponding standardized specified user profile attributes, or, alternatively, by summing, over substantially all users in the database, the square of the differences between standardized user profile attributes and corresponding standardized specified event attributes.

It should be noted that the processing described in the context of matching events and user profiles is also applicable to matching services like advertisements and promotions to users.

In another aspect, the present invention includes a method for providing location based services. The method may be illustratively be described as comprising the steps of receiving a request for a service in a message encoded in a markup language (XML) at the service manager; optionally authenticating the request; determining whether the service is available at a plurality of service modules registered with the service manager (by accessing the catalog of services); forwarding an error message in response to determining that the service is not available at the plurality of service modules; forwarding the request to a service module (the request object) in response to determining that the service is available; and sending a result received from the service module (the response object) to a client device (as an XML encoded response).

In addition to the steps listed above, the client device sending the request may have a different address than the address of the client device receiving the result, or, alternatively, the client device (e.g., browser on a cell phone) is redirected to another server (the local-content server).

A method for providing location based information in accordance with the invention includes receiving a request that also comprises information identifying a user and a location (e.g., the cell phone location) to enable retrieval of the user profile and one of more records based on said request and a location criterion. Furthermore, the local-content server located in this manner may provide additional details such as information about sales, promotions, availability of a product or service, alternative sellers of a specified product close to the location, or alternative providers of a specified service close to the location.

In another aspect, the present invention includes a method for providing a list of events matched to a user profile comprising comparing a user profile (e.g., via the miAware™ system or a standalone system) with a database of events with the aid of profile attributes from the user profile and event attributes; generating similarity scores for events corresponding to the user profile; ordering the list of events according to one or more of a location criterion, a specification (e.g., a personal preference), and the similarity scores; and providing at least an ordered subset of the list of events to the user.

In addition, for each event, the event is assigned a weight with respect to each attribute type and a value for an attribute subtype (may be considered to be an event matrix). The user profile includes values for the profile attributes (a profile vector), wherein one or more of the event types and profile attributes are weighted to reflect their relative significance. The similarity scores between events in the database and the user profile are calculated by summing, over substantially all events in the database the square of the differences between standardized event attributes and corresponding standardized user profile attributes (this corresponds to $Score(I,j) = \sum(ZS(I,k)-ZE(j,k))^2$).

The described method is suitable for not only for determining matched events, but also for providing a list of users matched to an event (e.g., useful for determining whether the demographics are favorable for staging a proposed event, targeting an enriched audience with advertising, and the like). This may include comparing an event with a database of user profiles with the aid of profile attributes from the user profiles and event attributes; and generating a list of users with their corresponding similarity scores. The list of users may be ordered according to a location criterion, a specification, or the similarity scores.

In another aspect, the present invention includes design of a suitable thin client by a module for constructing service requests aided by helper classes to construct and submit service requests to the service manger. The module is implemented with no dependence on core server software to make it independent of the server and incorporates a parser to process responses received from the service manager.

It should be noted that the described embodiments are illustrative only and should not be understood as limiting the scope of the invention. The invention, as will be apparent to one of ordinary skill in the art, admits of many variations which are intended to be covered by the description herein and the attached claims. It should be so understood and interpreted.

**APPENDIX**

**MapInfo miAware User Guide**

Welcome to the miAware online User Guide. This guide describes how to use miAware to deliver location-based service offerings. Click on one of the links below for more information.

**1. <u>Introduction</u>**

2. **Documentation**

3. **Deployment**

4. **Demos**

5. **Assumptions**

6. **Background**

**Introduction**

miAware is the provider of MapInfo's location enabled services over the internet in the form of an extensible Markup Language Application Interface (XML-API). These services enable a collection of applications to manage information specific to mobile locations. The XML-API forms the platform to tie together key services commonly used in the development of these mobile location applications.

**MapInfo and Mobile Location**

Wireless carriers and service providers are constantly looking for new and enhanced service offerings for their customers. Many of them are combining mobile location with wireless web access.

The following figure illustrates how miAware and location enabled services fit into the wireless environment:

Clients range from PDA's and phones to telematic devices that communicate through an operator's network to a gateway. The gateway platform integrates Intelligent Network (IN) protocols with Internet Protocols (IP). This provides the means for an application running on the miAware platform to have secure access to resources inside the operator's network. The location server (MPC or GMLC) integrates the operators network with position determining equipment. This allows an application to determine the subscriber's approximate position. The miAware platform provides the service building blocks that operate on location data to implement location aware applications.

Mobile location enabled services provide end users with mobile Internet access to information that is relevant to their location such as nearby businesses, routing directions, and personalized marketing offers. These services offer advantages for telecommunication equipment vendors and carriers, and convenience for end user customers. Carriers can differentiate themselves in the competitive marketplace by offering new, exciting, and useful services on their Networks, helping them attract and keep customers, and grow their revenues. Subscribers can now use their web-enabled mobile phone or Personal Digital Assistant (PDA) to access information and services relevant to where they are.

MapInfo offers a suite of technology and applications that enables wireless service providers to deliver mobile location services from mobile Internet environments. MapInfo's Mobile Location Suite is comprised of location processing engines, geocoding, map generation, routing, geographic data, and location enabled services. These services communicate with each other and with third party systems and user devices through XML. miAware acts as a platform for location aware applications, such as the applications provided with the Mobile Location Suite. It exposes location processing to developers in an XML environment, so that new applications can be easily integrated into the existing system. It also makes it easy to integrate new features based on customer requests. miAware is installed at and managed by the wireless carrier or service provider, giving them full control over their service offerings.

## Key Services

The following services are bundled with an miAware deployment. New services can be developed and added to the existing collection using the miAware Service Provider API.

- **Geocode -** This service turns address information into Longitude/Latitude so that it can be located on a map. This means that the network doesn't have to know where the customer is in order to deliver relevant information. It also means that your customers can find information about their current location or their future destination.
- **Geodecode -** This service returns address information associated with a given Longitude/Latitude. This information could include postal code, city, and street intersections. This service helps your customers find useful information from a map about where they are right now or about their destination.
- **Route -** This service lets you add turn-by-turn driving directions to your web-based application. It lets you calculate either the shortest distance or quickest timed route between any two points. This service returns text-based driving directions and spatial points to your users.
- **Mobile Positioning -** This service provides you with the current position of a mobile device. Once you have located your customer, you can then provide them with location-relevant information.
- **FindLocation -** This service provides searching functions for either street names, business names, or cross street names for a given street name in order to help identify a geographical location.
- **FindNearest -** Given a current location this service is able to return nearby geographic features, such as restaurants, health centers, or gas station, ranked by distance.
- **Mapping -** This service provides the capability of creating mapping images from geographic data. The data can be stored in MapInfo TAB files, in an RDBMS, or in an OGC Geographic Meta Language format. Multiple image formats (e.g., GIF, JPEG, PNG, etc.) are supported. A map image can be returned either as a BASE-64 encoded document or an URL of a file located on the miAware server.

- **Cogo -** The Coordinate Geometry Service (Cogo) provides geometric calculations and measurements. This service consists of a collection of utilities to handle geometries and data represented in GML. The Cogo service depends on the MapInfo Cogo engine, allowing the service to compute containment and distance values for geometry entities, returning a straight-line distance between two points, and verifying a point position relative to a region.
- **CoordSys -** This service provides the capability to transform GML geometries from one coordinate system to another. CoordSysService depends on the MapInfo implementation of OGC coordinate systems and transformations (Geometry.dtd and MapXtendGML.dtd).
- **Position Refinement -** The Position Refinement Service provides the capability of refining the position of a mobile device user based upon the points of interest (POI) that can be identified within the area of the user.
- **Administration Service -** This service provides the capability to administrate the miAware server through an XML API. This XML API allows administrators to: Query all information about their miAware server and services running, update the configuration properties of the miAware server and services, and perform operations on the services running on the server.

**Key Features**

miAware uses industry standards to expose location processing to developers. It provides a concise, consistent, flexible and scaleable XML environment for the creation of new location-based services.

Location enabled services are provided as a self-contained and modular location centric process, which can be described, published, located, and invoked over a network. These services can be used dynamically by mobile location applications or other mobile awareness services to manage information specific to a request.

With miAware, you can quickly and easily integrate applications into existing systems and rapidly add new features based on customer requests. With the miAware XML-API, location-based applications can be developed using native programming languages such as Java or C++.

**Documentation**

Several sources of documentation are provided to assist in effectively using the miAware XML-API. We recommend you read the following documents carefully before using miAware:

- **miAware On-Line Documentation -** The miAware online documentation contains all sections of the product documentation. This includes: a product guide, a developers guide, the XML API reference guide, administration guide, and the JAVA API documentation.
- **Release Notes -** The Release Notes contain specific information concerning this release of miAware. Before proceeding with the installation or usage of miAware, please read each section. Pay special attention to any notes that apply to your operating system and system setup.

**Deployment Package**

When installing miAware, the installation will create the following directories and files inside the miAware main directory:

**index.html** - miAware home page.

**/doc** (All miAware documentation, including Java docs, user and developers guides, XML-API reference guide, install guide, and release notes.) Note, you can access the documentation by loading the miAware index.htm main page.

        **/apidoc** - Java API documentation
        **/guide** - miAware online documentation

**/dtd** Contains the miAware and specific service DTD's.

**/emx** Created by EM at deployment time.

**/images** Contains image files for miAware

**/maps** Directory used to store map images

**/samples** Contains all of the miAware demo applications, including the client and service-provider Java code and the sample request, response, and service-profile XML's.

        **/c** - sample code written in C
        **/demo** - Files for miAware demos

           **/<specific-service>** - Files for the specific service demo

        **/java** - Sample client & service-provider Java code

/**xml** - Sample request, response, and service-profile XMLs

**/Web-inf**

/**app** - Contains files for the Mobile Location Applications

/**client** - miAware client package

/**config** - Contains all miAware and service configuration files.>

/**data** - Contains all data files for miAware, including LDAP specific object class and attribute definition files.

/**<specific-service>** - Contains data files specific to a service.

/**lib** - miAware core libraries, including all of the verified classes (jar files) for the miAware runtime, service providers, and client applications.

/**log** - Contains all miAware log files

/**packages** - Contains the miAware service deployment descriptor (miAwareSDD.xml) and the miAware service packages. The descriptor contains the names of all required files such as jar files, apidoc directory, configuration files, and service catalog entry.

**EMAlerts.xml** - EM alert messages

**EMPeer.xml** - EM peer file

**web.xml** - Servlet definition file

**Demos**

There are various HTML-based demos available with this release. They can be invoked from the samples/demo/miAwareDemo.html page or launch from this link, **miAware Demo**. This demos include:

- **Hello World -** A simple service that echo's a user defined message.
- **Routing -** Performs routing according to a given start and end locations of the route. A summary and optional street segments/points of the route are returned.
- **Geocoding -** Performs geocoding on a given address. Allows one of the postal code centroid, street, or intersection match.
- **Geodecoding -** Performs reversed-geocoding of a given location. Support postal code, city, county, state, or street intersection look up.
- **Find-the-Nearest -** Locates business objects within a given radius of a location.
- **Find Location -** Locates business and street objects that matched a given name.
- **Mobile Positioning -** Returns the current location (x-y) of a mobile device.

Each demo can display a request XML document in a new window based on values and settings entered through the HTML form. If the request is submitted, results (response document) are shown in a new window. Note: For the demo to run, you must have installed the appropriate service via the service installer. For Instruction on how to install a service, please see the Service Install Guide. You must also use Internet Explorer 5.*x* or newer.

**Hello World Demo Description**

A simple service example is the Hello World demo. This service example will take user defined properties values and return (or echo) a simple response based on the user's choices. There are two main groups of user defines properties, greeting message properties and response properties:

**Greeting Message**

- Polite - A property based on a true or false request that will decide whether the response will be polite to the user.
- Content - A user defined string that will be passed to the response.
- Language - The language of the request (English, German, Spanish, or French).

**Response Settings**

- Language - The language that the response will be returned in (English, German, Spanish, or French).
- Encoding - The character set which is used in the XML document for the content or values of the response (UTF-8 or ISO-8859-1)

If you select 'Show Request', the XML request document will be displayed. This document will contain all of the specified properties, including the miAware header (blue text), the miAware properties and elements (red text), and the user defined property values (black text).

```
miAware Demo - Microsoft Internet Explorer                    _ |□| X|

                    miAware Hello World Demo
                         (XML Window)


    <?xml version="1.0" encoding="UTF-8" standalone="no" ?>
    <!DOCTYPE miAwareServiceRequest (View Source for full doctype...)>
  - <miAwareServiceRequest ID="1" Version="1.0" Language="en_US"
       ResponseLanguage="en_US" ResponseEncoding="UTF-8">
    - <Header>
        <Authentication UserID="demo" Password="demo"
           SiteID="mapinfo.com" TargetService="HelloWorld" />
      </Header>
    - <HelloWorldRequest Vendor="MapInfo">
      - <RequestDoc ID="1" Polite="true">
          <Content>I am here.</Content>
        </RequestDoc>
      </HelloWorldRequest>
    </miAwareServiceRequest>
```

After having selected the 'Submit Request' button, the request XML document is processed by the Hello World service and a response XML is returned based on that request. The polite property specified in the request is now processed and the word 'Sir!' is returned if that property was true.

```
miAware Demo - Microsoft Internet Explorer                    _ |□| X|

                    miAware Hello World Demo
                         (XML Window)


    <?xml version="1.0" encoding="UTF-8" standalone="no" ?>
    <!DOCTYPE miAwareServiceResponse (View Source for full doctype...)>
  - <miAwareServiceResponse ID="1" Language="en_US" Encoding="UTF-8">
    - <HelloWorldResponse>
      - <ResponseDoc ID="1">
          <Content>Hello World, Sir! - I am here.</Content>
        </ResponseDoc>
      </HelloWorldResponse>
    </miAwareServiceResponse>
```

**Assumptions**

This guide assumes that you have miAware installed and running, have the miAware services installed, and have read the miAware Install Guide and Service Install Guide.
Specifically, you should have an understanding of:

•    What is XML.

- What a DTD file is.

**[Back to Top]**

**Background**

**XML and miAware**

miAware employs a request/response model based on the eXtensible Markup Language (XML) technology and the HTTP protocol. miAware service requests and responses are XML documents with specific syntax and semantic governed by corresponding Document Type Definitions (DTD).

Extensible Markup Language, abbreviated XML, describes a class of data objects called XML documents, and partially describes the behavior of computer programs which process them. XML is an application profile or restricted form of SGML[ISO 8879]. By construction, XML documents are conforming GML documents.

XML documents are made up of entities (or better described as storage units), which contain either parsed or unparsed data. Parsed data is made up of characters, some of which form character data, and some of which form markup. Markup encodes a description of the document's storage layout and logical structure. XML provides a mechanism to impose constraints on the storage layout and logical structure.

Why XML:

- Usable over the Internet.
- Support a wide variety of applications.
- Compatible with SGML.
- Minimal optional features, initially zero.
- Human-legible and reasonably clear.
- Terseness in XML markup is of minimal importance.

A valid XML document is well-formed, otherwise it isn't XML. When we say that the XML must be "well-formed", this means the XML document(s):

- Must have start and end tags.
- Must have one and only one root element.
- Empty elements are formatted correctly.
- Tags are case-sensitive.
- Must nest correctly.
- Attributes values must be always be in quotes.

As well as being well-formed, the XML document must have been validated against a DTD (or other specified XML Schema). A Document Type Definition (DTD) defines the grammar of the XML document.

**miAware Architecture**

This section describes the miAware architecture and how the core components of miAware interact. Click on one of the links below for more information:

1. **Overview**
2. **miAware Core Components**
3. **miAware Core APIs**

**Overview**

miAware is a provider of MapInfo's location enabled services (LES) (e.g., geocoding, routing, find nearest, etc.). It employs a request/response model based on the eXtensible Markup Language (XML) technology and the HTTP protocol. miAware service requests and responses are XML documents with specific syntax and semantics governed by corresponding Document Type Definitions (DTD).

As part of the location aware architecture, Java servlets are used to direct requests and responses between the Clients and Servers. A servlet is a Java-based web server extension application, which answers client requests. Servlets are not tied to a specific client-server protocol, but they are most commonly used with HTTP and the word "Servlet" is often used in the meaning of "HTTP Servlet". Servlets are secure, since they operate within the context of a secure manager, similar to applets. The servlet API is a standard Java extension, and therefore portable and platform-neutral. Server extension APIs, including the Java servlets and CGI, share the request/response model of HTTP since they operate within the context of an HTTP request.

miAware clients submit a service request (XML document) as an HTTP/POST to the miAware Service Manager at a known URL. The miAware Service Manager dispatches it to a corresponding service provider, which has previously been registered to handle the request. The service will dispatch a request to a spatial server or third-party server to complete the task (accessing a database or LDAP server for data).

miAware Administration Console

Mobile Internet Clients

Request (XML)  HTTP  Response (XML)

miAware Platform  **miAware Server**

**Service Provider Interface**

XML Positioning  XML CoordSys  XML Position Refinement  XML FindLocation  XML Geocode  XML Profiling

XML Geocode  XML Cogo  XML FindNearest  XML Mapping  XML Route  XML Administrator

MapMarker Server  (spatial) Server  Routing Server

**Spatial Servers**

Location Server  **Third-party Servers**  Directory Server

**Data Repositories**  (relational) database  LDAP

After the service has complete the request, the Service Manager will create a response XML document and return the rendered response to the client. This document contains either the requested results or fault information (FaultResponse) if an error occurs. Note that the HTTP status is always set to HTTP_OK (200) in either situation. The requestor needs to examine the response document to determine where a failure has occurred.

The following workflow shows the movement of information from the point of the client request to the point where the client receives a response:

1. One of many clients submits a request to a miAware Service Manager (could have multiple service manages) over HTTP at a known URL (the location of the miAware instance or server. E.g., http://mapinfo.com/miAware/servlet/miAware).
2. The Service Manager authenticates the request with account information in a LDAP directory, then dispatches that request to the corresponding Service Provider through a Service Request Object. It obtains configuration information and service specific information from the miAwareConfig.xml and miAwareServiceCatalog.xml files.
3. The Service Provider generates a response and returns a Service Response Object..
4. The Service Manager then forwards the response document to the client.
5. Client parses the document for results or error information.

**[Back to Top]**

**miAware Core Components**

Two key components of miAware is the Service Manager and the Service Providers. These two components interact to process the service request and produce a service response for a client.

**miAware Service Manager**

The miAware Service Manager is a threaded servlet listening on requests over the
HTTP/POST. It can be configured and deployed to local specifications according to custom settings stored in the miAwareConfig.xml file. The types of services managed by a specific miAware site are controlled by a service catalog named miAwareServiceCatalog.xml. This XML document contains service definitions such as the service name, implementation class, dependant libraries, and URLs of external third-party services (if remote services are used). Newly developed services may be added to the catalog or published to the Service Manager as they become available. Similar, existing services can be turned "off-line" or removed all together.

When a service request arrives, the XML document is validated to make sure it is a well-formed miAware request. The requestor is then authenticated with the information given in the 'Header' of the envelope. The name of the requested service specified in the TargetService attribute is used to dispatch a service provider to render the request. The Service Manager creates a ServiceRequest object based on the given XML document and passes it onto the Service Provider's *perform()* method to initiate the operation. The Service Provider responds with a ServiceResponse object, which either contains successful results or a Fault Response. The Service Manager generates an XML document from the Service Response object using the *toXMLDocument()* method then forward it to the requestor through the HTTP channel.

Key features of the miAware Service Manager are:

- It is a Servlet-based implementation over HTTP/POST.
- Handles I/O transactions between the service manager and the HTTP transport.
- Manages information of enterprise accounts. Authenticates incoming requests according to registered information given in a LDAP directory. Grants accesses to those services only if the account has correct privileges.
- Manages profile information of enterprises and its users. Profile data include user account information and business categories such as types of restaurants and a list of customer locations. Such information is stored in a LDAP server and accessible by service providers via API calls.
- It works with web servers, servlet engines or application servers.
- It is configurable to specific site (Based on settings in miAwareConfig.xml).
- Services are also configurable (Based on definitions in miAwareServiceCatalog.xml).
- Services may be deployed, undeployed, or taken on/off-line.
- It can be integrated with UDDI, SOAP.

**miAware Service Provider**

miAware services are handled by Service Providers. They are dispatched by the Service Manager dynamically to handle a specific service registered previously to miAware. Between the Service Manager and a Service Provider is a Service Provider interface. This is a link between the Service Manager and the provider used to initialize and shutdown the providers as well dispatching the service request and receiving the service response.

Key features of a miAware Service Provider are:

- The requests are handled by designated Service Providers (request document specifies which one to use).

- It can dynamically load as needed.

- It may be local or remote.

- New providers can be developed using the Service Provider Java API.

- Implementation is in a separate package (JAR file, Javadoc, XML, DTD), which can be installed to a selected miAware server.

**[Back to Top]**

**miAware Core APIs**

**miAware Service Provider Java API**

The miAware Service Provider Java API is a set of Java interfaces and classes which enable development of new miAware services. New services can be deployed to the existing set of services hosted by a miAware site. Once deployed, services can be accessed from the outside world.

A service provider must implement three main interfaces: ServiceProvider, ServiceRequest, and ServiceResponse:

- ServiceProvider - Main interface to a provider.
  At initialisation, a ServiceProperties object is passed into the provider so configuration information specified in the Service Catalog can be utilized. Since initialisation is only a one time operation. The provider should cache global information necessary for performing service requests in a multi-threaded environment.
  At shutdown, the provider must de-allocate occupied resources so to avoid memory leakage and/or holding up unnecessary resources (e.g. database connections).

  - init(), shutdown()

  - getServiceRequest()

  - perform()

- ServiceRequest - Contain parsed info of a request document.
  A ServiceRequest object must be created by the provider based on the input request document. This object should parse the content of the document and provide information available for rendering a request. The ServiceRequest will be passed into the provider at a later stage to carry out a service request. Implementation of this interface must also provide capability to create a miAware request document conformance to the miAwareServiceRequest DTD. "Set" method (e.g. setDistanceUnit() of the RouteRequest object) should be available for filling the content of this document.

  - setters & getters

  - toXMLdocument()

- ServiceResponse - Contain results of a service request.
  A ServiceResponse object must be returned after a service is rendered. This object must provide methods for publishing its content to a XML document conformance to the miAwareServiceResponse DTD. In addition, this object must also be able to parse its own response XML document and provide "get" methods (e.g. getTotalTime() of the RouteResponse() object) for retrieving the content.

  - setters & getters

  - toXMLdocument()

Developers need to provide the implementation of the service provider in a single JAR file with a known implementation class of the ServiceProvider interface. If other third-party JAR files are required, they must be bundled. The request and response DTDs, their sample XML documents, and Javadoc for the ServiceRequest and ServiceResponse implementation classes must also be made available.

Please refer to the Java API Reference documentation for details of other helper interfaces and classes.

**miAware Client Java API**

The miAware Client Java API is a set of helper classes grouped by services, which assist Java application developers to publish service requests and retrieve information from a response document.

- Helper classes which assist development of client application:

  - Construct service requests as XML (e.g., String req = routeReq.toXMLDocument();)

  - Submit requests to miAware Service Manager (e.g., InputStream is = miAwareConn.submit(req);)

  - Parse results from service response XML (e.g., RouteResponse res = New RouteResponse(is);)

- Super thin, no dependency on core software.

- Need W3C compliant SAX/DOM parsers (Sun, Oracle, IBM, etc).

**[Back to Top]**

**Service Guidelines**

miAware services are managed by dedicated service providers. The miAware framework allows new service providers to be "plugged" in, as they become available. A miAware service provider must conform to a specific infrastructure to allow a seamless integration. This document provides a set of guidelines to assist the development of miAware compliant service providers.

**1. Development Guidelines**

**2. Packaging Guidelines**

**Development Guidelines**

**Service Request and Response DTDs**

Two Document Type Definitions (DTDs) must be available. These DTD govern the syntax and semantics of the request and response XML documents of the service being developed. Service requests must be identified by a distinct XML root element (e.g. GeocodeRequest). The same goes to service responses (e.g. GeocodeResponse). The service request and response documents must also conform to the miAwareServiceRequest and miAwareServiceResponse envelopes. That is, a service request and response must be contained within their corresponding envelope. Both DTDs must be defined in a single file named XXX.dtd, where XXX may be the name of the service. For example, Geocoder.dtd for the Geocoder Service.

Below are samples request and response envelopes of the RouterService. Please refer to the corresponding DTDs for details.

Route Request Envelope:

```
<miAwareServiceRequest ID="1"
                       Version="1.0"
                       ResponseLanguage="en_US"
                       ResponseEncoding="UTF-8">
  <Header>
       <Authentication UserID="demo"
                       Password="demo"
                       SiteID="mapinfo.com"
                       TargetService="RouteService" />
  </Header>
  <RouteRequest RouteMode="shortest"
                TravelMode="driving"
                TimeUnit="minute"
                DistanceUnit="mile"
                ReturnStreets="false"
                ReturnStreetPoints="all">
    <Itinerary ID="1">
      <StartPoint>
        <Point srsName="EPSG:4326">
```

```
            <Coord>
                <x>
                    -73.86668
                </x>
                <y>
                    40.83350
                </y>
            </Coord>
        </Point>
    </StartPoint>
    <EndPoint>
        <Point srsName="EPSG:4326">
            <Coord>
                <x>
                    -73.87877
                </x>
                <y>
                    40.83081
                </y>
            </Coord>
        </Point>
    </EndPoint>
</Itinerary>
```

Route Request Envelope:

```
<miAwareServiceResponse ID="1" Language="en_US" Encoding="UTF-8">
  <RouteResponse
            TravelMode="driving"
            RouteMode="shortest"
            TimeUnit="minute"
            DistanceUnit="mile">
    <Route ID="1"
            TotalTime="2.20"
            TotalDistance="0.766"
            Directions="From the starting Point travel north. Make a sharp
            right on BEACH AVE and travel south 0.077 miles (0.231 minutes).
            Turn right on En 172ND ST and travel west 0.656 miles
            (1.970 minutes). Turn left. Your destination is to the south.">
  </RouteResponse>
</miAwareResponse>
```

**Service Provider Interfaces**

A service provider must implement the ServiceProvider, ServiceRequest, and ServiceResponse interfaces. Service provider developers must ensure their implementation operates correctly in a multi-threaded environment. That is, an instance of the service provider is initialized once at startup then dispatched concurrently to handle multiple incoming requests. At shutdown, the provider must also ensure all allocated resources are disposed and that there is no memory leakage.

The name of the provider implementation class (e.g. com.mapinfo.miAware.services.Geocoder.GeocodeService) must be clearly identified in the miAwareServiceCatalog.xml so an instance of it can be created dynamically by the miAware Service Manager.

Implementation of the ServiceRequest interface must not have dependency on server-side logic. This allows the same implementation to be deployed on the client-side as a help class to create XML request documents. The request class must provide set methods to populate the content of the XML request document programmatically. For example, the setTimeUnit method of the RouteRequest objects that assigns a time unit value to the TimeUnit attribute of the RouteRequest element.

Similarly, implementation of the ServiceResponse interface must not have dependency on service-side logic. This allows the same implementation to be deployed on the client-side as a help class to retrieve results from a response XML document. The response class must provide get methods so content can be retrieved programmatically. For example, the getTotalTime method of the RouteResponse objects that obtains the total travelling time from the TotalTime attribute of the RouteRequest element. This class must also provide constructors, which allow an instance of the response object to be created from an XML document.

Helper classes (e.g. miAwareRequest and miAwareResponse) are available in various miAware packages, which can be used to ease implementation of the request and response classes. Please refer to the miAware API Javadoc for details.

**Internationalization/Localization**

Service providers must be localizable according to a given locale and an encoding method. That is, texts and messages issued by the provider must be encoded in the specified language (German) and character set (UTF-8). The same localization rule also applies to response XML documents. The desired locale and encoding settings are given respectively in the Language and Encoding attributes of the miAwareServceRequest envelope. This information can be retrieved programmatically using the getLocale, getEncoding, getResponseLocale, and getResponseEncoding methods of the RequestEnvelope object.

To support localization, all texts and messages must be externalized in one or more ListResourceBundle subclasses. These classes must be packaged in their own JAR file separate from the core JAR files. Also, their source files must be available so that new classes can be created for other locales without recompiling the core.

**XML Parsers**

miAware currently employs Apache's Xerces package for parsing XML documents. It is strongly recommended that service provider developers also use this parser to avoid incompatibility with other vendors. Please refer to the Xerces documentation for details.

The com.mapinfo.miAware.xml package provides a set of help classes for XML parsing and publishing. Service developers are urged to utilize these classes to manipulate their XML documents.

**Setup and Configuration**

Setup and/or runtime parameters (e.g. host/port of an external server) that required by the service provider must be externalized in configuration files so their settings can be changed without code recompilation. Developers can choose to define parameters directly in the miAwareServiceCatalog or supply a path to an external configuration file. In either case, detailed description of the parameters and/or configuration files must be documented with instructions on how to alter their values for different deployments.

**QA and Testing**

Automatic test harness must be available to verify if the service provider operates correctly per design. The test harness must be in the form of standalone Java programs, which exercises all functionality and logical branches of the service provider. Test results must be logged in a file with each test case clearly identified. An "expected-result" log will also be needed so it can be used as a reference for "correct" results.

The service provider must be certified for the SUN Solaris 2.7+, Windows NT, and Windows 2000 platforms.

**Documentation**

The following documentation must be accompanied with the delivery of the service provider. Documents can be in either MS-Word or PDF format unless explicitly specified:

- XML API Reference. Detailed description on the service request and response DTDs. Functionality and usage of each element must be fully explained and sample XML must also be given.

- Installation/configuration Guides. Instructions on how to set up and configure the service correctly for a specific deployment. For example, if the service requires a connection to a server then instructions on how to assign a URL or host/port must be provided.

- Client API Reference. An API reference in the Javadoc format must be available for the service request, response, and their dependent classes. A brief developer's guide and a sample Java program should also be provided to demonstrate the usage of these classes.
- Demonstrations. Instructions on how to install and run the demos if they are provided.

**Packaging Guidelines**

The following items must be included in the delivery of each service provider. They must be bundled in a single ZIP or JAR file:

- All documentation as outlined in the development guidelines above.
- JAR files that contain the implementation of the service provider and dependent software. Out of which, one must contain only the ListResourceBundle subclasses for localization. Also, a separate client-side JAR file containing only the service request, response, and their dependent classes must also be available.
- Java source files of the ListResourceBundle subclasses as outlined in the Internalization/Localization section.
- Data and configuration files required by the service provider to function correctly.
- Demonstrations and sample programs.
- Test Harness.

**Service Implementation**

The miAware Service Provider Java API allows new services to be developed and deployed to a miAware server instance. Once deployed, these services can be accessed over the wireless network. New services can also be distributed and deployed on other miAware sites from a Service Provider Package (SPP). This document describes the procedure for creating, deploying, and packaging new miAware services.

> **1. Designing The Service**
> **2. The Request And Response DTDs**
> **3. Implementing The Service Provider Interfaces**
> **4. ServiceProvider Implementation**
> **5. ServiceRequest Implementation**
> **6. ServiceResponse Implementation**
> **7. Deploying The New Service**
> **8. Packaging The New Service For Distribution**

**Designing The Service**

Prior to any development work, both requirements and functionality of the new service must be analyzed carefully. This process will result in a better understanding of the input and output requirements of the service. These requirements form the guidelines in determining the syntax and semantics (DTD) of the service request and response XML documents.

For example, the sample HelloWorld service echoes a given text message in the response. A trailing message may be appended to this message based on a specified option. With these requirements, the HelloWorld request document must accept an input text message as well as an option for the trailing message. They are represented by the RequestDoc element and the Polite attribute respectively. Similarly, the Content element of the HelloWorld response document is used to return the input message with an optional trailing message.

Another important design factor that must be considered is the deployment of the service. Services that depend on external datasets (e.g., databases) and/or communication with other servers must be configurable according to site requirements. Such configuration must be externalized in a file or a set of properties so that the miAware administrator can reconfigure the service accordingly. miAware provides a mechanism that supports service-specific properties for configuration purposes. These properties are defined in the miAwareServiceCatalog.xml file and are accessible through the Service Provider API.

The name of the service (e.g., HelloWorld) must be determined. It must be unique amongst all officially registered miAware services. The service name is stored in the miAwareServiceCatalog.xml file under the Service entry of the provider. Service requests are dispatched to the corresponding provider based on this name.

**The Request And Response DTDs**

A request DTD and a response DTD must be designed and created for a new service. The syntax and semantics of these DTD files are based on the information from the design process. The root element of the request DTD must be contained within the miAwareServiceRequest envelope (a sub-element of miAwareServiceRequest). The miAwareServiceRequest envelope also carries additional information required by miAware.

The HelloWorld request DTD below depicts the relationship between the HelloWorldRequest root element and the envelope:

```
<!ELEMENT HelloWorldRequest (RequestDoc+)>
<!ATTLIST HelloWorldRequest
    Vendor CDATA #REQUIRED
    Product CDATA #IMPLIED
    Version CDATA #IMPLIED
>
<!ELEMENT RequestDoc (Metadata?, Content)>
<!ATTLIST RequestDoc
    ID CDATA #REQUIRED
    Polite (true | false) "false"
>
<!ELEMENT Content (#PCDATA)>


<!ELEMENT miAwareServiceRequest (Header,
HelloWorldRequest)>
<!ATTLIST miAwareServiceRequest
    ID CDATA #REQUIRED
    Version CDATA #IMPLIED
    Language CDATA #IMPLIED
    ResponseLanguage CDATA #IMPLIED
    ResponseEncoding CDATA #IMPLIED
>
<!ELEMENT Header (Authentication)>
<!ELEMENT Authentication EMPTY>
<!ATTLIST Authentication
    UserID CDATA #REQUIRED
    Password CDATA #REQUIRED
    SiteID CDATA #REQUIRED
    TargetService CDATA #REQUIRED
>
```

Similarly, the root element of the response DTD must be a sub-element of miAwareServiceResponse. The miAwareServiceReponse envelope carries a service-specific response as well as a FaultResponse definition. The FaultResponse element contains information of a failed service request.

The HelloWorld response DTD below depicts the relationship between the HelloWorldResponse root element and the miAwareServiceResponse envelope.

```
<!ELEMENT HelloWorldResponse (ResponseDoc+)>
<!ELEMENT ResponseDoc (Content) >
```

```
<!ATTLIST ResponseDoc
    ID CDATA #REQUIRED
>
<!ELEMENT Content (#PCDATA)>


<!ELEMENT miAwareServiceResponse (FaultResponse | HelloWorldResponse)>
<!ATTLIST miAwareServiceResponse
    ID CDATA #REQUIRED
    Language CDATA #IMPLIED
    Encoding CDATA #IMPLIED
>
<!ELEMENT FaultResponse EMPTY>
<!ATTLIST FaultResponse
    Service CDATA #REQUIRED
    FaultMessage CDATA #REQUIRED
>
```

Both the request and response DTDs must be stored in a single file with a ".dtd" extension (e.g., HelloWorld-Service.dtd). The name of the file should be the name of the service for easy identification. miAware employs the following naming convention on elements, attributes, and default attribute values for consistency (all services must follow this convention):

- Use camel case for both element and attribute names (e.g., HelloWorldRequest, Polite).
- Use lower case for default attribute values. Separate words using under scores (e.g., true, city_subdivision).

**Implementing The Service Provider Interfaces**

A service provider must implement three main interfaces: ServiceProvider, ServiceRequest, and ServiceResponse. The ServiceProvider interface is a link between the miAware Service Manager and the provider. It is used to initialize and shutdown the provider as well dispatching requests. The ServiceRequest interface manages parsing and publishing of request documents. The ServiceResponse interface handles results of a service.

Helper classes are available from the miAware Service Developer API, which can simplify service implementation. For example, the com.mapinfo.miAware.common package contains the Java implementation of the common XML elements (e.g., Address, Point) described by the Services XML-API documentation. Service providers should re-use these classes instead of creating their own.

miAware uses the Apache Xerces parser for manipulating XML documents. The DOM parser of Xerces is available from the com.mapinfo.miAware.xml.XMLDocument class. This class manages DTD caching and additional logic in resolving DTD references. Service implementation should use this class for all XML parsing.

Service implementation must utilize the following miAware Exception classes for handling errors:

- Invalid syntax and semantic found in a document - com.mapinfo.miAware.common.InvalidDocumentException
- Service failure - com.mapinfo.miAware.services.ServiceException

Localization must be handled by the provider implementation. This applies to all error messages specified in a fault response and content of a successful response. Error messages must be externalized in a subclass of ListResourceBundle. Content of the response document (i.e., element and attribute values) must correspond to the language setting specified for the response document. For example, driving directions in a RouteService response document must be in German if the ResponseLanguage attribute of miAwareServiceRequest is set to de_DE. Both the language setting and character set encoding of the request and response documents can be obtained from the RequestEnvelope object.

miAware loads the service provider classes dynamically using an instance of URLClassLoader inherited from the container. This is to ensure that classes loaded at different stages are allowed to reference each other. If a service implementation requires dynamic loading of its dependent classes (e.g., the JDBC driver), you must use this same approach. The following code segment demonstrates how this may be done. The second argument of the URLClassLoader constructor specifies that the existing class loader instance is to be used.

- URLClassLoader loader = new URLClassLoader(url, **getClass().getClassLoader()**)

miAware maintains information of all registered services in a Service Catalog located in <MIAWARE>/WEB-INF/config/miAwareServiceCatalog.xml. Each service occupies an entry in this file delimited by the <Service> and </Service> elements. To install a new service, a new entry must be created and added to the catalog according to the syntax and semantics given by the DTD below. This DTD is also available from the <MIAWARE>/WEB-INF/config/miAwareServiceCatalog.dtd file.

| Element | Attribute | Description |
|---|---|---|
| miAwareServiceCatalog | | Root element of the service catalog that contains definitions of one or more miAware services. |
| Service | | Service definition. |
| | Name | Name of the service. It must be unique within a miAware instance. This name matches the TargetService attribute in the request envelope. |
| | Description | A short description about the service. |
| | Online | Indicates whether the state of the service should be online ("true") or offline ("false"). Offline services are not loaded by miAware. Default is online. |
| ClassInfo | | Information of the service provider implementation class and dependant libraries. |
| | Class | Name of the Java class that implements the ServiceProvider interface. For example, com.mapinfo.miAware.services.router.RouterService. |
| Property | | Service property required by the operation of the service. These are key-value pairs. Multiple entries may be specified. |
| | Name | Name of the property. |
| | Value | Value of the property. |

The sample below represents the service definition of the GeocodeService:

```
<Service Name="GeocodeService" Description="miAware Geocoding Service"
Online="true" >
<ClassInfo Class="com.mapinfo.miAware.services.Geocoder.GeocodeService"/>
<Property Name="Vendor" Value="MapInfo"/>
<Property Name="MapInfo.class"
Value="com.mapinfo.miAware.services.Geocoder.mapmarker.MMGeocodingServer"/>
<Property Name="MapInfo.host" Value="milocate.mapinfo.com"/>
<Property Name="MapInfo.port" Value="4141"/>
</Service>
```

## Service Provider Implementation

Every miAware service must provide an implementation class (e.g., com.mapinfo.miAware.services.HelloWorld.HelloWorld) of the ServiceProvider interface. This class is loaded dynamically when the miAware server starts up. The name of this class is obtained from the service definition in the service catalog (miAwareServiceCatalog.xml). Service provider implementation must extend the miAwareProvider abstract class so that startup and shutdown of the service can be managed correctly by the Service Manager when multiple threads are running. A service will delay shutdown until all of its outstanding request threads are complete.

At initialization a ServiceProperties object is passed into the provider via the init() method. This allows the configuration information specified in the service catalog to be utilized. Since initialization is a one-time operation, the provider should cache global information, necessary for performing service requests, in a multi-threaded environment. Service providers must synchronize its initialization with the Service Manager by calling super.init (<ServicePropertiesInstance>) from their init() method.

At shutdown, the shutdown() method is invoked. The service provider must free up resources such as memory and database/server connections to avoid memory leakage and/or hold up unnecessary resources. For example, a Java VM will recycle memory occupied by objects as long as there is no references to them. Services can be shut down and restarted many times within the same Java VM session of a container (e.g., Tomcat). If a service provider does not clean up these connections, unnecessary memory usage may accumulate for each shutdown and startup operation.

A ServiceRequest object must be created and returned by the provider via its getServiceRequest() method based on the input document. This object must parse the content of the document obtained from the given InputStream and store relevant information for rendering a request. The ServiceRequest object will be passed into the provider at a later stage to render the request "set" methods (e.g., setRequestDocs() of the HelloWorldRequest object). The Service-Request must be made available for filling the content of a request document programmatically, enabling a request document to be published via a Java interface.

A ServiceResponse object must be returned by the perform() method after a service is rendered. This object must provide methods for publishing its content to an XML document, conforming to the service DTD. In addition, this object must be able to parse its own response document and make such information available through the provided "get" methods (e.g., getResponseDocs() of the HelloWorldResponse() object). Service providers must notify the Service Manager from their perform() method prior to processing a request and after a request is complete. The startPerform(<ServiceRequest-Instance>) method must be called before processing a request and endPerform() after it is complete.

## ServiceRequest Implementation

Every miAware service provider must provide an implementation of the ServiceRequest interface. A convenient abstract class com.mapinfo.miAware.services.miAwareRequest is available from the miAware API which can simplify this implementation. It is recommended that developers create a subclass of miAwareRequest. This class provides methods for handling the following logic:

- Provides default implementation for methods required by the ServiceRequest interface.
- Parses information of the request envelope and makes it available to the provider implementation. A request envelope contains information of the requestor, locale, and character encoding which are required for processing the request.
- Provides additional methods for publishing a request document.

As a subclass of miAwareRequest, an implementation of ServiceRequest is required to provide logic for the following constructors and methods:

- Constructors that accept a request document from an InputStream, a Reader, a DOM document object, or a URI. An instance created from these constructors is used for dispatching a request to the provider.
- Constructor that accepts a RequestEnvelope object. An instance created from this constructor is used by client applications to publish a request document.
- XML parsing logic that extracts information from a request document and makes this information available through a set of "get" methods.
- "get" methods for retrieving the content of a request document.
- "set" methods for filling the content of a request document.
- toXMLDocument for publishing a request document.

A sample implementation class, HelloWorldRequest from the HelloWorld service is available as a reference. Source code is located in <MIAWARE>/samples/java. Developers are urged to use this service as a template for their implementation.

The following descriptions provide a walk-through of the HelloWorldRequest class to reveal required logic of a ServiceRequest implementation.

## Object Instantiation

There are five constructors available for creating a HelloWorldRequest instance. Four of which accept an XML document in the forms: InputStream, Reader, URI, and DOM document object. These constructors invoke the parse() method to extract the content of the document and save it in the object. This information is accessible by the "get" methods (e.g., getVersion, getRequestDocs). The other constructor uses a RequestEnvelope object as an argument. This object represents a request envelope and is published by the toXMLDocument method as part of a request document.

## XML Parsing

The parse() method provides logic to extract content of a HelloWorld request document using a DOM parser. A DOM document object that represents the request XML is obtained from the XMLDocument class via miAwareRequest. All of the element and attribute values parsed from the document are stored in the instance variables or objects of supporting classes. For example, the RequestDoc and Content classes hold information given by the RequestDoc and Content elements. This information is accessible by the appropriate "get" methods.

**XML Publishing**

The toXMLDocument() method is an implementation of the abstract method of miAwareRequest. It publishes the content (previously populated by the "set" methods) of the instance as XML using the XMLAttrList and XMLWriter helper classes. The XML document conforms to the HelloWorld request DTD.

**ServiceResponse Implementation**

Every miAware service provider must implement the ServiceResponse interface. A convenient abstract class com.mapinfo.miAware.services.miAwareResponse is available from the miAware API which can simplify the implementation. It is recommended that developers create a subclass of miAwareResponse. This class provides methods for handling the following logic:

- Provides default implementation for methods required by the ServiceResponse interface.
- Parses information of the response envelope and makes it available to client applications. A response envelope contains information of the locale and character encoding of the response document.
- Provides additional methods for publishing a response as a XML document.

As a subclass of miAwareResponse, an implementation of ServiceResponse is required to provide logic for the following constructors and methods:

- Constructors that accept a response document from an InputStream, a Reader, a DOM document object, or a URI. An instance created from these constructors is used by client applications to extract information from a response document.
- Constructor that accepts a RequestEnvelope object. An instance created from this constructor is used by the Service Manager to publish a response document to the client.
- XML parsing logic that extracts information from a response document and makes this information available through a set of "get" methods.
- "get" methods for retrieving the content of a response document.
- "set" methods for filling the content of a response document.
- toXMLDocument for publishing a response document.

A sample implementation class, HelloWorldResponse from the HelloWorld service is available as a reference. Source code is located in <MIAWARE>/samples/java. Developers are urged to use this service as a template for their implementation.

The following descriptions provide a walk-through of the HelloWorldResponse class to reveal required logic of a ServiceResponse implementation.

**Object Instantiation**

There are five constructors available for creating a HelloWorldResponse instance. Four of which accept an XML document in the forms: InputStream, Reader, URI, and DOM Document object. These constructors invoke the parse() method to extract the content of the document and save it in the object. This information is accessible by the "get" methods (e.g., get, getResponseDocs). The other constructor uses a ResponseEnvelope object as an argument. This object represents a response envelope and is published by the toXMLDocument method as part of a response document.

**XML Parsing**

The parse() method provides logic to extract content of a HelloWorld response document using a DOM parser. All of the element and attribute values parsed from the document are stored in the instance variables or objects of supporting classes. For example, the ResponseDoc and Content classes hold information given by the ResponseDoc and Content elements. This information is accessible by the appropriate "get" methods.

**XML Publishing**

The toXMLDocument() method is an implementation of the abstract method of miAwareResponse. It publishes the content of the instance as XML using the XMLAttrList and XMLWriter helper classes. The XML document conforms to the HelloWorld response DTD.

**Deploying The New Service**

To register a new service with miAware, its definition, DTD files, JAR files, and configuration files must be deployed to the miAware installation directory. The procedure below outlines the required steps:

- Create an entry of the new service in the <MIAWARE>/WEB-INF/config/miAwareServiceCatalog file according to the syntax and semantics described in the previous sections.
- Copy the files that contain the request and response DTDs and dependent definitions to the <MIAWARE>/dtd directory. One of these files (e.g., HelloWorldService.dtd) must contain the miAwareServiceRequest and miAware-ServiceResponse definitions. This file will be referenced by the request and response documents.
- Package all of the implementation classes (i.e., ServiceProvider, ServiceRequest, ServiceResponse, and supporting classes) of the new service in a single JAR file (e.g., route.jar for the RouteService). Copy this file to <MIAWARE>/WEB-INF/lib. If the service uses third-party products, the JAR files of these products must be accessible to miAware. These JAR files can either be loaded dynamically by miAware if LibURI references are defined in the service definition or may be added to the CLASSPATH of the Java VM hosting miAware.
- If the new service uses configuration files, copy these file into <MIAWARE>/WEB-INF/config. Properties can be created in the service definition to define the location of these files. Management of these properties is the responsibility of the service provider.

**Package The New Service For Distribution**

New services can be distributed and installed on other miAware sites. The miAware Administrator Tool of the Enterprise Manager Console can be used to install services from a SPP. This requires components of a new service to be bundled in a Service Provider Package (SPP). The miAware Service Installer tool can be used to install services from a SPP. A sample SPP that contains all of the core services can be found in the <MIAWARE>/WEB-INF/packages directory. A Service Provider Package contains the following information:

- A miAwareSDD.xml file (Service Deployment Descriptor) that contains the definition of one or more services. Each service occupies an entry in the file and must conform to the DTD described below. The SDD file must be located at the root directory of the package.
- One or more service directories. Each contains components of a service. The directory name is the name of service (e.g., RouteService) specified in the miAwareSDD.xml file. There are multiple subdirectories within a service directory, each containing different components of the service. If a directory does not exist or is empty, it will be ignored. The structure and layout below depict the organization of the service components.

**Directory Layout And Content Of The SPP**

```
\<root-directory>
    miAwareSDD.xml – Service Deployment Descriptor
    \<service-directory> – Service Directory (e.g. RouteService)
        \config – Contains configuration files (optional)
        \data – Contains data files (optional)
        \doc – Contains documentation (e.g. user guide, API javadoc) (optional)
        \lib – Contains JAR files (mandatory)
        \dtd – Contains DTD files (mandatory)
        \samples – Contains samples (optional)
            \demo – Contains web-based or standalone demos.
            \java – Contains sample client Java programs.
            \xml – Contains sample request and response documents.
    \<service-directory>
        ....
```

DTD Of The miAwareSDD.xml File

| Element | Attribute | Description |
|---------|-----------|-------------|
| miAwareSDD | | Root element of the service deployment descriptor that contains definitions of one or more miAware services. |
| | Version | Release ID of this DTD. |
| Service | | Service definition. |
| | Name | Name of the service. It must be unique within the SDD and the miAware instance where the service is to be deployed. |
| | Description | A short description about the service. The Service Installer displays this information on the service configuration dialog. |
| | Version | Version release of the service. The Service Installer displays this information on the service configuration dialog. |
| | Vendor | Name of the vendor who implemented the service. The Service Installer displays this information on the service configuration dialog. |
| ClassInfo | | Information of the service provider implementation class and dependant libraries. |
| | Class | Name of the Java class that implements the ServiceProvider interface. For example, com.mapinfo.miAware.services.router.RouterService. |
| Property | | Service property required for the operation of the service. These are key-value pairs. Multiple entries may be specified |
| | Description | Description or helpful notes about the library. The Service Installer displays this information on the service configuration dialog. |
| | Optional | Specifies whether the property is optional ("true") or mandatory ("false"). A mandatory property is highlighted on the service configuration dialog. |
| | Name | Name of the property. |
| | Value | Value of the property. Note that the %MIAWARE% keyword will be replaced with the path name to the miAware home directory. |

Below is sample SDD that contains the definition of the GeocodeService:

```
<?xml version="1.0" encoding="UTF-8" standalone="no"?>
<miAwareSDD Version="1.0">
  <Service Name="GeocodeService"
   Description="miAware Geocoding Service" Version="1.0.0"
Vendor="MapInfo">
     <ClassInfo
Class="com.mapinfo.miAware.services.Geocoder.GeocodeService"/>
     <Property Name="Vendor" Value="MapInfo" Optional="false"
      Description="Vendor of the supported geocoding engines." />
     <Property Name="MapInfo.class"

Value="com.mapinfo.miAware.services.Geocoder.mapmarker.MMGeocodingServer"
      Optional="false"
      Description="GeocodeService provider implementation class. DO NOT
CHANGE!" />
     <Property Name="MapInfo.url"
Value="http://milocate.mapinfo.com/servlet/mapmarkerJ"
      Optional="true"
      Description="URL of the geocoding server hosted by this vendor." />
     <Property Name="MapInfo.host" Value="milocate.mapinfo.com"
Optional="false"
      Description="Name of the machine that hosts the geocoding
server." />
     <Property Name="MapInfo.port" Value="4141" Optional="false"


      Description="Port number the geocoding server is listening to for
requests." />
   </Service> <Property Name="MapInfo.port" Value="4141"/>
</miAwareSDD>
```

**miAware Pass-Thru Service**

A miAware Pass-Thru Service is used when a service provider wants to create an miAware service request that contains an request of another service or server which accept XML request. The Pass-Thru Service extracts a request content (or payload) from the request document in a miAware envelope, passes this payload to another server (thirdparty server) that accepts the xml request, processes the payload, and wraps the response payload back into a miAware envelope and returns the response document.

1. **Request and Response**
2. **Adding Additional Properties**
3. **Pre and Post Processing**

**Request and Response**

The Pass-Thru Service treats any xml elements inside the miAware Envelope as the request or response content (payload), and will pass this payload to and from the thirdparty server, not processing the information.
If your miAware Pass-Thru service does not need processing to the request or response payload received to or from the thirdparty server, you can use this PassThrough provider directly. The following is how to define a PassThrough service in the miAwareServiceCatalog.xml file.

```
<Service Name="PassThruService"
            Description="Pass through service"
            Online="true">
<ClassInfo
Class="com.mapinfo.miAware.services.PassThroughService"/>
<Property Name="RequestDTD"
Value="http://host.com/dtd/PassThruRequest.dtd"/>
<Property Name="ResponseDTD"
Value="http://host.com//dtd/PassThruResponse.dtd"/>
<Property Name="ServerURL"
Value="http://host.com/thirdparty/servlet/thirdparty"/>
</Service>
```

As you can see in the example above, this PassThrough service requires three service properties: RequestDTD, ResponseDTD and ServerURL:

- **RequestDTD** - This property indicates the URL of the dtd to parse information in the request xml that will be sent to the thirdparty server. If this property is missing, no dtd will be included in the xml to be sent to this server.
- **ResponseDTD** - This property indicates the URL of the dtd to parse information in the response xml to be sent to the client. If this property is missing, no dtd will be included in the response xml.
- **ServerURL** - This property indicates the URL of the thirdparty server, which is going to handle the thirdparty xml request contained in the pass through request. It can start with either "http:" or "https:", which support normal http and SSL connections respectively. ServerURL is used when the service provider need to use a servlet connection to talk to the thirdparty server. ServerHost and ServerPort are used when a socket connection is required. If this property is missing, the PassThroughService will look for the ServerHost/ServerPort property, and try to use a socket connection to talk to the thirdparty server. If both the ServerURL and ServerHost/ServerPort are provided, the service provider will use servlet connection as a prior option.

**Adding Additional Properties**

The miAware Pass-Thru service provides the ability to pass additional properties for thirdparty servers. Thirdparty servers may need additional connection properties when the Pass-Thru service attempts to connect to that server (these properties may be added to the miAwareServiceCatalog.xml file as service properties). All properties that are not predefined in the Pass-Thru service, such as RequestDTD, ResponseDTD, and ServerURL, will be treated as additional connection properties and will be used as the HTTP connection properties.

For example, if Mapinfo MapMarker Java is used as the thirdparty server, it requires a connection property called "MI_XMLProtocolRequest". As a result, the Pass-Thru service catalog entry for a request to the MapMarker Java geocode server that sends a response back to the client may look like the following:

```
<Service Name="PassThroughGeocode" Description="MMJ geocode Pass-Thru
Service." Online="true">
 <ClassInfo Class="com.mapinfo.miAware.services.PassThroughService"/>
 <Property Name="RequestDTD"
Value="http://miAware:8080/miAware/dtd/GeocodeRequestAndResponse.dtd"/>
 <Property Name="ResponseDTD"
Value="http://miAware:8080/miAware/dtd/PassThroughGeocode.dtd"/>
 <Property Name="ServerURL"
Value="http://miAware:1010/mapmarker10/servlet/mapmarker"/>
 <Property Name="MI_XMLProtocolRequest" Value="GeocodeRequest"/>
 <Property Name="MI_XMLProtocolVersion" Value="GeocodeRequestAndResponse"/>
 <Property Name="MI_XMLProtocolTransactionId" Value="0000"/>
</Service>
```

Note that the MI_XMLProtocolRequest, MI_XMLProtocolVersion, and MI_XMLProtocolTransactionId properties will not be processed by the Pass-Thru service. These properties will be used for connection to the MapMarker Java server.

**Pre and Post Processing**

The miAware Pass-Thru service provides the ability to perform pre and post processing on XML request and response documents. This however required the service provider developer to extend the Perform( ) Method in the Pass-Thru service, adding the required logic to do the pre and post processing.

The following is example code extending the Perform( ) method in the miAware Pass-Thru service. This example illustrates a new service that will inherit the PassThroughService and processes the payload before it is sent to the backend server and processes the XML response before it is sent to the client.

```
import com.mapinfo.miAware.services.ServiceRequest;
import com.mapinfo.miAware.services.ServiceResponse;
import com.mapinfo.miAware.services.PassThroughRequest;
import com.mapinfo.miAware.services.PassThroughResponse;
import com.mapinfo.miAware.services.PassThroughService;

public class MyPassThroughService extends PassThroughService {

  public MyPassThroughService() {
  }

  public ServiceResponse perform(ServiceRequest req, ServiceParameters params)
  {

    PassThroughRequest preq = (PassThroughRequest) req;
    String payload = preq.getRequestContent();

    // add logic to pre process the request content
    String myreq = preprocessRequest(payload);
    preq.setRequestContent(myreq);
    ServiceResponse sres = super.perform(myreq, params);
    PassThroughResponse pres = (PassThroughResponse) sres;
    String rc = pres.getResponseContent();

    // add logic to post process the response from the thirdparty server.
    String myres = postprocess(rc);
    pres.setResponseContent(myres);
    return pres;
  }
}
```

**Client Development**

1. <u>Introduction</u>

2. <u>Installation</u>

3. <u>Release Content</u>

4. <u>Configuration</u>

5. <u>Documentation</u>

6. <u>Communicate With The miAware Server</u>

7. <u>Create And Submit A Service Request Document</u>

### 8. Interpret A Service Response

**Introduction**

This distribution contains the miAware Client Package that provides a Java API for developing miAware client applications.

miAware is the provider of MapInfo's location enabled services over the Internet in the form of an eXtensible Markup Language Application Interface (XML-API). These services enable a collection of applications to manage information specific to mobile locations. The XML-API forms the platform to tie together key services commonly used in the development of these mobile location applications.

miAware services employ a request and response model based on the extensible Markup Language (XML) technology and the HTTP protocol. These miAware service requests and responses are XML documents governed by corresponding Document Type Definitions (DTDs). The client applications submit a service request to the miAware server as a HTTP/POST (must use content-type="text/xml") at a known URL (e.g., http://milocate.mapinfo.com/miAware/servlet/miAware). An XML document is returned after a service is rendered. This response document contains either the requested results or fault information if an error has occurred.

Each of the miAware services has its own syntax and semantics (defined in the service DTD). As a result, the request and response document syntax and values must conform to this DTD. As a service under miAware, the service XML API is a subset of the miAware XML API that provides among other things, common DTD's and an envelope for the request/response for all supported services. This envelope contains general information including authentication and common parameters (e.g., language settings).

The miAware Client Package provides a Java API which can be used to communicate with a miAware server, publish a service-specific XML request, and extract results from a response document returned by miAware.

Each of the miAware services provides specific request, response, and supporting classes that correspond to the elements defined by the DTDs for the particular service. For example, the GeocodeRequest class is the Java representation of the GeocodeRequest element defined in the Geocoder.dtd. Similarly, the GeocodeResponse class maps to the GeocodeResponse element. All of the sub-elements referenced by these classes have their Java mappings available from the API.

The purpose of the request class is to enable developers to construct and fill a service request XML document without having in-depth knowledge of the XML syntax. To create a request document, developers can instantiate a request object (e.g., GeocodeRequest) and use the provided "set" methods to fill the document based on their requirements. Once the object is populated, a well-formed and syntactically correct request can be published using the toXMLDocument method. This document can now be submitted to a miAware Server for processing, using another helper class named com.mapinfo.miAware.client.miAwareConnection.

The miAwareConnection class takes a given document in the form of a String object, a File object, or an InputStream and submits it to a miAware server at the specified URL (e.g., http://milocate.mapinfo.com/miAware/servlet/miAware). As a response, the miAware server returns an XML document in a byte stream which contains either the results or a fault response if any errors were encountered.

The purpose of the response class is to provide XML parsing of the response document so developers can extract the content using the supplied "get" methods. The objective is to ease the knowledge of the XML syntax.

Sample client Java programs are available for each supported service. You can find these files in the <miAware_Client> /samples/java directory. Samples XML request and response documents are also available in <miAware_Client>/samples/xml. <miAware_Client> is the root directory where the miAware Client Package is installed.

Note that miAware uses the Apache's Xerces parser for XML parsing. For compatibility reasons, developers are urged to use this parser instead of a parser from another vendor.

**Installation**

Unarchive the content of the miAwareClient.zip file into a directory. This directory will be referenced as <miAware_Client> from now on. Please make sure this directory is accessible by the Java VM that hosts your applications, as miAware JAR files are loaded from this location.

**[Back to Top]**

**Release Content**

The following subdirectories are created in <miAware_Client> after content of the miAwareClient.zip file is unarchived:

**\doc** (miAware documentation)
  **\apidoc** (API documentation)
  **\client** (Overview, XMP-API, Developer Guides)
**\lib** (Client JAR files)
**\dtd** (DTD files)
**\samples** (Sample client programs)
  **\c** (Sample C programs)
  **\java** (Sample Java Clients)
  **\xml** (Sample requests and responses)
**index.html** (Documentation page)

**Configuration**

You must prepend the following JAR files from the <miAware_Client>/lib directory to the CLASSPATH of the Java VM that hosts your applications in order to load the required miAware classes:

• miaclient.jar, miacommon.jar, miaext.jar, mxtd_dar.jar (miAware Core)

• xercesImpl.jar, xmlParserAPIs.jar, xml-apis.jar (SAX/DOMXML parser)

• micsys.jar, miutil.jar (Coordinate System package)

• jdom.jar (JDOM XML parser)

• mxj.jar, mistyles.jar (Mapping package)

• one or more <service>.jar (Service specific classes)

Which <service> .jar to add depends on the requirements of your applications. For example, if your application works with both the GeocodeService and RouteService then you must add the geodecode.jar and route.jar to the CLASSPATH. The following table outlines the required JAR files for each miAware service:

• findnearest.jar (FindNearestService)

• findlocation.jar (FindLocationService)

• geocode.jar (GeocodeService)

• geodecode.jar (GeodecodeService)

• <none> (HelloWorld)

• position.jar (PositionService)

• profile.jar (ProfileService)

• route.jar (RouterService)

• cogo.jar (CogoService)

• csysxform.jar (CoordSysService)

• mapping.jar (MappingService)

• positionrefine.jar (PositionRefineService)

**Documentation**

HTML-based documentation for miAware is available from <miAware_Client>/doc. It provides an overview of the miAware product, description of the XML API (DTDs) for each service, as well as javadocs for the services and client developer APIs. To view these documents, launch a web browser and open the <miAware_Client>/index.html page.
All relevant Java interfaces and classes for building a client application are located in the following packages:

- com.mapinfo.miAware.admin (Administration)
- com.mapinfo.miAware.client (Communication)
- com.mapinfo.miAware.common (Common XML elements)
- com.mapinfo.miAware.coordsys (Coordinate System Transformations)
- com.mapinfo.miAware.geom (Managing GML V2 Simple Geometries)
- com.mapinfo.miAware.xml (XML parsing/publishing)
- com.mapinfo.miAware.services (Services framework)
- com.mapinfo.miAware.services.FindLocation (Find-The-Nearest Service)
- com.mapinfo.miAware.services.FindNearest (Find-Location Service)
- com.mapinfo.miAware.services.Geocoder (Geocode Service)
- com.mapinfo.miAware.services.Geodecoder (Geodecode Service)
- com.mapinfo.miAware.services.HelloWorld (Sample Service)
- com.mapinfo.miAware.services.Position (Mobile Positioning Service)
- com.mapinfo.miAware.services.Profile (Profiling Service)
- com.mapinfo.miAware.services.Router (Route Service)
- com.mapinfo.miAware.services.Cogo (Coordinate Geometry Service)
- com.mapinfo.miAware.services.CoordSys (Coordinate System Service)
- com.mapinfo.miAware.services.Mapping (Mapping Service)
- com.mapinfo.miAware.services.PositionRefine (Position Refinement Service)

**Communicate With The miAware Server**

The miAware server accepts requests as a HTTP/POST. To facilitate this operation, a class named "miAware-Connection" is available in the com.mapinfo.miAware.client package. An object of this class is instantiated with a URL of the miAware server which will handle the request. For example, to submit a service request to the miAware service at http://milocate.mapinfo.com/miAware/servlet/miAware, a miAwareConnection object is created as follows:

```
miAwareConnection miAware = new miAwareConnection
  ("http://milocate.mapinfo.com/miAware/servlet/miAware");
```

Once an object is created, you can submit a request document using one of the "submit" methods. Which one to use depends on the type of the source document:

Document from a disk file:

File file = new File("c:/services/route.xml") InputStream is = miAware.submit(file);

Document as a String object:

String routeRequest = "<?xml version=\"1.0\" ...>"; InputStream is = miAware.submit(routeRequest);

Doucument from a stream:

fi = new FileInputStream("c:/services/route.xml"); InputStream is = miAware.submit(fi);

After a service is rendered, a response document is returned in a byte stream by the miAware server. You can either extract its content using your own parsing logic or make use of the service classes.

**Create And Submit A Service Request Document**

A request document contains a header and a service request. Both of these must be contained within an envelope. As mentioned earlier, there are Java classes available for creating these components. The example below describes step-by-step how to create a route request document using appropriate miAware classes:

**Header**

A header contains information of the requestor for authentication purposes. It also specifies the target service to be rendered. The com.mapinfo.miAware.common.Header class is the Java mapping of the Header element. The statement below instantiates a Header object for a route request with the requestor name and password being "demo" and "demo". The "mapinfo.com" parameter specifies the site of the requestor. Where "RouteService" is the name of a registered service known to the miAware server.

```
Header header = new Header("demo", "demo", "mapinfo.com",
"RouteService");
```

**Request Envelope**

The request envelop is managed by the com.mapinfo.miAware.services.RequestEnvelope class. It takes an ID and a Header object as input. The ID is an unique value supplied by the application which will be echoed back in the response document so that a specific request/response pair can be matched up in a asynchronous environment. There are other optional settings that can be set in the envelope such as the language binding of the document. Please refer to the XML-API document for details.

The statements below create an envelope object for a route request:

```
// Create a service envelope
RequestEnvelope envelope = new RequestEnvelope("1", header);

// Specify appropriate options i.e. Attribute values
// of the miAwareServiceRequest element

// Version ID of the XML-API to use
envelope.setVersion("1.0.1");

// Language and character-set bindings
// of the request document. Defaults are
// "en_US" and "UTF-8".
envelope.setLanguage("en_US");
envelope.setEncoding("UTF-8");

// Language and character-set bindings
// of the response document.
// Defaults are those specified in the
// request envelope.
envelope.setResponseLanguage("de_DE");
envelope.setResponseEncoding("ISO-8859-1");
```

**Service Request Content**

The content of a request can be created from a service-specific request and its supporting classes. Which ones to use is based on the services supported by the application. In general, at the top-level is the request object (e.g., RouteRequest). This object contains other objects that corresponds to elements (e.g., Itinerary, Point) defined by the service request DTD. Below is the sample code that creates a route request using classes from the com.mapinfo.miAware.services.Router package.

Create a route request object and populate it with specific values. Please refer to the Route Service XML-API for details.

```
// Create a RouteRequest object using the envelope
// defined above
RouteRequest request = new RouteRequest(envelope);

// Specify appropriate options of the request
// i.e. Attribute settings of the RouteRequest
// element.
request.setVendor("MapInfo");
request.setDistanceUnit("mile");
request.setTimeUnit("minute");
request.setRouteMode("shortest");


request.setReturnStreets(false);
request.setReturnStreets(true);
request.setTravelMode("driving");

// Specify the location (URL) of the file on the server that
// contains the DTDs for this service
PublisherOptions pubOpts =
new PublisherOptions
("http://milocate.mapinfo.com/miAware/dtd/RouteService.dtd");
request.setPublisherOptions(pubOpts);


// Specify the end points of a route i.e. the Point elements.
// Each end point is represented by a Point object.
Point startLocation = new Point(new Coord(-73.86668,
40.83350));
Point endLocation = new Point(new Coord(-73.87877,40.83081));


// Specify a route i.e. the Itinerary element.
// Multiple Itineraries may be defined, one
// object for each.
Itinerary[] its = new Itinerary[1];
its[0] = new Itinerary("1", startLocation, endLocation);
request.setItineraries(its);


// Publish a request document with the above settings
String reqDoc = request.toXMLDocument();


// Submit it to the miAware server
InputStream is = miAware.submit(reqDoc);
```

**Interpret A Service Response**

Service-specific response and supporting classes provide parsing logic that extracts content of a response document and makes it available through appropriate get" methods. In general, at the top-level is the response object (e.g., RouteResponse). This object contains other objects that corresponds to elements (e.g., Route, Street) defined by the service response DTD. Below is sample code that instantiates a route response object from an XML document with classes from the com.mapinfo.miAware.services.Router package.

```
// Submit a Route Request to the miAware server
InputStream is = miAware.submit(reqDoc);

// Create a RouteResponse object from an XML document
// returned by a miAware server
RouteResponse routeResp = new RouteResponse(is);

// Check to see if the service was successful
if (routeResp.isFaultResponse()){
    FaultResponse fault = routeResp.getFaultResponse();
    System.out.println("Error: " + fault.getMessage());
}


else {
    // Extract route information
    Route[] routes = routeResp.getRoutes();

    if (routes != null) {
        // Print summary of the first route
        System.out.println("Route:" +
            lineSeparator +
            "ID: " + routes[0].getID() +
            lineSeparator +
            "Directions:" +
            routes[0].getDirections() +
            lineSeparator +
            "Total Distance : " +
            routes[0].getTotalDistance() +
            lineSeparator +
            "Total Time : " + routes[0].getTotalTime());
    }

    // Print individual waypoint information
    Street[] streets = routes[0].getStreets();

    if (streets != null) {
        for (int j = 0; j < streets.length; j++) {
            System.out.println("Street: " +
                lineSeparator +
                "ID:" + streets[j].getSequence() +
                lineSeparator +
                "Name: " + streets[j].getName() + .
                lineSeparator +
                "Travel Instuctions: " +
                streets[j].getInstruction() +
                lineSeparator +
                "Time: " + streets[j].getTime() +
                lineSeparator +
                "Distance:" + streets[j].getDistance());
        }
    }
}
}
```

**Profile Management**

1. **Introduction**
2. **Objects and Groups**
3. **Attributes**

## Introduction

A LDAP directory is a repository that provides storage and fast access of object-oriented hierarchically structured information. Although this may sound like a database, the content and the structure of the directory is defined by the entries it contains (a directory generally contains or interacts with a database internally). A specific schema that contains object classes and attributes controls the type of information each entry may carry.

Through its protocol and its application program interface (API), most directories offer a hierarchical rather than a relational view of the data. All attributes of a particular entry are stored as a single object, as in the case of miAware, all objects that represent an entry are grouped under a single location in the hierarchy. The structure of the directory defines the basic relationship between entries. An entry must be uniquely identified by a key known as a "Distinguished Name" or a DN. Attributes have standardized names, such as cn for 'common name' and dn for 'distinguished name'.

## Objects and Groups

In LDAP, an object class defines the collection of attributes that can be used to define an entry. The LDAP standard provides these basic types of object classes:

- Groups (list of objects or groups of objects)
- Locations
- Organizations
- People

From miAware's perspective, LDAP is a repository for two distinct groups of information: enterprise-related and person-related. A good example of enterprise-related information is a list of devices and applications supported by an enterprise. As for person-related information, LDAP will store specific information like personal details, enterprise assignments, location information, etc.

Profile data is grouped under a logical root called Enterprise, identified by a unique name (e.g. miaware.com). Multiple enterprises can coexist, each containing a variation of information based on the same LDAP schema. An enterprise is subdivided into multiple groups in a hierarchical structure according to the information the group carries and their logical relationships between them.

Example miAware hierarchy:

Some of these groups (e.g., Application Profile) contain data for different geographic regions (e.g. US, UK), hence their content is further categorized by localities. A locality is a geographic division such as a county, country subdivision (e.g., state/province), or any political boundary. Groups that support locality will carry a locality data element that identifies entries for a specific locale.

Below is description of the information each profile group contains:

- **Enterprise** - Root of the profile data. It identifies specific information across multiple enterprises.
- **Map Profile** - Information enables MapXtreme Java to generate maps of pre-defined geographic regions with specific symbologies (e.g., marker of restaurants) at various scale levels.
- **Application Profile** - List of applications available within a locality.
- **Device Profile** - Information of devices supported by an enterprise.
- **Person Profile** - Information of a person within an enterprise. This includes account information such as name, address, device information, and various preferences.
- **Buddy Subscription** - Contains references of people who subscribed to the 'Buddy' service. Subscribers are able to choose other subscribers as their contacts, whom will be notified for events.
- **Point-Of-Interest (POI) Profile** - Information that supports personalized content within an enterprise. A POI profile cascades into four levels: Theme, Group, Category, and Sub-category. Each level carries a unique code, a description, and an alias. For example, a POI entry that represents business information may be Theme=Business Traveller, Group=Restaurant, Category=Italian, and Sub-Category=Pizza. A person can create their own POI profile by selecting various entries from the enterprise's POI.
- **Locality** - List of geographic regions (e.g., US, UK) supported by the enterprise.
- **Organization Unit** - Logical grouping of people. Each organization unit is identified by a unique name (e.g., Engineering). A person can belong to multiple groups. For example, Alex is a member of the Engineering, QA, and Documentation groups.
- **Customer Profile** - Contains information of customers within the enterprise.

An entry can belong to more than one object class. For example, the entry for a person is defined by the person object class, but may also be defined by attributes in the inetOrgPerson, groupOfNames, and organization object classes.

The server's object class structure (schema) determines the required and allowed attributes for a particular entry. For example, a person entry may be defined by the following object class structure:

- objectClass: top
- objectClass: person
- objectClass: organizationalPerson
- objectClass: inetOrgperson

In the above structure, the inetOrgperson object class should not be placed on an entry until the person and organizationalPerson object classes have been defined.

**Attributes**

The data populating a directory is represented as attribute-value pairs. For example, the commonName, or cn, attribute is used to store a person's name. A person named John Doe can be represented in the directory as *cn: John Doe.*

In LDAP there are two types of attributes: required and allowed. Required attributes must be present in an entry, while allowed attributes are optional in an entry. Each attribute has a corresponding syntax definition. The syntax definition describes the type of information the attribute contains. The syntax of the attribute is used by LDAP to perform various sorting and matching operations. The table below describes the attribute syntax types:

| Syntax Method | Abbreviation | Definition |
|---|---|---|
| Binary | bin | Values for this attribute are binary. |
| Boolean | boolean | This attribute may have two values: On or off, True or False, Yes or No. |
| Case Exact String | ces | Values for this attribute are case sensitive. |
| Case Ignore Sting | cis | Values for this attribute are not case sensitive. |
| Telephone | tel | Values for this attribute are telephone numbers (identical to cis, but blanks and dashes are ignored during comparisons). |
| Distinguished Name | dn | Values for this attribute are distinguished names. |
| Integer | int | Values for this attribute are numbers. |
| Operational | operational | Values for this attribute are not displayed in search results. |

In the LDAP architecture, you may have a feature called cross references. These are attributes in an entry carrying a DN's value (distinguished name) to another entry stored in directory. This way, a logical relationship between entries is implemented throughout all of the data kept in directory.

The miAware LDAP schema includes many object classes and attributes that may be used to meet most directory server requirements. This schema may be extended with new object classes and attributes to meet evolving requirements for the directory service. When adding a new attribute to the schema, a new object class should be created to extend the attribute. Adding a new attribute to an existing object class may compromise the server's compatibility with existing clients that rely on the standard LDAP schema, and may cause problems with the server when trying to upgrade.

**The miAware LDAP Schema**

This section provides descriptions of the object classes and attributes used by each profile group within a miAware directory. The following hierarchy describes the first level of a typical profile management LDAP implementation for an enterprise:

1. **Enterprise**
2. **Locality**
3. **Device Profile**
4. **Application Profile**
5. **Person Profile**
6. **Buddy Subscription**
7. **Location Book**
8. **Organizational Unit**
9. **Point Of Interest**
10. **Map Profile**
11. **Customer Profile**
12. **Symbology**

Note: Please refer to the sample miAware.ldif file located in <MIAWARE>/WEB-INF/data/ldif for examples. For a complete list of object class definitions and attribute definitions, refer to the Object Class and Attributes sections in this guide.

**Enterprise** (schema definition) - Organization (LDAP implementation)

Example Structure:

```
☐ o=miaware1.com
 ⊙ ☐ ou=Locality
 ⊙ ☐ ou=DeviceProfile
 ⊙ ☐ ou=ApplicationProfile
 ⊙ ☐ ou=PersonProfile
 ┊
 └ ☐ ou=BuddySubscription
 ⊙ ☐ ou=LocationBook
 ⊙ ☐ ou=OrganizationUnit
 ⊙ ☐ ou=CustomerProfile
 ⊙ ☐ ou=POI
 ⊙ ☐ ou=MapProfile
 ⊙ ☐ ou=Symbology
```

Object Classes:

| Name | Associated Schema |
| --- | --- |
| top | standard schema definition |
| organization | standard schema definition |

Attributes:

| Name | Description |
| --- | --- |
| o | enterprise unique name, e.g., miAware.com |
| mail | general enterprise contact email |
| url | general enterprise contact url |
| telephonenumber | general enterprise contact phone number |
| facsimiletelephonenumber | general enterprise contact fax number |
| description | general description of the enterprise |

Object Class:

| Name | Associated Schema |
| --- | --- |
| miaware | standard schema definition |

Attributes:

| Name | Description |
|---|---|
| miawareversion | current version of miAware |
| miaddrstreet | enterprise street address |
| miaddrcitysubdivision | enterprise city subdivision |
| miaddrcity | enterprise city name |
| miaddrcountrysubdivision | enterprise country subdivision |
| miaddrcountry | enterprise country code |
| miaddrpostalcode | enterprise postal code |
| miaddrpostalcodeaddon | enterprise postal code add-on |

**Locality** (schema definition) - Locality (LDAP implementation)

Example Structure:

```
ou=Locality
    l=Toronto
    l=US
    l=CA
```

Example of expanding an entry (e.g., Toronto):

```
c            CA
l            Toronto
objectclass  country
objectclass  locality
description  locality is Toronto
```

**Locality container (ou) organization unit**

Object Class:

| Name | Associated Schema |
|---|---|
| organizationalunit | standard schema definition |

Attributes:

| Name | Description |
|---|---|
| ou | locality container (ou stands for organizational unit. LDAP use this attribute to provide a logical unit for multiple entries of the same type) |

(continued)

| Name | Description |
|---|---|
| description | locality container description |

**Localities entry**

Object Classes:

| Name | Associated Schema |
|---|---|
| top | standard schema definition |
| organization | standard schema definition |

Attributes:

| Name | Description |
|---|---|
| c | country name |
| 1 | locality name |
| description | locality description |

**Device Profile** (schema definition) - DeviceProfile (LDAP implementation)

Example Structure:

Example of expanding an entry (e.g., cn=iPAQ):

| | |
|---|---|
| cn | iPAQ |
| description | iPAQ from Compaq |
| midevicecolormodel | BW |
| mideviceimageformat | GIF |
| mideviceimageformat | JPG |
| mideviceimageformat | PNG |
| midevicemodel | Compaq iPAQ 789 |
| mideviceresolution | 120x80 |
| midevicetypeid | Palm |
| objectclass | midevice |

**DeviceProfile container (ou) organization unit**

Object Classes:

| Name | Associated Schema |
|---|---|
| organizationalunit | standard schema definition |
| miprofile | miAware schema definition |

Attributes:

| Name | Description |
|---|---|
| miprofilename | profile name |
| description | device profile container description |
| ou | organizational unit |

**Device Profile entry**

Object Class:

| Name | Associated Schema |
|---|---|
| organizationalunit | standard schema definition |

Attributes:

| Name | Description |
|---|---|
| cn | device identifier or name |
| description | device description e.g., iPAQ |

Object Class:

| Name | Associated Schema |
|---|---|
| midevice | miAware schema definition |

Attributes:

| Name | Description |
|---|---|
| midevicetypeid | device type e.g., Phone, Palm, or other device |

(continued)

| Name | Description |
|------|-------------|
| mideviceresolution | device resolution WxH e.g., 640x480 |
| midevicecolormodel | device color model e.g., bw, color, or greyscale |
| mideviceimageformat | device image format e.g., jpg, bmp, wbmp, tiff, png, gif |
| mideviceparameters | holds specific parameters for applications |
| midevicemodel | evice model e.g., iPAQ, iDEN, or other device |

**Application Profile** (schema definition) - ApplicationProfile (LDAP implementation)

Example Structure:

```
ou=ApplicationProfile
    cn=miGuide MIDP
    cn=miFriends MIDP
    cn=miConnect MIDP
    cn=miConnectMgr MIDP
    cn=GeocodeService
    cn=RouteService
    cn=GeodecodeService
    cn=PositionService
    cn=FindNearestService
    cn=FindLocationService
```

Example of expanding an entry (e.g., cn=RouteService):

```
cn              RouteService
description     Routing J Server version 1.5.1
miappname       Routing J Server
miappparam
miapptype       SERVICE
milocality      l=US,ou=Locality, o=miaware1.com
objectclass     miapplication
```

Object Class:

| Name | Associated Schema |
|------|-------------------|
| organizationalunit | standard schema definition |

Attributes:

| Name | Description |
|------|-------------|
| ou | application container |

Object Class:

| Name | Associated Schema |
|------|-------------------|
| miprofile | miAware schema definition |

Attributes:

| Name | Description |
|------|-------------|
| miprofilename | profile identifier or name |
| description | profile description |

Object Class:

| Name | Associated Schema |
|------|-------------------|
| miapplication | miAware schema definition |

Attributes:

| Name | Description |
|------|-------------|
| miappname | application name |
| miapptype | type of application e.g., application or service |
| mideviceref | reference to the device that supports this application |
| milocality | reference to the locality where this application is available |
| miappparam | application specific configuration parameters |
| url | location where a new version of the application is available for download |
| miappreleasedate | application release date |

Cross References:

| Name | Definition | Multiple Occurrences |
|------|-----------|----------------------|
| mideviceref | points to an entry in deviceprofile | YES |
| milocality | points to an entry in locality | YES |

**Person Profile** (schema definition) - PersonProfile (LDAP implementation)

Example Structure:

```
    ☐ ou=PersonProfile
  ⊙- ☐ uid=alex
  ⊙- ☐ uid=john
```

A personal profile contains entries for a person in the enterprise PersonProfile. Example of expanding an entry (e.g., uid=alex):

| | |
|---|---|
| cn | Alex |
| description | Alex's account profile within miEnterprise |
| facsimiletelephonenumber | +01 416 267 2885 |
| givenname | Alex |
| homepostaladdress | 5502-12 Grandy, Toronto, ON, CA |
| mail | Alex_Lee@mapinfo.com |
| miaddrcity | WASHINGTON |
| miaddrcitysubdivision | |
| miaddrcountrysubdivision | DC |
| miaddrpostalcodeaddon | 1971 |
| miaddrstreet | PENNSYLVANIA AVE NW |
| mibuddyref | uid=Sameer, ou=PersonProfile, o=miaware1.com |
| mibuddyref | uid=Fred, ou=PersonProfile, o=miaware1.com |
| mibuddyref | uid=stefan, ou=PersonProfile, o=miaware1.com |
| mibuddyref | uid=Michael, ou=PersonProfile, o=miaware1.com |
| mibuddyref | uid=alex, ou=PersonProfile, o=miaware1.com |
| mipersondeviceid | 4166097780 |
| mipersondeviceid | KLM667GT |
| mipersongroupref | cn=RnD,ou=OrganizationUnit, o=miaware1.com |
| mipersonsmsaddress | |
| miposcoordinates | -77.031900 38.896300 |
| objectclass | miposition |
| objectclass | miaddress |
| objectclass | inetOrgPerson |
| objectclass | mipersonprofile |
| objectclass | person |
| sn | Lee |
| telephonenumber | +01 416 567 2345 |
| uid | alex |
| userpassword | BINARY (33b) |

A Person Profile includes account information, personal data, service provider specific data, a collection of applications installed, a list of all devices owned by a person, location information, and rules for position access control. Example structure of an expanded personal profile:

Personal Profile Element Groups:

- **Installed applications:** A list of installed applications. An entry contains installation date, references to application profile related entries (dn), and a short description.
- **Devices:** A list of owned devices. Each entry contains a reference to a device profile entry, state of device (ON/OFF/OUT OF SERVICE), and a device identifier assigned by the carrier provider.
- **Mobile location information:** A limited list of entries describing a person's position or coordinates at a given time. A maximum number of entries in a mobile location container for each person is specifed. A typical entry in mobile location specifies the position at a distinct moment.
- **Possition access control:** Contains rules controlled by a person filtering access from outside.
  PersonProfile LDAP definitions

**PersonProfile container**

Object Class:

| Name | Associated Schema |
|------|-------------------|
| organizationalunit | standard schema definition |

Attributes:

| Name | Description |
|------|-------------|
| ou | required attribute for dn of PersonProfile |
| aci | used for implementing access policy and user authentication |

Object Class:

| Name | Associated Schema |
|------|-------------------|
| groupofuniquenames | standard schema definition |

Attributes:

| Name | Description |
|---|---|
| uniquemember | keep a reference to a valid person in PersonProfile |

Cross References:

| Name | Definition | Multiple Occurrences |
|---|---|---|
| uniquemember | points to an entry in personalprofile | YES |

Object Class:

| Name | Associated Schema |
|---|---|
| miprofile | miAware schema definition |

Attributes:

| Name | Description |
|---|---|
| miprofilename | profile name in PersonProfile |

**PersonProfile LDAP Definitions**

Object Classes (account information and personal data):

| Name | Associated Schema |
|---|---|
| person | standard schema definition - generic person definition |
| inetorgperson | standard schema definition - inet person definition that extends person object |

Attributes:

| Name | Description |
|---|---|
| uid | user account identifier, must be unique in PersonProfile for this directory instance |
| userpassword | user account password |
| sn | last name |
| cn | first name |
| mail | person's email address |
| url | person's web page |
| telephonenumber | phone numbers, could be multiple |

(continued)

| Name | Description |
| --- | --- |
| facsimiletelephonenumber | person's fax number |

Object Class (miAware specific information):

| Name | Associated Schema |
| --- | --- |
| mipersonprofile | miAware schema definition - miAware person profile specific information and general information, also used for other person/contact related definitions |

Attributes:

| Name | Description |
| --- | --- |
| description | person's description |
| mibuddyref | reference to a buddy of this person in the buddy service, could be multiple |
| mideviceref | reference to device profile entries (dn) |
| mipersonappinstalldate | date of application installation |
| mipersonappref | reference to application profile entries (dn) |
| mipersondeviceid | identifier for a person's device |
| mipersonfoldref | reference to a person's folder in a locationbook container |
| mipersongroupref | reference to the organizationalunit group in which this person is member SMS address |
| mipersonsmsaddress | SMS address |
| mipersonmmsaddress | MMS address, can be a phone#, IP or email address |
| cn | common name for this person, for contact definition this is the company name |

Object Class (Position information):

| Name | Associated Schema |
| --- | --- |
| miposition | miAware schema definition - geographic location |

Attributes:

| Name | Description |
| --- | --- |
| miposcoordinates | coordinates |
| mibumiposspatialindex | spatial index |
| miposspatialreferencesystem | spatial reference system |

Object Class (Address information):

| Name | Associated Schema |
|---|---|
| miaddress | miAware schema definition - address information |

Attributes:

| Name | Description |
|---|---|
| miaddrstreet | street name |
| miaddrcitysubdivision | city subdivision |
| miaddrcity | city name |
| miaddrcountrysubdivision | country subdivision |
| miaddrcountry | country name |
| miaddrpostalcode | postal code |
| miaddrpostalcodeaddon | postal code addon |

Object Class (Position access rule):

| Name | Associated Schema |
|---|---|
| miposaccesscontrol | miAware schema definition - position access rules |

Attributes:

| Name | Description |
|---|---|
| mipacruleid | rule identifier |
| mipacaccess | access rule |
| mipacday | day of the week when the rule applies |
| mipacstarttime | start time when the rule applies |
| mipacendtime | end time when the rule applies |
| mipaccomment | comment for this rule |

Cross References:

| Name | Definition | Multiple Occurrences |
|---|---|---|
| mibuddyref | points to a PersonProfile entry that belongs to buddy | YES |
| mipersonfoldref | points to a corresponding locationbook entry | YES |
| mipersonappref | points to an ApplicationProfile entry (for apps installed by person) | YES |
| mideviceref | points to a DeviceProfile entry (for devices owned by a person) | YES |

Object Class (Position Information):

| Name | Associated Schema |
|------|-------------------|
| mimobile | miAware schema definition - mobile location entries |

Attributes:

| Name | Description |
|------|-------------|
| mimobileentries | number of entries |
| ou | organizational unit |
| description | description of entries |

Object Class (Position information):

| Name | Associated Schema |
|------|-------------------|
| mimobilelocation | miAware schema definition - mobile person locations |

Attributes:

| Name | Description |
|------|-------------|
| cn | date and time identifier of the mobile location |
| miposcoordinates | coordinates |
| miposspatialindex | spatial index |
| miposspatialreferencesystem | spatial reference system |

**[Back to Top]**

**Buddy Subscription** (schema definition) - BuddySubscription (LDAP implementation)

Contains references to persons who subscribe to a Buddy service. Example entry:

| | |
|------|------|
| ou | BuddySubscription |
| objectclass | mibuddy |
| objectclass | organizationalunit |
| mibuddyref | uid=alex, ou=PersonProfile, o=miaware1.com |
| mibuddyref | uid=john, ou=PersonProfile, o=miaware1.com |
| mibuddyref | uid=Michael, ou=PersonProfile, o=miaware1.com |
| mibuddyref | uid=Sameer, ou=PersonProfile, o=miaware1.com |
| mibuddyref | uid=Will, ou=PersonProfile, o=miaware1.com |
| mibuddyref | uid=David, au=PersonProfile, o=miaware1.com |
| mibuddyref | uid=stefan, ou=PersonProfile, o=miaware1.com |
| mibuddyref | uid=walter, ou=PersonProfile, o=miaware1.com |

(continued)

| mibuddyref | uid=demo, ou=PersonProfile, o=miaware1.com |
|---|---|
| mibuddyref | uid=Fred, ou=PersonProfile, o=miaware1.com |
| mibuddyref | uid=Ursula, ou=PersonProfile, o=miaware1.com |
| mibuddyref | uid=Timour, ou=PersonProfile, o=miaware1.com |
| description | List of individuals who subscribed for buddy service |

Object Class:

| Name | Associated Schema |
|---|---|
| organizationalunitstandard | schema definition |

Object Class:

| Name | Associated Schema |
|---|---|
| mibuddy | miAware schema definition |

Attribute:

| Name | Description |
|---|---|
| mibuddyref | reference to a PersonProfile entry (dn) corresponding to a buddy |

Cross Reference:

| Name | Definition | Multiple Occurrences |
|---|---|---|
| mibuddyref | points to a corresponding dn in a PersonProfile | YES |

**[Back to Top]**

**Location Book** (schema definition) - LocationBook (LDAP implementation)

Contains multiple folders identified by a person's account unique identifier. For each person, a location book profile may contain multiple folders that can be defined, populated, and updated by its owner. Inside each folder a person can store one or more contacts (individuals or companies). Example structure of an expanded location book:

```
ou=LocationBook
  cn=john
  cn=alex
      cn=Sport
          micontactid=Raptors 993465
      cn=News
      cn=Hobbies
  cn=Family
```

Example of an expanded personal account (e.g., cn=alex):

| cn | alex |
|---|---|
| description | Alex's personal books. contains manyfolders |
| objectclass | milocationbook |
| uid | alex |

Example of an expanded folder (e.g., cn=sports):

| cn | Sport |
|---|---|
| description | 1st folder of alex |
| mifolderid | Sport |
| objectclass | mifolder |

Example of an expanded folder entry (e.g., cn=Raptors):

| miaddrcitysubdivision | |
|---|---|
| facsimiletelephonenumber | +01 416 267 2885 |
| telephonenumber | +01 416 567 2345 |
| miposcoordinates | -77.033600 38.901400 |
| miaddrstreet | 10 Town St |
| miaddrpostalcode | 10005 |
| miaddrpostalcodeaddon | 1971 |
| miaddrcountry | CA |
| sn | NBATeam |
| miaddrcountrysubdivision | ON |
| micontactid | Raptors 993465 |
| description | Raptors entry on Sport folder of Alex |
| miaddrcity | Toronto |
| cn | Toronto Raptors |
| objectclass | inetorgperson |
| objectclass | miaddress |
| objectclass | micontact |
| objectclass | miposition |
| mail | raptors@miaware1.com |
| url | www.raptors.com |

Object Class:

| Name | Associated Schema |
|------|-------------------|
| micontact | miAware schema definition |

Attributes:

| Name | Description |
|------|-------------|
| micontactid | unique identifier for a contact in a folder |
| description | contact description |

**[Back to Top]**

**Organizational Unit** (schema definition) - OrganizationalUnit (LDAP implementation)

An OrganizationalUnit contains multiple groups that carry references to a person's entry in a PersonProfile. A person may be a member in multiple groups. All object class and attribute definitions are LDAP schema default. Each group contains references (dn) for a person that belongs to it. Example Structure:

```
ou=OrganizationUnit
   cn=QA
   cn=RnD
   cn=Sales
```

Example of an expended entry (e.g., cn=QA):

| | |
|---|---|
| cn | QA |
| description | QA group of persons |
| mipersonreference | uid=Fred, ou=PersonProfile, o=miaware1.com |
| mipersonreference | uid=David, ou=PersonProfile, o=miaware1.com |
| mipersonreference | uid=walter, ou=PersonProfile, o=miaware1.com |
| mipersonreference | uid=Will, ou=PersonProfile, o=miaware1.com |
| mipersonreference | uid=Michael, ou=PersonProfile, o=miaware1.com |
| mipersonreference | uid=Ursula,ou=PersonProfile,o=miaware1.com |
| objectclass | groupofperson |

Cross Reference:

| Name | Definition | Multiple Occurrences |
|------|-----------|----------------------|
| mipersonreference | points to a PersonProfile dn | YES |

**[Back to Top]**

**Point Of Interest** (schema definition) - POI (LDAP implementation)

A Point of Interest group is divided into four levels: themes, groups, categories, and subcategories, following a hierarchical approach. Each level is identified by the mipoileveltype attribute. All definitions in this profile are miAware specific. Example structure of an expanded POI:

Example theme entry:

| cn | T000001 |
|---|---|
| description | Business Traveler |
| milocality | i=US,ou=Locality, o=miaware1.com |
| mipoialias | Business Traveler |
| mipoicode | T000001 |
| mipoileveltype | Theme |
| mipoipriority | 1 |
| objectclass | mipointofinterest |

Example group entry:

| cn | G000001 |
|---|---|
| description | Transportation |
| milocality | I=US, ou=Locality, o=miaware1.com |
| mipoialias | Transportation |
| mipoicode | G000001 |
| mipoileveltype | Group |
| mipoipriority | 13 |
| objectclass | mipointofinterest |

Example category entry:

| cn | C024640 |
|---|---|
| description | Auto Rentals |
| milocality | I=US, ou=Locality, o=miaware1.com |
| mipoialias | Auto Rentals |
| mipoicode | C024640 |
| mipoileveltype | Category |
| mipoipriority | 1 |
| objectclass | mipointofinterest |

Object Class:

**Name Associated Schema** mipointofinterest miAware schema definition

Attributes:

| Name | Description |
|------|-------------|
| milocality | reference to a locality in localityprofile. It specifies which geographic region this poi element belongs to |
| mipoicode | poi code, unique in the poiprofile |
| mipoileveltype | level type classification (theme, group, category, subcategory) |
| cn | poi identifier |
| description | poi entry description |
| micontentmetaref | reference to content metadata profile. For future use |
| mipoialias | poi alias |
| mipoipriority | poi priority, sorting criteria defined within the level where this entry belongs |
| mipoicounter | counts the access of a category to show "Top 10 categories" |
| uid | identifiers corresponding to persons who have selected this poi |

Cross References:

| Name | Definition | Multiple Occurrences |
|------|------------|----------------------|
| milocality | points to a locality dn | YES |

**Map Profile** (schema definition) - MapProfile (LDAP implementation)

Stores enterprise profile data. This profile contains geographic information organized by locality, region type, population density type, and devices. Example Structure:

```
ou=MapProfile
    cn=USMap
    cn=TorontoMap
    cn=CanadaMap
```

Example of an expanded entry (e.g., cn=USMap):

```
cn              USMap
description     first defined map profile - US
mideviceref     cn=iDEN,ou=DeviceProfile, o=miaware1.com
mideviceref     cn=iPAQ,ou=DeviceProfile, o=miaware1.com
milocality      l=US,ou=Locality, o=miaware1.com
mimapdensitytype URBAN
mimapdensityval  55
mimapdistunit   km
mimapmdf        http://www.milocate.com/mdfs/two.mdf
mimapradius     500
mimapregiontype REGION
mimapscale      15000
objectclass     mimap
```

Object Class:

| Name | Associated Schema |
|------|-------------------|
| mimap | miAware schema definition |
| Attributes: | |

| Name | Description |
|------|-------------|
| milocality | locality covered by this map |
| mimapdensitytype | population density type |
| mimapdensitycal | population density value |
| mimapdestunit | distance unit system |
| mimapmdf | url of mdf file |
| mimapmdfref | reference to a thirdparty map profile (e.g., MapXtend MapProfile). This reference turns points to an actual Map Definition File. |
| mimapradius | radius used to reference the image |
| mimapregiontype | region type: urban, rural, or industrial |
| mimapscale | map rendering scale |
| cn | map profile identifier |
| description | description of map profile |
| mideviceref | reference of the device(s) that support the map described by this profile |

Cross References:

| Name | Definition | Multiple Occurrences |
|------|-----------|---------------------|
| mideviceref | points to a device profile entry | YES |
| milocality | points to a locality entry | YES |

Customer Profile (schema definition) - CustomerProfile (LDAP implementation)

Stores an enterprise's customer information. Under each CustomerProfile entry, multiple WorkOrders can exist.

Example structure of an expanded customer profile:

```
☐ ou=CustomerProfile
  ⊙ ☐ micustomerid=Regency Cleaners 12432
  ⊙ ☐ micustomerid=Comfy Laundromat 2723
        ☐ miworkorderid=1
        ☐ miworkorderid=2
  ⊙ ☐ micustomerid=Franklin Valet 5123
        ☐ micustomerid=Columbia Plaza Valet 10987
        ☐ micustomerid=Aarons Cleaners 9854
        ☐ micustomerid=Green Thumb Florist 8935
  ⊙ ☐ micustomerid=The Main Stem 11324
        ☐ micustomerid=Ophelias Flowers 7903
        ☐ micustomerid=Nursery Florals 12903
```

Example of a customer entry:

| | |
|---|---|
| cn | Comfy Laundromat |
| description | Comfy Laundromat is our best customer |
| miaddrcity | Washington |
| miaddrcountry | US |
| miaddrcountrysubdivision | DC |
| miaddrpostalcode | 20011 |
| miaddrpostalcodeaddon | 4966 |
| miaddrstreet | 333 Hawaii Ave NE |
| micustomerid | Comfy Laundromat 2723 |
| miposcoordinates | -77.0009 38.9421 |
| objectclass | micustomer |
| objectclass | miaddress |
| objectclass | inetorgperson |
| sn | |
| telephonenumber | +01 202 269 6152 |

Example of a workorder entry:

| | |
|---|---|
| objectclass | miwvorkorder |
| miworksutamitdate | 2001 6 14 14 15 23 |
| miworkorderid | 1 |
| miworkmeetdate | 2001 7 15 19 11 32 |
| miworkactivity | Pick-up DL 327 |
| mipersonreference | uid=will, ou=PersonProfile, o=miaware1.com |
| description | Pick-up dirty laundry at closing time |

Object Classes:

| Name | Associated Schema |
|---|---|
| inetorgperson | standard schema definition |

Attributes:

| Name | Description |
|---|---|
| telephonenumber | customer phone number |
| facsimiletelephonenumber | customer fax number |
| mail | customer email address |
| cn | first name of the individual or company |
| sn | last name of the individual or company |
| description | customer description |

Object Classes:

| Name | Associated Schema |
|---|---|
| micustomer | miAware schema definition |

Attributes:

| Name | Description |
|---|---|
| micustomerid | customer identifier |
| mipersonsmsaddress | customer sms address |
| miposcoordinates | coordinates of customer |
| miposspatialindex | spatial index |
| miposspatialreferencesystem | spatial reference system |

Object Class:

| Name | Associated Schema |
|---|---|
| miworkorder | miAware schema definition |

Attributes:

| Name | Description |
|---|---|
| mipersonreference | personal profile linked to the customer |
| miworkactivity | type of activity |

(continued)

| Name | Description |
|------|-------------|
| miworkorderid | order identifier |
| miworksubmitdate | date when the order was placed |
| description | work order description |
| miestimatedtime | estimated time taken to service a work order. The time format is YYYY MM DD HH MM |
| miworkcompletedate | date when the order was completed |
| miworkmeetdate | meet date for the work order |

Cross References:

| Name | Definition | Multiple Occurrences |
|------|-----------|---------------------|
| mipersonreference | points to a PersonProfile dn | YES |

[Back to Top]

**Symbology** (schema definition) - Symbology (LDAP implementation)

Contains symbology patterns of type marker, strokes and fills used to create a map image. Example structure of an expanded symbology:

Example of a marker entry:

| | |
|------|-------------|
| cn | Marker1 |
| description | Family Restaurant |
| misymbolchar | 33 |
| misymbolcolor | 16711680 |
| misymbolfont | Map S_ymbols Unicode |
| misymbolsize | 24 |
| objectclass | misymbology |

Example of a stroke entry:

| cn | Stroke1 |
|---|---|
| description | Highway |
| misymbolcolor | 65280 |
| misymbolwidth | 12 |
| objectclass | misymbology |

Example of a fill entry:

| cn | Fill1 |
|---|---|
| description | Flood Zone |
| misymbolcolor | 65280 |
| misymbolopacity | 0.45 |
| objectclass | misymbology |

Object Class:

| Name | Associated Schema |
|---|---|
| misymbology | miAware schema definition |

Attributes:

| Name | Description |
|---|---|
| misymbolchar | font character code |
| misymbolcolor | stroke or marker code |
| misymbolfont | marker font type |
| misymbolopacity | fill opacity |
| misymbolsize | font size |
| misymboltype | type of symbol: marker, stroke, or fill |
| mistrokeref | stroke entry reference for a fill |
| misymbolwidth | stroke width |
| cn | symbol element identifier |
| description | symbol element description |

**miAware Object Class Definitions**

**1. Introduction**

**2. Object Definitions**

**Introduction**

An entry can belong to more than one object class. For example, the entry for a person is defined by the person object class, but may also be defined by attributes in the inetOrgPerson, groupOfNames, and organization object classes.

The server's object class structure (schema) determines the required and allowed attributes for a particular entry. For example, a person entry may be defined by the following object class structure:

- objectClass: top
- objectClass: person
- objectClass: organizationalPerson
- objectClass: inetOrgperson

In the above structure, the inetOrgperson object class should not be placed on an entry until the person and organizationalPerson object classes have been defined.

[Back to Top]

**Objects Definitions**

The following object structure definitions list the object class (in bold), the oid (object identifier), the hierarchal level (superior top), and the required/allowed attributes.

| | | |
|---|---|---|
| **miprofile** | **milocationbook** | **mimobile** |
| **miposition** | **micontact** | **mimobilelocation** |
| **midevice** | **micoordinates** | **groupofperson** |
| **miposaccesscontrol** | **miaddress** | **miperson profile** |
| **mifolder** | **mibuddy** | **miapplication** |
| **misymbology** | **miaware** | **micustomer** |
| **micontentmetadata** | **miworkorder** | **mimap** |
| **midatasource** | **mipersondevice** | **mipointofinterest** |
| **miprofile** | | |

oid miprofile-oid
superior top
requires

- miprofilename

**miposition**

oid miposition-oid
superior top
allows

- miposcoordinates
- miposspatialindex
- miposspatialreferencesystem

**midevice**

oid midevice-oid
superior top

requires

- midevicetypeid

allows

  • cn
  • description
  • midevicecolormodel
  • mideviceimageformat
  • midevicemodel
  • mideviceresolution
  • mideviceparameters

**miposaccesscontrol**

oid miposaccesscontrol-oid
superior top
requires

- mipacaccess
- mipacruleid

allows

- cn
- description
- mipaccomment
- mipacday
- mipacendtime
- mipacstarttime

**mifolder**

oid mifolder-oid
superior top
requires

- mifolderid

allows

- cn
- description

**misymbology**

oid misymbology-oid
superior top
allows

- cn

- description
- mistrokeref
- misymbolchar
- misymbolcolor
- misymbolfont
- misymbolopacity
- misymbolsize
- misymboltype
- misymbolwidth

**micontentmetadata**

oid micontentmetadata-oid
superior top
requires

- description
- midskeycolumn
- midsreturncolumn
- midstablename

allows

- cn
- midsdatasourceref
- midsisspatial
- midskeycolumnpos
- midsuserquotes

**midatasource**

oid midatasource-oid
superior top
requires

- midsdbhost
- midsdbname
- midsdbpasswd
- midsdbport
- midsdbuser
- midsdrvname
- midsdrvprovider
- midsdrvtype
- midsid
- midstype

allows

- cn
- description

**milocationbook**

oid milocationbook-oid
superior top
allows

- cn
- description
- uid

**micontact**

oid micontact-oid
superior top
requires

- micontactid

allows

- description

**micoordinates**

oid micoordinates-oid
superior top
allows

- mixycoordinates

**miaddress**

oid miaddress-oid
superior top
allows

- mail
- miaddrcity
- miaddrcitysubdivision
- miaddrcountry
- miaddrcountrysubdivision
- miaddrpostalcode
- miaddrpostalcodeaddon
- miaddrstreet
- url

**mibuddy**

oid mibuddy-oid
superior top
allows

- mibuddyref

**miaware**

```
oid miaware-oid
superior top
requires
```

- miawareversion

**miworkorder**

```
oid miworkorder-oid
superior top
requires
```

- miworkactivity
- miworkorderid
- miworksubmitdate

allows

- description
- mipersonreference
- miworkcompletedate
- miworkmeetdate
- miestimatedtime

**mipersondevice**

```
oid mipersondevice-oid
superior top
requires
```

- mideviceref
- mipersondeviceid
- mipersondevicestate

**mimobile**

```
oid mimobile-oid
superior top
requires
```

- mimobileentries

ou

- allows
- description

**mimobilelocation**

```
oid mimobilelocation-oid
superior top
requires
```

- • cn
- • miposcoordinates

```
allows
```

- • miposspatialindex
- • miposspatialreferencesystem

**groupofperson**

```
oid groupofperson-oid
superior top
requires
```

- • cn

```
allows
```

- • description
- • mipersonreference

**mipersonprofile**

```
oid mipersonprofile-oid
superior top
allows
```

- • cn
- • description
- • mibuddyref
- • mideviceref
- • mipersonappinstalldate
- • mipersonappref
- • mipersondeviceid
- • mipersonfoldref
- • mipersongroupref
- • mipersonsmsaddress

**miapplication**

```
oid miapplication-oid
superior top
requires
```

- miappname
- miapptype

allows

- cn
- description
- miappdata
- miappparam
- miappreleasedate
- mideviceref
- milocality
- url

**micustomer**

oid micustomer-oid
superior top
requires

- micustomerid

allows

- mipersonsmsaddress
- miposcoordinates
- miposspatialindex
- miposspatialreferencesystem

mimap

oid mimap-oid
superior top
requires

- milocality
- mimapdensitytype
- mimapdensityval
- mimapdistunit
- mimapmdf
- mimapradius
- mimapregiontype
- mimapscale

allows

- cn
- description
- mideviceref
- mimapmdfref

**mipointofinterest**

oid mipointofinterest-oid

superior top
requires

- mipoileveltype

allows

- cn
- description
- micontentmetaref
- milocality
- mipoialias
- mipoicode
- mipoipriority
- uid

[Back to Top]

**miAware Attribute Definitions**

In LDAP there are two types of attributes: required and allowed. Required attributes must be present in an entry, while allowed attributes are optional in an entry. Each attribute has a corresponding syntax definition. The syntax definition describes the type of information the attribute contains. The syntax of the attribute is used by LDAP to perform various sorting and matching operations.

Syntax Abbreviations

- cis - case ignore string
- ces - case exact string
- dn - distinguished name
- int - integer
- single - only one occurrence per entry is allowed

| Attribute Name | Object-Identifier | Syntax |
|---|---|---|
| miaddrcity | miaddrcity-oid | cis single |
| miaddrcitysubdivision | miaddrcitysubdivision-oid | cis single |
| miaddrcountry | miaddrcountry-oid | cis single |
| miaddrcountrysubdivision | miaddrcountrysubdivision-oid | cis single |
| miaddrpostalcode | miaddrpostalcode-oid | cis single |
| miaddrpostalcodeaddon | miaddrpostalcodeaddon-oid | cis single |
| miaddrstreet | miaddrstreet-oid | cis single |
| miappdata | miappdata-oid | cis single |
| miappname | miappname-oid | ces single |
| miappparam | miappparam-oid | cis |
| miappreleasedate | miappreleasedate-oid | cis single |
| miapptype | miapptype-oid | cis single |
| miawareversion | miawareversion-oid | cis single |
| mibuddyref | mibuddyref-oid | dn |

(continued)

| Attribute Name | Object-Identifier | Syntax |
| --- | --- | --- |
| micontactid | micontactid-oid | ces single |
| micontentmetaref | micontentmetaref-oid | dn |
| micustomerid | micustomerid-oid | ces single |
| midevicecolormodel | midevicecolormodel-oid | ces single |
| mideviceimageformat | mideviceimageformat-oid | ces |
| midevicemodel | midevicemodel-oid | cis single |
| mideviceparameters | mideviceparameters-oid | cis |
| mideviceref | mideviceref-oid | dn |
| mideviceresolution | mideviceresolution-oid | cis single |
| midevicetypeid | midevicetypeid-oid | ces single |
| midevicetypeidref | midevicetypeidref-oid | dn |
| midsdatasourceref | midsdatasourceref-oid | dn |
| midsdbhost | midsDBHost-oid | cis single |
| midsdbname | midsDBName-oid | cis single |
| midsdbpasswd | midsDBPasswd-oid | cis single |
| midsdbport | midsDBPort-oid | ces single |
| midsdbuser | midsDBUser-oid | cis single |
| midsdrvname | midsDrvName-oid | cis single |
| midsdrvprovider | midsDrvProvider-oid | cis single |
| midsdrvtype | midsDrvType-oid | ces single |
| midsid | midsID-oid | ces single |
| midsisspatial | midsIsSpatial-oid | ces single |
| midskeycolumn | midsKeyColumn-oid | cis |
| midskeycolumnpos | midsKeyColumnPos-oid | ces single |
| midsreturncolumn | midsReturnColumn-oid | cis |
| midstablename | midstablename-oid | ces |
| midstype | midsType-oid | ces single |
| midsuserquotes | midsUserQuotes-oid | ces single |
| miestimatedtime | miestimatedtime-oid | cis single |
| mifolderid | mifolderid-oid | cis |
| mifoldername | mifoldername-oid | cis |
| milocality | milocality-oid | dn |
| mimapdensitytype | mimapdensitytype-oid | ces single |
| mimapdensityval | mimapdensityval-oid | ces single |
| mimapdistunit | mimapdistunit-oid | ces single |
| mimapfill | mimapfill-oid | dn |
| mimapmarker | mimapmarker-oid | on |
| mimapmdf | mimapmdf-oid | cis single |
| mimapmdfref | mimapmdfref-oid | cis single |

(continued)

| Attribute Name | Object-Identifier | Syntax |
|---|---|---|
| mimapradius | mimapradius-oid | ces single |
| mimapregiontype | mimapregiontype-oid | ces single |
| mimapscale | mimapscale-oid | ces single |
| mimapstroke | mimapstroke-oid | dn |
| mimobileentries | mimobileentries-oid | int single |
| mipacaccess | mipacaccess-oid | ces single |
| mipaccomment | mipaccomment-oid | cis single |
| mipacday | mipacday-oid | ces single |
| mipacendtime | mipacendtime-oid | cis single |
| mipacruleid | mipacruleid-oid | ces single |
| mipacstarttime | mipacstarttime-oid | cis single |
| mipersonappinstalldate | mipersonappinstalldate-oid | cis single |
| mipersonappref | mipersonappref-oid | on |
| mipersondeviceid | mipersondeviceid-oid | ces |
| mipersondevicestate | mipersondevicestate-oid | cis single |
| mipersondevref | mipersondevref-oid | dn |
| mipersonfoldref | mipersonfoldref-oid | dn |
| mipersongroupref | mipersongroupref-oid | dn |
| mipersonreference | mipersonreference-oid | dn |
| mipersonsmsaddress | mipersonsmsaddress-oid | cis single |
| mipoialias | mipoialias-ovid | cis single |
| mipoicode | mipoicode-oid | ces single |
| mipoidatasource | mipoidatasource-oid | cis single |
| mipoileveltype | mipoileveltype-oid | cis single |
| mipoilocality | mipoilocality-oid | cis single |
| mipoipriority | mipoipriority-oid | cis single |
| miposcoordinates | miposcoordinates-oid | cis |
| miposspatialindex | miposspatialindex-oid | int single |
| miposspatialreferencesystem | miposspatialreferencesystem-oid | ces single |
| miprofilename | miprofilename-oid | cis |
| misymbolchar | misymbolchar-oid | cis single |
| misymbolcolor | misymbolcolor-oid | cis single |
| misymbolfont | misymbolfont-oid | cis single |
| misymbolopacity | misymbolopacity-oid | cis single |
| misymbolsize | misymbolsize-oid | int single |
| misymboltype | misymboltype-oid | ces single |
| misymbolwidth | misymbolwidth-oid | int single |
| miworkactivity | miworkactivity-oid | ces single |

(continued)

| Attribute Name | Object-Identifier | Syntax |
|---|---|---|
| miworkcompletedate | miworkcompletedate-oid | cis single |
| miworkmeetdate | miworkmeetdate-oid | cis single |
| miworkorderid | miworkorderid-oid | ces single |
| miworksubmitdate | miworksubmitdate-oid | cis single |
| mixycoordinates | mixycoordinates-oid | cis |
| mistrokeref | mistrokeref-oid | dn single |

**miAware Attribute Definitions**

In LDAP there are two types of attributes: required and allowed. Required attributes must be present in an entry, while allowed attributes are optional in an entry. Each attribute has a corresponding syntax definition. The syntax definition describes the type of information the attribute contains. The syntax of the attribute is used by LDAP to perform various sorting and matching operations.

Syntax Abbreviations

- cis - case ignore string
- ces - case exact string
- dn - distinguished name
- int - integer
- single - only one occurrence per entry is allowed

| Attribute Name | Object-Identifier | Syntax |
|---|---|---|
| miaddrcity | miaddrcity-oid | cis single |
| miaddrcitysubdivision | miaddrcitysubdivision-oid | cis single |
| miaddrcountry | miaddrcountry-oid | cis single |
| miaddrcountrysubdivision | miaddrcountrysubdivision-oid | cis single |
| miaddrpostalcode | miaddrpostalcode-oid | cis single |
| miaddrpostalcodeaddon | miaddrpostalcodeaddon-oid | cis single |
| miaddrstreet | miaddrstreet-oid | cis single |
| miappdata | miappdata-oid | cis single |
| miappname | miappname-oid | ces single |
| miappparam | miappparam-oid | cis |
| miappreleasedate | miappreleasedate-oid | cis single |
| miapptype | miapptype-oid | cis single |
| miawareversion | miawareversion-oid | cis single |
| mibuddyref | mibuddyref-oid | dn |
| micontactid | micontactid-oid | ces single |
| micontentmetaref | micontentmetaref-oid | dn |
| micustomerid | micustomerid-oid | ces single |
| midevicecolormodel | midevicecolormodel-oid | ces single |

(continued)

| Attribute Name | Object-Identifier | Syntax |
| --- | --- | --- |
| mideviceimageformat | mideviceimageformat-oid | ces |
| midevicemodel | midevicemodel-oid | cis single |
| mideviceparameters | mideviceparameters-oid | cis |
| mideviceref | mideviceref-oid | dn |
| mideviceresolution | mideviceresolution-oid | cis single |
| midevicetypeid | midevicetypeid-oid | ces single |
| midevicetypeidref | midevicetypeidref-oid | dn |
| midsdatasourceref | midsdatasourceref-oid | dn |
| midsdbhost | midsDBHost-oid | cis single |
| midsdbname | midsDBName-oid | cis single |
| midsdbpasswd | midsDBPasswd-oid | cis single |
| midsdbport | midsDBPort-oid | ces single |
| midsdbuser | midsDBUser-oid | cis single |
| midsdrvname | midsDrvName-oid | cis single |
| midsdrvprovider | midsDrvProvider-oid | cis single |
| midsdrvtype | midsDrvType-oid | ces single |
| midsid | midsID-oid | ces single |
| midsisspatial | midsIsSpatial-oid | ces single |
| midskeycolumn | midsKeyColumn-oid | cis |
| midskeycolumnpos | midsKeyColumnPos-oid | ces single |
| midsreturncolumn | midsReturnColumn-oid | cis |
| midstablename | midstablename-oid | ces |
| midstype | midsType-oid | ces single |
| midsuserquotes | midsUserQuotes-oid | ces single |
| miestimatedtime | miestimatedtime-oid | cis single |
| mifolderid | mifolderid-oid | cis |
| mifoldemame | mifoldername-oid | cis |
| milocality | milocality-oid | dn |
| mimapdensitytype | mimapdensitytype-oid | ces single |
| mimapdensityval | mimapdensityval-oid | ces single |
| mimapdistunit | mimapdistunit-oid | ces single |
| mimapfill | mimapfill-oid | dn |
| mimapmarker | mimapmarker-oid | dn |
| mimapmdf | mimapmdf-oid | cis single |
| mimapmdfref | mimapmdfref-oid | cis single |
| mimapradius | mimapradius-oid | ces single |
| mimapregiontype | mimapregiontype-oid | ces single |
| mimapscale | mimapscale-oid | ces single |
| mimapstroke | mimapstroke-oid | dn |

(continued)

| Attribute Name | Object-Identifier | Syntax |
|---|---|---|
| mimobileentries | mimobileentries-oid | int single |
| mipacaccess | mipacaccess-oid | ces single |
| mipaccomment | mipaccomment-oid | cis single |
| mipacday | mipacday-oid | ces single |
| mipacendtime | mipacendtime-oid | cis single |
| mipacruleid | mipacruleid-oid | ces single |
| mipacstarttime | mipacstarttime-oid | cis single |
| mipersonappinstalldate | mipersonappinstalldate-oid | cis single |
| mipersonappref | mipersonappref-oid | dn |
| mipersondeviceid | mipersondeviceid-oid | ces |
| mipersondevicestate | mipersondevicestate-oid | cis single |
| mipersondevref | mipersondevref-oid | dn |
| mipersonfoldref | mipersonfoldref-oid | dn |
| mipersongroupref | mipersongroupref-oid | dn |
| mipersonreference | mipersonreference-oid | dn |
| mipersonsmsaddress | mipersonsmsaddress-oid | cis single |
| mipoialias | mipoialias-oid | cis single |
| mipoicode | mipoicode-oid | ces single |
| mipoidatasource | mipoidatasource-oid | cis single |
| mipoileveltype | mipoileveltype-oid | cis single |
| mipoilocality | mipoilocality-oid | cis single |
| mipoipriority | mipoipriority-oid | cis single |
| miposcoordinates | miposcoordinates-oid | cis |
| miposspatialindex | miposspatialindex-oid | int single |
| miposspatialreferencesystem | miposspatialreferencesystem-oid | ces single |
| miprofilename | miprofilename-oid | cis |
| misymbolchar | misymbolchar-oid | cis single |
| misymbolcolor | misymbolcolor-oid | cis single |
| misymbolfont | misymbolfont-oid | cis single |
| misymbolopacity | misymbolopacity-oid | cis single |
| misymbolsize | misymbolsize-oid | int single |
| misymboltype | misymboltype-oid | ces single |
| misymbolwidth | misymbolwidth-oid | int single |
| miworkactivity | miworkactivity-oid | ces single |
| miworkcompletedate | miworkcompletedate-oid | cis single |
| miworkmeetdate | miworkmeetdate-oid | cis single |
| miworkorderid | miworkorderid-oid | ces single |
| miworksubmitdate | miworksubmitdate-oid | cis single |
| mixycoordinates | mixycoordinates-oid | cis |

(continued)

| Attribute Name | Object-Identifier | Syntax |
|---|---|---|
| mistrokeref | mistrokeref-oid | dn single |

**miAware Help Resources**

This section describes what to do and who to contact if you encounter problems working with miAware. This sections also provides instructions on how to navigate in the miAware documentation package and what each section entails. Click on one of the links below for more information:

1. **Support to Maintenance**
2. **Navigation**
3. **MapInfo miAware Copyright**

**Support & Maintenance**

**Enterprise Support Team**

MapInfo's Enterprise Support team prides itself in it's ability to provide timely, expert assistance for MapInfo software users and developers. The team assists users with the installation and implementation of MapInfo software. In addition, the team also handles the logging of enhancement requests and bugs submitted by our users.

The Enterprise Support team is a group of highly skilled analysts/programmers who specialize in solving your development issues related to MapInfo software. The group provides technical support and guidance for application developers. If you are an independent developer, MapInfo Partner, or a systems integrator, you can obtain a support agreement to meet your needs. Support is provided via phone, fax, and E-mail.

With experience and thorough knowledge of MapInfo technology, the Enterprise Support team can improve your development productivity. Enterprise support specialists work closely with MapInfo's software development teams to answer questions, suggest work-arounds, provide coding examples, and offer product instruction when you need it most.

**How To Contact Us For Assistance**

If you encounter problems working with your MapInfo product, our technical support specialists can help. Technical support for MapInfo products includes referrals to documentation, assistance with error messages and suggestions for causes of error messages.

Before you call:

- Make sure that you have your product serial number available. The serial number should be located on a sticker on the product package.
- Check the manual and online help for reference to the problem that you are having.
- Have the software and files opened so that the MapInfo representative can quickly evaluate your problem.
- If you are calling in regard to an error message, write down the specific error message.

**MapInfo Corporate Web Site**

http://vwvw.mapinfo.com.

**MapInfo Corporate Headquarters**

Contact us at the MapInfo Corporate Headquarters, which is located in Albany, New York, in one of the following ways. Please note that all of the following phone numbers are in the United States and that the 800 numbers only work in Canada and the U.S.

| | |
|---|---|
| Voice: | 518.285.6000 |
| Fax: | 518.285.6060 |
| Sales Information Order Hotline: | 1.800.327.8627 |

(continued)

| | |
|---|---|
| U.S. Federal Sales Hotline: | 1.800.619.2333 |
| Sales Fax: | 518.285.6070 |
| E-mail: | sales@mapinfo.com |
| Technical Support Hotline: | 518.285.7283 |
| Technical Support Fax: | 518.285.6080 |
| E-mail: | techsupport@mapinfo.com |

**SpatialWare Division**

| | |
|---|---|
| Voice: | 714.460.6427 |
| Fax: | 714.460.6428 |
| E-mail: | info@spatialware.com |
| SpatialWare Support: | swsupport@mapinfo.com |

**MapInfo Global Offices**

For an up-to-date list of MapInfo's worldwide offices, and the office nearest to you, please refer to the MapInfo web site http://www.mapinfo.com.

[Back to Top]

Navigation

The navigation bar displayed at all times at the top of the miAware documentation is an image map. Click on any of the headings to go to that topic. When you click on the main headings (e.g., Product Guide, XMLAPI Reference, Administration, or Java API) either a HTML document with a left side navigation bar will display or a PDF file will be loaded into the HTML frame.
The Table of Contents displayed on the left-hand side within the browser window is an image map. Click on any of the headings to go to that topic. Use the Back button from your web browser to return to a previously displayed topic.
Wherever appropriate, links have been added to the text so that you can easily find related information for a particular subject.
This guide was created for online use. It optimizes online viewing through the use of links and frames. All subjects are accessible from the table of contents (located to the left). Please view this documentation in one of the recommended browsers, either Netscape Navigator 4.5, Netscape Communicator 4.5, or Microsoft Internet Explorer 5.0 or higher.

**The Navigation Bar**

- **Product Guide -** The product guide gives an overview of miAware. The guide includes descriptions of the documents included with miAware, description of the miAware deployment package, information on the demos included with miAware, and a description of the architecture and core components.
- **Administration** - The administration guide gives detailed descriptions of how to configure and maintain both the miAware server and services. There are also detailed instructions for LDAP installation and setup procedures.
- **miAware XML API -** The XML API reference guide gives detailed descriptions of the core service XML elements and attributes. This includes descriptions of the XML header and request and response document elements.
- **Java API** - This JAVA documentation gives detailed descriptions of all Java classes for client, commom, profile, and service specific classes.

## Printing

This is an electronic document that is intended for online use. To print what is currently displayed in your browser, click your cursor within the **frame** that you wish to print to ensure that it is active and select Print from the main menu of your browser.

## Searching

To search within the current file (the file currently open in your browser) use the **Find** option from the main menu of your browser. This option will only search within the currently displayed file.

## MapInfo miAware Copyright

Information in this document is subject to change without notice and does not represent a commitment on the part of the vendor or its representatives. No part of this document may be reproduced or transmitted in any form or by any means, electronic or mechanical, including photocopying, without the written permission of MapInfo Corporation, One Global View, Troy, New York 12180-8399,

© 1992–2002 MapInfo Corporation. All rights reserved.

MapInfo Help © 1992–2002 MapInfo Corporation. All rights reserved,

MapInfo, MapInfo Professional, MapInfo logo, MapInfo GIS Extension, MapX, MapXsite, MapXtend, miAware, and SpatialWare are registered trademarks, and MapInfo MapXtreme, StreetPro, and TargetPro are trademarks of MapInfo Corporation in the United States.

Contact MapInfo Corporation on the Internet at: http://www.mapinfo.com.

| MapInfo Corporate Headquarters: | MapInfo Europe Headquarters: | Germany: |
| --- | --- | --- |
| Voice: (518) 285-6000 | Voice: +44 (0)1753.848.200 | Voice: +49 (0)6142-203-100 |
| Fax: (518) 285-6060 | Fax: +44 (0)1753.621.140 | Fax: +49 (0)6142-203-444 |
| Sales Info Hotline: (800) 327-8627 | email: uk@mapinfo.com | email:germany@mapinfo.com |
| US Government Sales: (800) 619-2333 | | |
| Technical Support Hotline: (518) 285-7283 | Toll-free telephone support is available in the U.S. and Canada. Contact your | |
| Technical Support Fax: (518) 285-6080 | MapInfo sales representative for details. For international customers, please use the Technical Support Fax number. | |

HyperHelp copyright© Bristol Technology Inc. 1991, 1992, 1993

EHelp® is a registered trademark of Foundation Solutions, Inc., ©copyright, 1992, 1993,

miAware Support e-mail: techsupport@mapinfo.com

Products named herein may be trademarks of their respective manufactures and are hereby recognized, Trademarked names are used editorially, to the benefit of the trademark owner, with no intent to infringe on the Trademark.

This documentation reflects the contributions of almost all of the women and men who work for MapInfo Corporation. It was specifically produced by Michael Berner, with the help of Marie Costa, Colleen Cox, Juliette Funiciello, Lindsay Guttshall, Ed McElroy, Max Morton, Gayle Patenaude, Dianne Ritter, Larry Strianese, Anne Thorne, and Ursula Toelke. These members of the Documentation Department are indebted to MapInfo's Quality Assurance Department and, of course, to all the members of the Product Development (Toronto division) team that engineered this project.

MapInfo welcomes your comments and suggestions.

miAware v2.0

July 2002

**Claims**

1.  A method for providing location based services, the method comprising:

    service modules registering with a service manager (205), and publishing the services to a service catalogue (225), where they may be discovered by client requests directed to the service catalogue (225);
    receiving a client request (200) for a service in a message encoded in a markup language at a first server;
    directing the request (200) to the service manager (205), which is in contact with the service catalogue (225) comprising a description of various services available via the service manager (205);
    authenticating the client request (200);
    determining, by accessing the service catalogue (225), whether the service is available at the service modules being arranged for providing services in response to different types of client requests;
    forwarding an error message in response to determining that the service is not available at the service modules;
    forwarding the client request (200) to a service module in response to determining that the service is available at the service module; and
    sending a result received from the service module in accordance with the received client request (200) to a client device.

2.  The method of claim 1, wherein the result is encoded in a markup language.

3.  The method of claim 1, wherein a client device sending the client request (200) has a first address different from a second address of a client device receiving the result.

4.  The method of claim 1, wherein the client request (200) is received from a client device and the result redirects the client device to a second server.

5.  The method of claim 1, wherein the client request (200) is received from a client device and the result includes a second request for additional information for providing the requested service.

6.  The method of any one of claims 1-5, wherein also the syntax for service requests directed to the services are published and may be discovered in the service catalogue (225).


**Patentansprüche**

1.  Verfahren zum Bereitstellen von standortbasierten Diensten, das Verfahren umfassend:

    Dienstmodule, die sich bei einer Dienstverwaltungsvorrichtung (205) registrieren und die Dienste in einem Dienstkatalog (225) veröffentlichen, in dem sie von an den Dienstkatalog (225) gerichteten Kundenanfragen entdeckt werden können;
    Empfangen einer Kundenanfrage (200) eines Dienstes in einer in einer Auszeichnungssprache codierten Nachricht an einem ersten Server;
    Leiten der Anfrage (200) an die Dienstverwaltungsvorrichtung (205), die mit dem Dienstkatalog (225), der eine Beschreibung verschiedener Dienste umfasst, die über die Dienstverwaltungsvorrichtung (205) verfügbar sind, in Kontakt steht;
    Authentifizieren der Kundenanfrage (200);
    Bestimmen, durch Zugreifen auf den Dienstkatalog (225), ob der Dienst an den Dienstmodulen, die zum Bereitstellen von Diensten als Reaktion auf verschiedene Typen von Kundenanfragen angeordnet sind, verfügbar ist;
    Weiterleiten einer Fehlernachricht als Reaktion auf die Bestimmung, dass der Dienst an den Dienstmodulen nicht verfügbar ist;
    Weiterleiten der Kundenanfrage (200) an ein Dienstmodul als Reaktion auf die Bestimmung, dass der Dienst an dem Dienstmodul verfügbar ist; und
    Senden eines von dem Dienstmodul gemäß der empfangenen Kundenanfrage (200) empfangenen Ergebnisses an eine Kundenvorrichtung.

2.  Verfahren nach Anspruch 1, wobei das Ergebnis in einer Auszeichnungssprache codiert ist.

**3.** Verfahren nach Anspruch 1, wobei eine Kundenvorrichtung, die die Kundenanfrage (200) sendet, eine erste Adresse aufweist, die von einer zweiten Adresse einer Kundenvorrichtung, die das Ergebnis empfängt, verschieden ist.

**4.** Verfahren nach Anspruch 1, wobei die Kundenanfrage (200) von einer Kundenvorrichtung empfangen wird und das Ergebnis die Kundenvorrichtung an einen zweiten Server umleitet.

**5.** Verfahren nach Anspruch 1, wobei die Kundenanfrage (200) von einer Kundenvorrichtung empfangen wird und das Ergebnis eine zweite Anfrage zusätzlicher Dienste zum Bereitstellen des angefragten Dienstes enthält.

**6.** Verfahren nach einem der Ansprüche 1-5, wobei die Syntax für an die Dienste gerichtete Dienstanfragen ebenfalls veröffentlicht wird und in dem Dienstkatalog (225) entdeckt werden kann.

**Revendications**

**1.** Procédé de fourniture de services en fonction de la position, le procédé comprenant :

l'enregistrement de modules de s auprès d'un gestionnaire de services (205), et la publication des services dans un catalogue de services (225), où ils peuvent être découverts par des requêtes de clients adressées au catalogue de services (225);
la réception d'une requête de client (200) demandant un service dans un message codé dans un langage de balisage au niveau d'un premier serveur ;
l'adressage de la requête (200) au gestionnaire de services (205), lequel est en contact avec le catalogue de services (225) comprenant une description de divers services disponibles par l'intermédiaire du gestionnaire de services (205) ;
l'authentification de la requête de client (200) ;
la détermination, par accès au catalogue de services (225), que le service est disponible ou non au niveau des modules de service agencés pour fournir des services en réponse à différents types de requêtes de clients ;
l'acheminement d'un message d'erreur en réponse à la détermination que le service n'est pas disponible au niveau des modules de services ;
l'acheminement de la requête de client (200) jusqu'à un module de service en réponse à la détermination que le service est disponible au niveau du module de service ;
l'envoi à un dispositif client d'un résultat reçu depuis le module de service conformément à la requête de client (200) reçue.

**2.** Procédé selon la revendication 1, dans lequel le résultat est codé dans un langage de balisage.

**3.** Procédé selon la revendication 1, dans lequel un dispositif client qui envoie la requête de client (200) a une première adresse différente d'une seconde adresse d'un dispositif client recevant le résultat.

**4.** Procédé selon la revendication 1, dans lequel la requête de client (200) est reçue depuis un dispositif client et le résultat redirige le dispositif client vers un second serveur.

**5.** Procédé selon la revendication 1, dans lequel la requête de client (200) est reçue depuis un dispositif client et le résultat comporte une seconde requête d'informations supplémentaires pour fournir le service requis.

**6.** Procédé selon l'une quelconque des revendications 1 à 5, dans lequel également les syntaxes des requêtes de clients adressées aux services sont publiées et peuvent être découvertes dans le catalogue de services (225).

FIGURE 1

FIGURE 2

Client

300

320

Internet

Integrated
Service
Platform

320

Integrated
Service
Platform

Integrated
Service
Platform

320

Configuration

325

Service Catalog

330

Service Provider
Interface

335

Profile and
Data

320

**FIGURE 3**

FIGURE 4

FIGURE 5

Central LBS
Server 600

Mall Selection Servlet 605

Local Content Servlet 615

Mapping Servlet 620

Integrated Location-Specific
Services Platform 625

Mall Specific Service 630

RDBMS
Database
610

Store Table
635

Sales Table
640

**FIGURE 6**

100

Client
700

Wireless
Carrier Gateway
710

Internet
715

Integrated
Location-Based
Service Platform
705

Mall Selection Service 605

Local Content Server 720

RDBMS

RDBMS

**FIGURE 7**

| Mall | Location | Integrated Location-based service Platform |
|------|----------|--------------------------------------------|
| Crossgates | Albany, NY | URL |
| | | |

**FIGURE 8**

Table Name:
**MALL STORES**
Location:
      WIRELESS/WIRELESS@SERVE.EXT
Purpose:
      XY table listing stores in MALL
Structure:

| | |
|---|---|
| STORE_NAME | -name of the store |
| PASSWORD | -password for access to store sales |

Client:

| | |
|---|---|
| DESCRIPTION | -descriptive information on store |
| X | -longitude |
| Y | -latitude |

Primary Key Columns:
      STORE_NAME, PASSWORD

<div align="right">

900
</div>

Table Name:
**MALL STORES SALES**
Location:
      WIRELESS/WIRELESS@SERVE.EXT
Purpose:
      Holds "sales" information for stores in MALL
Structure:

| | |
|---|---|
| SALES_ID | -primary key of table |
| STORE_NAME | -name of the store |
| ITEM_NAME | -name of item on sale |
| ITEM DESCRIPTION | -description of item on sale |
| ITEM_PRICE | -price of item on sale |
| SALE_START_DATE | -date/time when sale starts |
| SALE_END_DATE | -date/time when sale ends |

Primary Key Columns:
      SALES_ID

<div align="right">

910
</div>

**FIGURE 9**

**FIGURE 10**

FIGURE 11

Map Panel
1202

Selection
Panel
1200

Input Panel
1210

Choose Panel
1205

Choose Panel
1215

Selection
Panel
1225

Input Panel
1220

Selection
1230

Selection
1235

Note Panel
1240

Map Panel
1245

Map panel
1250

FIGURE 12

| Mall Location | ▬ ▢ ☒ |
| --- | --- |

Mall Location
Application

| ◱ < Back | | ◱ OK |

1301

**FIGURE 13**

| Mall Location | ▢ ▢ ✕ |
|---|---|
| **Select a Mall** | |
| Crossgates | |
| Colonie Center | |

1402

1401

**FIGURE 14**

Mall Location _ □ ✕

○ Sales by Store Name

1502

◉ Store by Sale Item

1503

‹Back     OK

1501

**FIGURE 15**

Mall Location

Sales Item by Category

1602

Sale Item By Name

1603

Back                OK

1601

**FIGURE 16**

Mall Location     ⎯ □ ⊠

Select a Sale Category

**Dress Shoes**
Computer Software
Swim Suits
Shoe Sale
Lunch Special
Film Developing
Spring Casual Sale
Stuffed Toys

< Back     OK

1702

1701

FIGURE 17

Mall Location         _ □ ☒

Select Store

**DSW**

1802

< Back          Ok

1801

**FIGURE 18**

FIGURE 19

Mall Location

ItemName: Dress Shoes
Desc: All men's shoes on sale
Price: 29.98

< Back
OK

2001

**FIGURE 20**

FIGURE 21

**Mall Location** ☐☐☒

DSW

< Back    OK

2201

**FIGURE 22**

**FIGURE 23**

Location Sensitive
Event Service Client
2400

Location Sensitive
Event Service
2405

Personal
Preferences

Subscriber Profile
2410

Location Sensitive
Event Service
CRM Service
2420

CRM
Engine
2425

Personal
Extension
Database
2415

**FIGURE 24**

**FIGURE 25**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60365820 B
- US 60378805 B
- US 60411435 B
- US 6477362 B
- US 6477379 B
- US 5528248 A
- US 6101496 A

- US 6363392 B
- US 10159195 B
- US 60256103 B
- WO 0004730 A
- WO 0217654 A
- WO 0217567 A
- CA 2416253